# EUROPÄISCHE PATENTANMELDUNG

(11) **EP 4 491 578 A1**
(43) Veröffentlichungstag der Anmeldung: **15.01.2025**
(21) Anmeldenummer: 23185137.9
(22) Anmeldetag: 12.07.2023
(51) Int. Cl.: C01G 33/00, B01J 23/648, C01G 35/00, H01M 8/00

(54) **POROESES OXIDISCHES MATERIAL UND ELEKTROKATALYSATOR**

(71) Anmelder: Umicore AG & Co. KG, 63457 Hanau-Wolfgang (DE)
(72) Erfinder: HEREIN, Daniel, 60487 Frankfurt (DE); WOLF, Viktor, 60385 Frankfurt (DE); RAAB, Hannes, 63877 Sailauf (DE); JESKE, Gerald, 63543 Neuberg (DE)

(57) **Zusammenfassung**

Die Erfindung betrifft poröse oxidische Materialien, welche Niob und/oder das schwere Homologe Tantal in der Oxidationsstufe +5 enthalten, sowie deren Verwendung. Gegenstand der vorliegenden Erfindung sind zudem Iridium enthaltende (Elektro)Katalysatoren, welche ein poröses oxidisches Gruppe 5-Element-Material aufweisen, insbesondere ein poröses oxidisches Niob(V) und/oder Tantal(V) enthaltendes Material. Des Weiteren betrifft die Erfindung die Verwendung solcher (Elektro-)Katalysatoren.

## Beschreibung

Im Zusammenhang mit der Speicherung von regenerativ erzeugtem Strom ist die Stromzu-Gas-Technologie (engl. *Power-to-Gas,* PtG) in den letzten Jahren zunehmend in den Fokus des Interesses gerückt: Überschüssige elektrische Energie (Strom) wird in chemische Energie (Gas) umgewandelt. Insbesondere wird der Überschussstrom für die Wasserelektrolyse eingesetzt, bei der Sauerstoff und der speicherbare Energieträger Wasserstoff erzeugt werden. Gespeicherter Wasserstoff kann bei Bedarf mittels einer Brennstoffzelle in Strom und Wärme umgewandelt werden. Alternativ kann Wasserstoffgas als Kraftstoff oder in industriellen und technischen Prozessen genutzt werden.

Im Stand der Technik sind alkalische und saure Wasserelektrolyseure bekannt. Letztere arbeiten mit wesentlich höheren Stromdichten und einem geringeren spezifischen Energieverbrauch und somit kostengünstiger als alkalische Elektrolyseure. In einem sauren Wasserelektrolyseur sind die Anode und die Kathode durch eine gasdichte, protonenleitende Polymermembran voneinander getrennt, welche als Festpolymer-Elektrolyt fungiert. Die Membran wird als Protonen-Austausch-Membran (engl. *proton exchange membrane,* PEM) oder als Polymerelektrolytmembran (engl. *polymer electrolyte membrane,* PEM) bezeichnet. Daher wird die saure Wasserelektrolyse auch PEM-Wasserelektrolyse genannt.

Für die in einer PEM-Wasserelektrolysezelle ablaufenden Halbzellenreaktionen, d. h. für die anodenseitige Sauerstoffentwicklungsreaktion (engl. *oxygen evolution reaction, OER*) und die kathodenseitige Reduktion der Protonen (H⁺) (engl. *hydrogen evolution reaction, HER*)*,* ist der Einsatz von Edelmetallkatalysatoren erforderlich. Im Falle der HER hat sich Platin etabliert, das nur in moderaten Mengen benötigt wird. Für die OER ist üblicherweise das seltene und daher teure Edelmetall Iridium vorgesehen, insbesondere in Form seiner Oxide, d. h. als Iridium(III)-oxid (Ir₂O₃), Iridium(IV)-oxid (IrO₂) oder deren Hydrate.

Die genannten Iridium enthaltenden OER-Katalysatoren werden üblicherweise in Kombination mit einem anorganischen Oxid verwendet. Im Stand der Technik sind diverse potenziell einsetzbare anorganische Oxidmaterialien genannt, auf welche Iridiumoxide/- hydroxide aufgebracht werden können. Das Aufbringen der iridiumhaltigen kontinuierlichen oder diskontinuierlichen Schicht auf das anorganische Oxid erfolgt beispielsweise mittels nasschemischer Verfahren oder Sprühpyrolyse. Konkrete Beispiele finden sich unter anderem für die Aufbringung auf die im Folgenden genannten anorganischen Oxidmaterialien:
a) Titanoxid (TiO₂) mit einer spezifischen Oberfläche von beispielsweise
   - 5 m²/g, 20 m²/g oder 30 m²/g (EP 4 019 666 A1, Erfindungsgemäße Beispiele: [0091] - [0093]),
   - 50 m²/g (EP 2 608 297 A1, Example 1: [0039] - [0040], Comparative Example 1: [0045] - [0046]),
   - 60 m²/g (EP 3 764 443 A1, Erfindungsgemäßes Beispiel 1 und Vergleichsbeispiele 1 bis 3: [0071] - [0077]),
   - 150 m²/g (EP 4 019 666 A1, Vergleichsbeispiel: [0094]),
   - über 300 m²/g (EP 1 701 790 B1, Example 1: [0038] - [0039]; EP 2 608 297 A1, Comparative Example 2: [0047]);
b) Aluminiumoxid (Al₂O₃) mit einer spezifischen Oberfläche von 141 m²/g (EP 1 701 790 B1, Example 1: [0040] - [0041]; EP 2 608 297 A1, Example 2: [0041] - [0042], Example 3: [0043] - [0044]);
c) Niob-dotiertes TiO₂, welches insbesondere einen Nb-Gehalt von 20 at.% aufweist, wobei die spezifische Oberfläche ca. 132 m²/g beträgt (C. Hao, H. Lv, C. Mi, Y. Song, J. Ma, ACS Sustainable Chem. Eng. 2016, 4, 3, 746 - 756: *Table* 2, *sample* TN-20);
d) Nioboxid (Nb₂O₅), zum Beispiel in: A. Zlotorowicz, F. Seland, S. Sunde, ECS Trans. 2013, 50, 71 - 83; N. Diklic, S. Garbe, T. Schuler, M. Zlobinsk in: Electrochemistry Laboratory, Paul Scherrer Institut, Annual Report 2019, 11 - 14.

Die von Zlotorowicz *et al.* (siehe oben: d)) vorgestellten Komposit-Dünnschicht-Katalysatoren für die OER weisen die Zusammensetzung (IrO₂)₁₋ₓ(Nb₂O₅)ₓ auf, wobei x = 0,1 - 0,7. Der Ir-Gehalt dieser Verbindungen beträgt, bezogen auf die Gesamtmasse des jeweiligen Materials, zwischen 22,8 Gew.-% und 75,8 Gew.-%. Die Synthese erfolgte durch Hydrolyse, gefolgt von einer Kalzination bei 500 °C. Als Edukte dienten Hexachloriridium(IV)-säure Tetrahydrat und Niob(V)-chlorid. Mittels einer Fällungsreaktion wie sie von Zlotorowicz *et al.* beschrieben wird, werden üblicherweise Materialien mit einer eher geringen spezifischen Oberfläche erhalten, d. h. typischerweise von maximal 10 m²/g. Im Bereich der heterogenen Katalyse ist es jedoch in der Regel von Vorteil, Katalysatoren mit möglichst großer Oberfläche zu verwenden.

Die von Zlotorowicz *et al.* vorgestellten Komposit-Verbindungen mit x = 0,1 und x = 0,3 wurden mittels Röntgenbeugung (engl. *X-ray diffraction,* XRD) und Röntgenphotoelektronenspektroskopie (engl. *X-ray photoelectron spectroscopy,* XPS) untersucht. Aus den Ergebnissen schließen die Autoren, dass Nb₂O₅ in Form einer oberflächendekorierenden Schicht auf IrO₂ vorliegt.

Das von Diklic *et al.* (siehe oben: d)) präsentierte Katalysatormaterial Ir₇₅NbOₓ besteht aus Nb₂O₅ und IrO₂. Der Ir-Gehalt - bezogen auf die Gesamtmasse des Materials - beträgt 75 Gew.-%. Einleitend geben die Autoren als Strategie an, Nb₂O₅ mit großer Oberfläche als Trägermaterial für IrO₂-Kristallite von geringer Größe zu verwenden. Es wird allerdings weder ein Syntheseweg noch die spezifische Oberfläche des verwendeten Nb₂O₅ genannt. Aus der Angabe, dass sowohl das Katalysatormaterial Ir₇₅NbOₓ als auch das als Katalysator getestete ungeträgerte IrO₂ eine spezifische Oberfläche von 10 m²/g aufweisen, kann jedoch ohne Weiteres geschlossen werden, dass zur Herstellung des Ir₇₅NbOₓ ein Nb₂O₅ mit einer eher geringen spezifischen Oberfläche eingesetzt worden sein muss. In Frage kommt hier beispielsweise eines der kommerziell erhältlichen Niob(V)-oxide, welche typischerweise eine spezifische Oberfläche von weniger als 10 m²/g besitzen.

Mittels Hydrothermalsynthese gelang Murayama *et al.* die Darstellung eines schichtförmig aufgebauten, Oktaeder-basierten Nb₂O₅ mit einer Oberfläche von ca. 190 m²/g (T. Murayama, J. Chen, J. Hirata, K. Matsumoto, W. Ueda, Catal. Sci. Technol. 2014, 4, 4250 - 4257). Die Synthese erfolgte unter Verwendung von Ammoniumnioboxalat (CBMM: NH₄[NbO(C₂O₄)₂(H₂O)₂] x *n* H₂O; Aldrich: [NH₄NbO(C₂O₄)₂]). Für das mit Wasser gewaschene und über Nacht bei 80 °C getrocknete Produkt wurde die Summenformel H₁₉,₉(NH₄)₄,₁Nb₄₀O₁₁₂ x 3,8 H₂O berechnet. Und zwar auf Basis der Ergebnisse der temperaturprogrammierten Zersetzung mit Massenspektrometrie-Kopplung (engl. *temperature-programmed decomposition mass spectrometry,* TPD-MS), Thermogravimetrie (TG) und XPS. Durch anschließende vierstündige Kalzination bei 400 °C wurden NH₃ und H₂O desorbiert. Unabhängig von dem als Edukt eingesetzten Ammoniumnioboxalat besaß das kalzinierte Produkt eine spezifische Oberfläche von etwa 190 m²/g (Nb(V)-Quelle CBMM: 193 m²/g, Nb(V)-Quelle Aldrich: 188 m²/g; vgl. *Electronic Supplementary Material, Table* S1). Nachteilig an dem von Murayama *et al.* vorgestellten Syntheseweg ist zum einen die relativ lange Reaktionszeit, welche drei Tage beträgt. Zum anderen können auf diese Weise ausschließlich Nb₂O₅-Materialien hergestellt werden, welche eine spezifische Oberfläche von weniger als 200 m²/g aufweisen.

Eine spezifische Oberfläche von mehr als 200 m²/g wiesen beispielsweise von Uekawa *et al*. hergestellte Nb₂O₅-Nanopartikel auf (N. Uekawa, T. Kudo, F. Mori, Y. Jun Wu, K. Kakegawa, J. Colloid Interface Sci. 2003, 264, 378 - 384). Mittels Sol-Gel-Verfahren wurden Nb₂O₅-Partikel mit einem Partikeldurchmesser von 4,5 nm und einer spezifischen Oberfläche von 275 m²/g synthetisiert. Sol-Gel-Verfahren werden allerdings aus Kostengründen im industriellen Maßstab nicht angewendet.

Im Jahr 2021 wurden oxidische Iridium- und Niob-enthaltende OER-Katalysatoren für die saure Wasserelektrolyse präsentiert: die amorphen, stark hydratisiert vorliegenden Mischmetalloxide Ir₂₀Nb₈₀Oₓ, Ir₄₀Nb₆₀Oₓ, Ir₆₀Nb₄₀Oₓ und Ir₈₀Nb₂₀Oₓ (C. Spöri, L. J. Falling, M. Kroschel, C. Brand, A. Bonakdarpour, S. Kühl, D. Berger, M. Gliech, T. E. Jones, D. P. Wilkinson, P. Strasser, ACS Appl. Mater. Interfaces 2021, 13, 3748 - 3761). Die Synthese erfolgte mittels i. Spin-Coating und Kalzination der auf einem Ti-Substrat abgeschiedenen Schicht bei 300 °C oder ii. eines modifizierten Fusionsverfahrens nach Adams und Kalzination der homogenisierten Salzmischung bei 350 °C. Als Niob(V)-Quelle wurde in beiden Fällen Ammoniumnioboxalat Hydrat (Sigma-Aldrich) verwendet, als Ir-haltiges Edukt Iridiumacetat (Methode i.) oder Iridium(IV)-chlorid Hydrat (Methode ii.). Strukturelle Untersuchungen von Ir₆₀Nb₄₀Oₓ ergaben, dass Niob(IV) redoxaktiv eingebunden ist und - ähnlich wie bei IrRuOₓ-Katalysatoren (M. Escudero-Escribano et al., J. Phys. Chem. B 2018, 122, 947 - 955) - eine Ir-angereicherte Oberflächenschicht vorliegt. Die zur Herstellung der OER-Katalysatoren eingesetzten Verfahren i. und ii. sind relativ zeit- und kostenintensiv.

WO 2023/002177 A1 betrifft einen OER-Katalysator, der ein Iridium, Tantal und Ruthenium enthaltendes Oxidmaterial ist, welches Rutilstruktur aufweist. Die kristalline Phase des ternären Mischoxidmaterials wird als IrₓTa_{y}Ru_{z}O₂ beschrieben, wobei x + y + z = 1. In dem einzigen Ausführungsbeispiel (*Example 1*) zur Herstellung eines solchen Materials ist ein molares Verhältnis Ir : Ta : Ru von 6 : 3 : 1 vorgesehen. Die BET-Oberfläche (BET = *Brunauer-Emmett-Teller*) des hergestellten ternären Mischoxidmaterials betrug 40,3 m²/g. Die Darstellung eines solchen OER-Katalysators ist relativ zeit-, energie- und kostenintensiv. So wird in einem ersten Schritt eine saure wässrige Lösung von TaCl₅, IrCl₃ und RuCl₃ zur Verfügung gestellt, welche in einem zweiten Schritt einer Sprühpyrolyse unterzogen wird. In einem dritten Schritt erfolgt eine Kalzination bei 500 °C für 6 Stunden, gefolgt von einem Mahlschritt und einer zweiten Kalzination bei 500 °C für 6 Stunden.

Nach alledem lässt sich feststellen, dass die Auswahl an oxidischen Niob(V) enthaltenden Materialien, welche eine, insbesondere im Vergleich zu kommerziell erhältlichen Niob(V)-oxiden, große spezifische Oberfläche aufweisen sowie einfach und kostengünstig zugänglich sind, stark limitiert ist. Dasselbe gilt für Iridium enthaltende (Elektro- )Katalysatoren, welche ein oxidisches Gruppe 5-Element-Material, insbesondere ein oxidisches Niob(V)-Material oder ein oxidisches Tantal(V)-Material, aufweisen.

Der Erfindung liegt daher die Aufgabe zugrunde, diese und weitere Nachteile des Standes der Technik zu überwinden und oxidische Materialien zur Verfügung zu stellen, welche Niob und/oder das schwere Homologe Tantal in der Oxidationsstufe +5 enthalten, eine, insbesondere im Vergleich zu kommerziell erhältlichen Niob(V)-oxiden, große spezifische Oberfläche aufweisen und einfach, reproduzierbar, möglichst umwelt- und ressourcenschonend und vergleichsweise kostengünstig in quantitativer oder nahezu quantitativer Ausbeute und in sehr hoher Reinheit herstellbar sind, und zwar auch im industriellen Maßstab. Insbesondere sollen diese oxidischen Materialien den Anforderungen genügen, welche an Materialien für (Elektro-)Katalysatoren gestellt werden. Beispielsweise sollen sie säure- und laugenstabil sein. Gegenstand der vorliegenden Erfindung sind zudem die Verwendung solcher oxidischen Materialien sowie neue Iridium enthaltende (Elektro-)Katalysatoren, welche ein oxidisches Gruppe 5-Element-Material aufweisen, insbesondere ein oxidisches Niob(V) und/oder Tantal(V) enthaltendes Material. Die (Elektro-)Katalysatoren sollen sich zum einen dadurch auszeichnen, dass sie einfach, reproduzierbar, möglichst umwelt- und ressourcenschonend und vergleichsweise kostengünstig herstellbar sind, und zwar auch im industriellen Maßstab. Zum anderen sollen die Iridium enthaltenden Katalysatoren ein möglichst ausgeglichenes Verhältnis zwischen (elektro-)chemischer Stabilität und (elektro-)katalytischer Aktivität aufweisen. Des Weiteren betrifft die Erfindung die Verwendung solcher (Elektro-)Katalysatoren.

Die Aufgabe wird gelöst durch ein erstes poröses oxidisches Niob(V) enthaltendes Material, welches ein Nichtleiter ist und, insbesondere bis zu einer Temperatur von 400 °C, temperaturstabil oder im Wesentlichen temperaturstabil ist,
wobei das oxidische Niob(V) enthaltende Material
i. gemäß Elementaranalyse Wasserstoff (H) enthält, wobei
   ein Massenanteil w(Wasserstoff) an der Gesamtmasse des oxidischen Niob(V) enthaltenden Materials insbesondere wenigstens 0,5 % und höchstens 2 % beträgt;
ii. gemäß Elementaranalyse Stickstoff (N) enthält,
   wobei ein Massenanteil w(Stickstoff) an der Gesamtmasse des oxidischen Niob(V) enthaltenden Materials insbesondere wenigstens 0,5 % und höchstens 3 % beträgt; und
iii. nach einer thermischen Behandlung, insbesondere einer Kalzination, vorteilhaft einer Kalzination unter Luftatmosphäre, für einen Zeitraum von 1 Stunde bei einer Temperatur von 400 °C eine mittels der BET-Methode bestimmte spezifische Oberfläche von wenigstens 200 m²/g und von höchstens 350 m²/g aufweist.

Die hier und im Folgenden beschriebenen Niob(V) und/oder Tantal(V) enthaltenden oxidischen Materialien weisen - in Abhängigkeit von den gewählten Messbedingungen - typischerweise eine elektrische Leitfähigkeit von ca. 10⁻⁴ S cm⁻¹ oder weniger auf. Mithin besitzen sie eine praktisch unbedeutende elektrische Leitfähigkeit und werden daher als Nichtleiter bezeichnet.

Im Zusammenhang mit den hier vorgestellten oxidischen Niob(V) enthaltenden porösen oxidischen Materialien beziehen sich die Ausdrücke "temperaturstabil" und "im Wesentlichen temperaturstabil" insbesondere auf die Temperaturstabilität der spezifischen Oberfläche des oxidischen Materials, also auf die Stabilität der spezifischen Oberfläche, wenn das Material einer thermischen Behandlung unterzogen wird. Für die hier beschriebenen temperaturstabilen oxidischen Niob(V) enthaltenden Materialien wurde überraschenderweise gefunden, dass ihre spezifischen Oberflächen auch nach thermischer Behandlung, insbesondere bei Temperaturen oberhalb von 100 °C bis zu einer Temperatur von ca. 400 °C, nicht oder im Wesentlichen nicht abnehmen, und zwar im Vergleich zu der nach ausschließlicher Gefriertrocknung des jeweiligen Materials bestimmten spezifischen Oberfläche.

Für die Einstufung der hier vorgestellten oxidischen Niob(V) enthaltenden Materialien, insbesondere ihrer spezifischen Oberflächen, als "temperaturstabil" oder als "im Wesentlichen temperaturstabil" wurden mittels der BET-Methode jeweils die folgenden Werte bestimmt:
a) eine erste spezifische Oberfläche, welche das ausschließlich gefriergetrocknete Niob(V) enthaltende Material aufweist,
   und
b) eine zweite spezifische Oberfläche, welche das gefriergetrocknete und zusätzlich bei einer Temperatur von ca. 400 °C für einen Zeitraum von ca. 1 Stunde thermisch behandelte Niob(V) enthaltende Material aufweist.

Gemäß der vorliegenden Erfindung wird ein hier vorgestelltes oxidisches Niob(V) enthaltendes Material, insbesondere dessen spezifische Oberfläche, als "temperaturstabil" bezeichnet, wenn der für die erste spezifische Oberfläche und der für die zweite spezifische Oberfläche bestimmte Wert um höchstens 10 % voneinander abweichen. Dagegen wird ein hier vorgestelltes oxidisches Niob(V) enthaltendes Material, insbesondere dessen spezifische Oberfläche, als "im Wesentlichen temperaturstabil" eingestuft, wenn der für die erste spezifische Oberfläche und der für die zweite spezifische Oberfläche bestimmte Wert um mehr als 10 % und um höchstens 25 % voneinander abweichen. Die Abweichung kann dann beispielsweise 0,5 % oder 1 % oder 1,5 % oder 2 % oder 2,5 % oder 3 % oder 3,5 % oder 4 % oder 4,5 % oder 5 % oder 5,5 % oder 6 % oder 6,5 % oder 7 % oder 7,5 % oder 8 % oder 8,5 % oder 9 % oder 9,5 % oder 10 % oder 10,5 % oder 11 % oder 11,5 % oder 12 % oder 12,5 % oder 13 % oder 13,5 % oder 14 % oder 14,5 % oder 15 % oder 15,5 % oder 16 % oder 16,5 % oder 17 % oder 17,5 % oder 18 % oder 18,5 % oder 19 % oder 19,5 % oder 20 % oder 20,5 % oder 21 % oder 21,5 % oder 22 % oder 22,5 % oder 23 % oder 23,5 % oder 24 % oder 24,5 % betragen.

Im Zusammenhang mit hier beschriebenen oxidischen Niob(V) enthaltenden Materialien, welche gemäß der oben stehenden Definition als temperaturstabil eingestuft werden, wird im Folgenden auch der Ausdruck "hohe bis sehr hohe Temperaturstabilität" verwendet. Hier vorgestellten oxidischen Niob(V) enthaltenden Materialien, die als im Wesentlichen temperaturstabil bezeichnet werden, wird im Folgenden eine "hohe Temperaturstabilität" zugesprochen.

Ein poröses oxidisches Niob(V) enthaltendes Material des hier vorgestellten Typs kann beispielsweise einen Massenanteil w(Wasserstoff) von 0,6 % oder 0,7 % oder 0,8 % oder 0,9 % oder 1 % oder 1,1 % oder 1,2 % oder 1,3 % oder 1,4 % oder 1,5 % oder 1,6 % oder 1,7 % oder 1,8 % oder 1,9 % aufweisen.

Der Massenanteil w(Stickstoff) kann beispielsweise 0,6 % oder 0,7 % oder 0,8 % oder 0,9 % oder 1 % oder 1,1 % oder 1,2 % oder 1,3 % oder 1,4 % oder 1,5 % oder 1,6 % oder 1,7 % oder 1,8 % oder 1,9 % oder 2 % oder 2,1 % oder 2,2 % oder 2,3 % oder 2,4 % oder 2,5 % oder 2,6 % oder 2,7 % oder 2,8 % oder 2,9 % betragen.

Gemäß Elementaranalyse kann ein poröses oxidisches Niob(V) und Tantal(V) enthaltendes Material dieses Typs zusätzlich Kohlenstoff (C) enthalten, wobei ein Massenanteil w(Kohlenstoff) höchstens 4 % beträgt, insbesondere ≥ 0,1 % und ≤ 4 % oder ≥ 0,1 % und ≤ 3,5 %, beispielsweise höchstens 3,2 % beträgt. In der überwiegenden Zahl der untersuchten Proben dieses Materialtyps betrug der Massenanteil w(Kohlenstoff) gemäß Elementaranalyse < 0,1 % und lag somit unterhalb der Nachweisgrenze des für die Elementaranalyse eingesetzten Gerätes.

Es sei darauf hingewiesen, dass sich Merkmale, welche ohne Temperaturangabe genannt sind, hier und im Folgenden auf das jeweilige isolierte und getrocknete erste poröse oxidische Niob(V) enthaltende Material beziehen. Ein Beispiel für ein solches Merkmal ist das weiter oben für das erste poröse oxidische Niob(V) enthaltende Material genannte Merkmal "gemäß Elementaranalyse Wasserstoff (H) enthält, wobei ein Massenanteil w(Wasserstoff) wenigstens 0,5 % und höchstens 2 % beträgt".

So enthielt ein isoliertes und getrocknetes, insbesondere gefriergetrocknetes, poröses oxidisches Niob(V) enthaltendes Material des hier vorgestellten Typs gemäß Elementaranalyse einen Massenanteil w(Wasserstoff) von 1,3 % und einen Massenanteil w(Stickstoff) von 1,2 %. Nach thermischer Behandlung, insbesondere einer Kalzination unter Luftatmosphäre, für einen Zeitraum von 1 Stunde bei einer Temperatur von 400 °C lag ein poröses oxidisches Niob(V) enthaltendes Material vor, welches eine mittels der BET-Methode bestimmte spezifische Oberfläche von 319 m²/g aufwies.

Im Zusammenhang mit der vorliegenden Erfindung wird als "thermische Behandlung" jede Behandlung eines Materials bezeichnet, bei welcher das Material einer oberhalb oder unterhalb der Standardtemperatur (T = 298,15 K) liegenden Temperatur ausgesetzt wird. Die jeweils angegebenen Temperaturwerte wurden bei Normaldruck (p = 1013,25 hPa) bestimmt, sofern keine anderslautenden Informationen angegeben sind.

Eine thermische Behandlung bei einer Temperatur von bis zu ca. 100 °C wird vorliegend als Trocknung bezeichnet. Dabei kann es sich um eine Gefriertrocknung und/oder um eine Wärmetrocknung bei einer Temperatur von bis ca. 100 °C, beispielsweise im Bereich von ca. 70 °C bis ca. 100 °C, handeln. Ergänzend kann die jeweilige Trocknung auch unter Vakuum erfolgen. Dem Fachmann ist bekannt, welche Maßnahmen zu ergreifen sind, um ein anorganisches poröses oxidisches Material zu trocknen, insbesondere an der Materialoberfläche anhaftendes Wasser zu entfernen.

Im Unterschied dazu wird eine thermische Behandlung bei einer Temperatur oberhalb von 100 °C, beispielsweise bei einer Temperatur von ca. 400 °C unter Luftatmosphäre oder unter Inertgasatmosphäre, vorliegend als Kalzination bezeichnet. Mittels Kalzination, vorteilhaft unter Luftatmosphäre, werden flüchtige Bestandteile aus dem jeweiligen Material ausgetrieben. Bei den flüchtigen Bestandteilen handelt es sich vorliegend, insbesondere in Abhängigkeit von der gewählten Kalzinationstemperatur, um Wasser und Ammoniak.

Zudem kann eine thermische Behandlung mehrere thermische Behandlungen bei unterschiedlichen Temperaturen umfassen, insbesondere eine (Gefrier-)Trocknung und wenigstens eine Kalzination. Alternativ oder ergänzend kann vorgesehen sein, dass nach einer gegebenenfalls erfolgten (Gefrier-)Trocknung genau eine weitere thermische Behandlung durchgeführt wird, wobei die Temperatur kontinuierlich bis zu einer vordefinierten Endtemperatur erhöht wird.

Gemäß der vorliegenden Erfindung wird eine thermische Behandlung, welche bei einer Temperatur oberhalb von 0 °C erfolgt, üblicherweise unter Verwendung eines Muffelofens und/oder unter Verwendung eines Trockenschranks durchgeführt. Dabei ist es vorteilhaft, ein Temperaturprogramm vorzusehen: Beispielsweise kann nach einer ersten thermischen Behandlung, welche eine Gefriertrocknung ist, eine zweite thermische Behandlung vorgesehen sein. Mittels Letzterer kann Wasser, welches gegebenenfalls nach der Gefriertrocknung noch im jeweiligen porösen oxidischen Material enthalten ist, entfernt werden. Die zweite thermische Behandlung, welche eine Trocknung umfasst oder ist, kann im Muffelofen oder im Trockenschrank bei einer ersten Innentemperatur des Muffelofens oder des Trockenschranks durchgeführt werden, vorteilhaft unter Vakuum, wobei die erste Innentemperatur ca. 100 °C beträgt. Im Rahmen einer sich anschließenden dritten thermischen Behandlung, welche eine Kalzination umfasst oder ist, kann das entwässerte oder im Wesentlichen entwässerte Material für einen vordefinierten Zeitraum im Muffelofen oder im Trockenschrank bei einer zweiten Innentemperatur des Muffelofens oder des Trockenschranks thermisch behandelt werden, vorteilhaft unter Luftatmosphäre. Dabei liegt die zweite Innentemperatur im Bereich von > 100 °C bis 800 °C, vorteilhaft im Bereich von 200 °C bis 800 °C. Beispielsweise beträgt die zweite Innentemperatur 400 °C oder 600 °C oder 650 °C. Das Temperaturprogramm kann auch mehr als zwei Stufen umfassen. Es kann also ein dritter Schritt mit einer dritten Innentemperatur vorgesehen sein, und so weiter. Alternativ kann die Temperatur im Muffelofen oder im Trockenschrank kontinuierlich erhöht werden, wobei eine relativ geringe Heizrate (Einheit: K pro min) von Vorteil sein kann, beispielsweise eine Heizrate von 1 K pro min.

Überraschenderweise ergab die BET-Analyse (nach DIN 66132) eines oxidischen Niob(V) enthaltenden Materials vom hier beschriebenen Typ, erhalten mittels einer kostengünstigen und einfach durchführbaren Hydrothermalsynthese ausgehend von Ammoniumnioboxalat ((NH₄)[NbO(C₂O₄)₂]) und Oxalsäure und/oder Ammoniumoxalat, wobei die vorgenannten Verbindungen unabhängig voneinander als ein Hydrat vorliegen können, und wobei ein molares Verhältnis Niob : Oxalat wenigstens 1 : 2,1 und höchstens 1 : 4 betrug, und für einen Zeitraum von 1 Stunde bei 400 °C unter Luftatmosphäre kalziniert, dass das Material eine sehr hohe spezifische Oberfläche aufwies, nämlich von ca. 320 m²/g. Wurde eine Probe desselben Materials für 4 Stunden bei 400 °C unter Luftatmosphäre kalziniert, wies das nach Beendigung der Kalzination vorliegende poröse oxidische Niob(V) enthaltende Material überraschenderweise immer noch eine sehr hohe spezifische Oberfläche auf, nämlich von 264 m²/g. Vor Durchführung der Kalzination erfolgte eine Trocknung, d. h. eine Gefriertrocknung und/oder eine Wärmetrocknung bei einer Temperatur von bis ca. 100 °C, insbesondere ausschließlich eine Gefriertrocknung.

Als vorteilhaft hat es sich erwiesen, für die Synthese eines ersten porösen oxidischen Niob(V) enthaltenden Materials Ammoniumnioboxalat ((NH₄)[NbO(C₂O₄)₂]) und Oxalsäure und/oder Ammoniumoxalat einzusetzen, wobei die vorgenannten Verbindungen unabhängig voneinander als ein Hydrat vorliegen können. Besonders vorteilhaft ist es, ein kommerziell erhältliches Gemisch, enthaltend Ammoniumnioboxalat und Oxalsäure und/oder Ammoniumoxalat, zu verwenden, insbesondere das Produkt NAmOx (Niobammoniumoxalat, TANIOBIS GmbH).

Im Vergleich dazu weist eine von Murayama *et al.* ausgehend von Ammoniumnioboxalat hergestellte Verbindung gemäß der Formel H_{19,9}(NH₄)_{4,1}Nb₄₀O₁₁₂·3,6 H₂O, abgekürzt als NbO-ANO, nach Kalzination für einen Zeitraum von 4 Stunden bei 400 °C ebenfalls eine sehr hohe spezifische Oberfläche auf, jedoch von weniger als 200 m²/g: 188 m²/g (Edukt: Ammoniumnioboxalat; Aldrich) bzw. 193 m²/g (Edukt: Ammoniumnioboxalat; CBMM) (vgl. *ESI, Table* S1). Vor Durchführung der Kalzination erfolgte eine Trocknung über Nacht bei 80 °C (vgl. Seite 4251, *Experimental, Preparation of niobium oxides*)*.*

Im Zusammenhang mit dem hier vorgestellten ersten porösen oxidischen Niob(V) enthaltenden Material und mit den nachfolgend vorgestellten porösen oxidischen Niob(V) und/oder Tantal(V) enthaltende Materialien wird der Ausdruck "hohe spezifische Oberfläche" oder "hoher BET-Wert" verwendet, wenn das Material - unabhängig davon, ob es einer oder mehreren thermischen Behandlungen unterzogen worden ist - eine spezifische Oberfläche von mehr als 10 m²/g und von weniger als 100 m²/g aufweist.

Besitzt ein hier oder nachfolgend beschriebenes oxidisches Material eine spezifische Oberfläche von wenigstens 100 m²/g, wird der Ausdruck "sehr hohe spezifische Oberfläche" oder "sehr hoher BET-Wert" verwendet.

Besonders vorteilhaft ist, dass die Eigenschaften der hier vorgestellten oxidischen Niob(V) enthaltenden Materialien je nach geplantem Verwendungszweck innerhalb gewisser Grenzen einstellbar sind. Dies gilt insbesondere für die spezifische Oberfläche, welche in vielen Anwendungsbereichen eine entscheidende Rolle spielen kann. Sie kann durch die für die thermische Behandlung gewählten Bedingungen, insbesondere durch die Wahl der Innentemperatur des Muffelofens oder des Trockenschranks, für jedes oxidische Niob(V) enthaltende Material innerhalb gewisser Grenzen eingestellt werden. Naturgemäß ist die spezifische Oberfläche eines oxidischen Materials nach (Gefrier-)Trocknung am größten und nimmt mit zunehmender Temperatur der thermischen Behandlung ab. So kann ein hier beschriebenes erstes poröses oxidisches Niob(V) enthaltendes Material nach (Gefrier- )Trocknung beispielsweise eine spezifische Oberfläche im Bereich von mehr als 200 m²/g bis 360 m²/g aufweisen. Durch eine weitere thermische Behandlung, insbesondere durch eine Kalzinierung, vorteilhaft unter Luftatmosphäre, kann eine vordefinierte spezifische Oberfläche eingestellt werden. Es können also maßgeschneiderte, insbesondere betreffend die spezifische Oberfläche, poröse oxidische Niob(V) enthaltende Materialien zur Verfügung gestellt werden.

Ein für einen Zeitraum von 1 Stunde bei einer Temperatur von 400 °C thermisch behandeltes, insbesondere unter Luftatmosphäre kalziniertes, Niob(V) enthaltendes Material des hier genannten Typs kann auch eine mittels der BET-Methode bestimmte spezifische Oberfläche von beispielsweise 205 m²/g oder 210 m²/g oder 215 m²/g oder 220 m²/g oder 225 m²/g oder 230 m²/g oder 235 m²/g oder 240 m²/g oder 245 m²/g oder 250 m²/g oder 255 m²/g oder 260 m²/g oder 265 m²/g oder 270 m²/g oder 275 m²/g oder 280 m²/g oder 285 m²/g oder 290 m²/g oder 295 m²/g oder 300 m²/g oder 305 m²/g oder 310 m²/g oder 315 m²/g oder 320 m²/g oder 325 m²/g oder 330 m²/g oder 335 m²/g oder 340 m²/g oder 345 m²/g aufweisen.

Für die hier beschriebenen oxidischen Niob(V) enthaltenden Materialien wurden nach Trocknung, beispielsweise Gefriertrocknung, überraschenderweise sehr hohe BET-Werte bestimmt, nämlich von mehr als 200 m²/g bis 360 m²/g, üblicherweise von mehr als 250 m²/g oder von mehr als 300 m²/g, beispielsweise von ca. 320 m²/g. Sogar nach einer weiteren thermischen Behandlung, insbesondere einer Kalzination unter Luftatmosphäre, für einen Zeitraum von 1 Stunde bei einer Temperatur von 800 °C wurden noch hohe BET-Werte bestimmt, nämlich um 20 m²/g, beispielsweise 18 m²/g. Letzteres ist insbesondere deswegen überraschend, weil
a) das getrocknete, beispielsweise gefriergetrocknete, und bei 800 °C kalzinierte oxidische Niob(V) enthaltende Material, welches eine BET-Oberfläche von 18 m²/g aufwies, gemäß ICP-OES-Analyse nach Trocknung, beispielsweise Gefriertrocknung, einen Massenanteil w(Niob) an der Gesamtmasse des oxidischen Niob(V) enthaltenden Materials von ca. 68 % enthielt,
   und im Vergleich dazu
b) Niob(V)-oxid (Nb₂O₅) einen Massenanteil w(Niob) von 69,9 % aufweist, wobei die spezifische Oberfläche typischerweise weniger als 10 m²/g beträgt. Dies gilt jedenfalls dann, wenn das Nb₂O₅ mittels einer einfach und kostengünstig durchführbaren nasschemischen Fällungsreaktion und nicht mittels eines arbeits- und kostenintensiven Sol-Gel-Verfahrens hergestellt wird (Synthese von Nb₂O₅-Nanopartikeln mittels Sol-Gel-Verfahren, z. B.: N. Uekawa, T. Kudo, F. Mori, Y. Jun Wu, K. Kakegawa, J. Colloid Interface Sci. 2003, 264, 378 - 384).

Eine weitere Ausführungsform des hier vorgestellten ersten porösen oxidischen Niob(V) enthaltenden Materials sieht vor, dass das oxidische Niob(V) enthaltende Material eine oder mehrere der folgenden Eigenschaften aufweist:
a. der Massenanteil w(Wasserstoff) an der Gesamtmasse des oxidischen Niob(V) enthaltenden Materials beträgt gemäß Elementaranalyse wenigstens 1 % und höchstens 1,5 %;
b. der Massenanteil w(Stickstoff) an der Gesamtmasse des oxidischen Niob(V) enthaltenden Materials beträgt gemäß Elementaranalyse wenigstens 1 % und höchstens 1,5 %;
c. ein Massenanteil w(Niob) an der Gesamtmasse des oxidischen Niob(V) enthaltenden Materials beträgt gemäß ICP-OES-Analyse wenigstens 50 % und höchstens 65 %.

Dann kann ein poröses oxidisches Niob(V) enthaltendes Material des hier vorgestellten Typs beispielsweise einen Massenanteil w(Wasserstoff) von 1,1 % oder 1,2 % oder 1,3 % oder 1,4 % aufweisen.

Der Massenanteil w(Stickstoff) kann ebenfalls beispielsweise 1,1 % oder 1,2 % oder 1,3 % oder 1,4 % betragen.

Der mittels ICP-OES-Analyse bestimmte Massenanteil w(Niob) an der Gesamtmasse des ersten oxidischen Niob(V) enthaltenden Materials kann also beispielsweise 51 % oder 52 % oder 53 % oder 54 % oder 55 % oder 56 % oder 57 % oder 58 % oder 59 % oder 60 % oder 61 % oder 62 % oder 63 % oder 64 % betragen.

In einer anderen vorteilhaften Ausführungsform des hier beschriebenen ersten porösen oxidischen Niob(V) enthaltenden Materials beträgt der Massenanteil w(Niob) an der Gesamtmasse des oxidischen Niob(V) enthaltenden Materials gemäß ICP-OES-Analyse wenigstens 51 % und höchsten 65 % oder wenigstens 52 % und höchstens 65 % oder wenigstens 53 % und höchstens 65 % oder wenigstens 54 % und höchstens 65 % oder wenigstens 55 % und höchstens 65 % oder wenigstens 56 % und höchstens 65 % oder wenigstens 57 % und höchstens 65 %. Der Massenanteil w(Niob) an der Gesamtmasse des oxidischen Niob(V) enthaltenden Materials kann dann beispielsweise auch 58 % oder 59 % oder 60 % oder 61 % oder 62 % oder 63 % oder 64 % betragen.

Im Falle eines isolierten und getrockneten, insbesondere gefriergetrockneten, porösen oxidischen Niob(V) enthaltenden Materials des hier vorgestellten Typs betrug der Massenanteil w(Niob) an der Gesamtmasse gemäß ICP-OES-Analyse 60,4 %. Gemäß Elementaranalyse enthielt dieses Material einen Massenanteil w(Wasserstoff) von 1,3 % und einen Massenanteil w(Stickstoff) von 1,2 %.

Es sei darauf hingewiesen, dass der Massenanteil w(Niob) eines porösen oxidischen Niob(V) enthaltenden Materials des hier vorgestellten Typs nachweislich unterhalb des Massenanteils w(Niob) von Nb₂O₅ liegt, welcher 69,9 % beträgt. Mithin kann ausgeschlossen werden, dass ein Material vom hier beschriebenen Typ aus Nb₂O₅ besteht, nicht aber, dass in einem solchen Material Nb₂O₅ enthalten sein kann.

Überraschenderweise wurde durch Analyse mittels optischer Emissionsspektrometrie mit induktiv gekoppeltem Plasma (ICP-OES) gefunden, dass der Massenanteil w(Niob) eines porösen oxidischen Niob(V) enthaltenden Materials vom hier beschriebenen Typ sogar nach Kalzination unter Luftatmosphäre für einen Zeitraum von 1 Stunde bei einer Temperatur von 800 °C unterhalb desjenigen von Nb₂O₅ lag. Es kann also ausgeschlossen werden, dass es sich bei dem nach Beendigung der Kalzination vorliegenden Material um Nb₂O₅ handelte, nicht aber, dass das nach Beendigung der Kalzination vorliegende poröse oxidische Material Nb₂O₅ enthielt. Dieses Ergebnis ist insbesondere deshalb überraschend, weil es nicht in Übereinstimmung mit den in der Literatur für Nb₂O₅ x n H₂O gemachten Angaben ist (vgl. z. B.: T. Murayama, J. Chen, J. Hirata, K. Matsumotoa, W. Ueda, Catal. Sci. Technol. 2014, 4, 4250 - 4257: u. a. *Abstract* und *Introduction*)*.*

Gemäß einer anderen Variante des hier beschriebenen ersten porösen oxidischen Niob(V) enthaltenden Materials weist das oxidische Niob(V) enthaltende Material nach der thermischen Behandlung, insbesondere einer Kalzination, vorteilhaft einer Kalzination unter Luftatmosphäre, für einen Zeitraum von 1 Stunde bei einer Temperatur von 400 °C eine oder mehrere der folgenden Eigenschaften auf:
a. enthält gemäß Elementaranalyse Wasserstoff (H), wobei
   der Massenanteil w(Wasserstoff) an der Gesamtmasse des oxidischen Niob(V) enthaltenden Materials insbesondere wenigstens 0,8 % und höchstens 1,2 % beträgt;
b. ist gemäß Elementaranalyse frei von Stickstoff (N);
c. der Massenanteil w(Niob) an der Gesamtmasse des oxidischen Niob(V) enthaltenden Materials beträgt gemäß ICP-OES-Analyse wenigstens 57 % und höchstens 67 %.

Der Ausdruck "gemäß Elementaranalyse frei von Stickstoff (N)" bedeutet, dass a) das untersuchte erste poröse oxidische Niob(V) enthaltende Material keinen Stickstoff enthält oder b) der Massenanteil w(Stickstoff) des untersuchten ersten porösen oxidischen Niob(V) enthaltenden Materials unterhalb der Nachweisgrenze des für die Elementaranalyse eingesetzten Gerätes (Nachweisgrenze: 0,1 Gew.-%) liegt.

Ein für einen Zeitraum von 1 Stunde bei einer Temperatur von 400 °C thermisch behandeltes, insbesondere unter Luftatmosphäre kalziniertes, Niob(V) enthaltendes Material des hier genannten Typs kann also beispielsweise auch einen Massenanteil w(Wasserstoff) an der Gesamtmasse des oxidischen Niob(V) enthaltenden Materials von 0,9 % oder 1 % oder 1,1 % aufweisen, wobei der Massenanteil w(Wasserstoff) mittels Elementaranalyse ermittelt wurde. Alternativ oder ergänzend kann der mittels ICP-OES-Analyse bestimmte Massenanteil w(Niob) an der Gesamtmasse des oxidischen Niob(V) enthaltenden Materials beispielsweise auch 58 % oder 59 % oder 60 % oder 61 % oder 62 % oder 63 % oder 64 % oder 65 % oder 66 % betragen.

Ein getrocknetes, insbesondere gefriergetrocknetes, und für einen Zeitraum von 1 Stunde bei einer Temperatur von 400 °C thermisch behandeltes, insbesondere unter Luftatmosphäre kalziniertes, poröses oxidisches Niob(V) enthaltendes Material des hier vorgestellten Typs enthielt gemäß Elementaranalyse einen Massenanteil w(Wasserstoff) von 1 %. Der Massenanteil w(Stickstoff) dieses Materials wurde mit < 0,1 % bestimmt und lag damit unterhalb der Nachweisgrenze des für die Elementaranalyse eingesetzten Gerätes (Nachweisgrenze: 0,1 Gew.-%). Der mittels ICP-OES-Analyse bestimmte Massenanteil w(Niob) an der Gesamtmasse dieses oxidischen Niob(V) enthaltenden Materials betrug 62,1 %. Dieses getrocknete, insbesondere gefriergetrocknete, und für einen Zeitraum von 1 Stunde bei einer Temperatur von 400 °C thermisch behandelte, insbesondere unter Luftatmosphäre kalzinierte, Niob(V) enthaltende Material des hier beschriebenen Typs wies eine sehr hohe spezifische Oberfläche, nämlich von 319 m²/g, auf. Letztere wurde mittels der BET-Methode bestimmt.

Nach einer alternativen oder ergänzenden Ausführungsform des hier beschriebenen ersten porösen oxidischen Niob(V) enthaltenden Materials weist das oxidische Niob(V) enthaltende Material nach einer thermischen Behandlung, insbesondere einer Kalzination, vorteilhaft einer Kalzination unter Luftatmosphäre, für einen Zeitraum von 1 Stunde bei einer Temperatur von 600 °C eine oder mehrere der folgenden Eigenschaften auf:
a. enthält gemäß Elementaranalyse Wasserstoff (H), wobei der Massenanteil w(Wasserstoff) an der Gesamtmasse des oxidischen Niob(V) enthaltenden Materials insbesondere wenigstens 0,5 % und höchstens 1 % beträgt;
b. ist gemäß Elementaranalyse frei von Stickstoff (N);
c. der Massenanteil w(Niob) an der Gesamtmasse des oxidischen Niob(V) enthaltenden Materials beträgt gemäß ICP-OES-Analyse wenigstens 58 % und höchstens 68 %;
d. die mittels der BET-Methode bestimmte spezifische Oberfläche beträgt wenigstens 100 m²/g und höchstens 200 m²/g.

Folglich kann ein für einen Zeitraum von 1 Stunde bei einer Temperatur von 600 °C thermisch behandeltes, insbesondere unter Luftatmosphäre kalziniertes, Niob(V) enthaltendes Material des hier genannten Typs beispielsweise auch einen Massenanteil w(Wasserstoff) an der Gesamtmasse des oxidischen Niob(V) enthaltenden Materials von 0,6 % oder 0,7 % oder 0,8 % oder 0,9 % aufweisen, wobei der Massenanteil w(Wasserstoff) mittels Elementaranalyse ermittelt wurde. Ein auf diese Weise thermisch behandeltes oxidisches Niob(V) enthaltendes Material des hier vorgestellten Typs kann alternativ oder ergänzend eine mittels der BET-Methode bestimmte spezifische Oberfläche von beispielsweise 105 m²/g oder 110 m²/g 115 m²/g oder 120 m²/g oder 125 m²/g oder 130 m²/g oder 135 m²/g oder 140 m²/g oder 145 m²/g oder 150 m²/g oder 155 m²/g oder 160 m²/g oder 165 m²/g oder 170 m²/g oder 175 m²/g oder 180 m²/g oder 185 m²/g oder 190 m²/g oder 195 m²/g aufweisen. Außerdem kann - alternativ oder ergänzend - der mittels ICP-OES-Analyse bestimmte Massenanteil w(Niob) an der Gesamtmasse des oxidischen Niob(V) enthaltenden Materials beispielsweise auch 59 % oder 60 % oder 61 % oder 62 % oder 63 % oder 64 % oder 65 % oder 66 % oder 67 % betragen.

Ein getrocknetes, insbesondere gefriergetrocknetes, und für einen Zeitraum von 1 Stunde bei einer Temperatur von 600 °C thermisch behandeltes, insbesondere unter Luftatmosphäre kalziniertes, poröses oxidisches Niob(V) enthaltendes Material des hier vorgestellten Typs enthielt gemäß Elementaranalyse einen Massenanteil w(Wasserstoff) von 0,7 %. Der Massenanteil w(Stickstoff) dieses Materials wurde mit < 0,1 % bestimmt und lag damit unterhalb der Nachweisgrenze des für die Elementaranalyse eingesetzten Gerätes (Nachweisgrenze: 0,1 Gew.-%). Der mittels ICP-OES-Analyse bestimmte Massenanteil w(Niob) an der Gesamtmasse dieses oxidischen Niob(V) enthaltenden Materials betrug 63,8 %. Dieses getrocknete, insbesondere gefriergetrocknete, und für einen Zeitraum von 1 Stunde bei einer Temperatur von 600 °C thermisch behandelte, insbesondere unter Luftatmosphäre kalzinierte, Niob(V) enthaltende Material des hier beschriebenen Typs wies noch eine sehr hohe spezifische Oberfläche, nämlich von 175 m²/g, auf. Letztere wurde mittels der BET-Methode bestimmt.

Im Vergleich dazu wurden der Massenanteil w(Wasserstoff) und der Massenanteil w(Stickstoff) eines getrockneten, insbesondere gefriergetrockneten, und für einen Zeitraum von 1 Stunde bei einer Temperatur von 800 °C thermisch behandelten, insbesondere unter Luftatmosphäre kalzinierten, poröses oxidisches Niob(V) enthaltendes Material des hier vorgestellten Typs jeweils mit < 0,1 % bestimmt. Mithin lag sowohl der Massenanteil w(Wasserstoff) als auch der Massenanteil w(Stickstoff) unterhalb der Nachweisgrenze des für die Elementaranalyse eingesetzten Gerätes (Nachweisgrenze: 0,1 Gew.-%). Der mittels ICP-OES-Analyse bestimmte Massenanteil w(Niob) an der Gesamtmasse dieses oxidischen Niob(V) enthaltenden Materials betrug 67,9 %. Dieses getrocknete, insbesondere gefriergetrocknete, und für einen Zeitraum von 1 Stunde bei einer Temperatur von 600 °C thermisch behandelte Niob(V) enthaltende Material des hier beschriebenen Typs wies immer noch eine hohe spezifische Oberfläche, nämlich von 18 m²/g, auf. Letztere wurde mittels der BET-Methode bestimmt.

Es sei darauf hingewiesen, dass für die weiter oben angegebenen beispielhaften Beschreibungen des hier vorgestellten ersten porösen oxidischen Niob(V) enthaltenden Materials die Analyseergebnisse einer einzigen Charge eines getrockneten, insbesondere gefriergetrockneten, Materials dieses Typs herangezogen wurden. Mithin sind die vorgenannten Ergebnisse auch der Beschreibung der Ausführungsbeispiele zu entnehmen.

Gemäß einer weiteren Ausführungsvariante des ersten porösen oxidischen Niob(V) enthaltenden Materials liegt das Material in Form eines, insbesondere wenigstens teilkristallinen, Pulvers vor.

Ein erstes poröses oxidisches Niob(V) enthaltendes Material gemäß einer oder mehreren der weiter oben beschriebenen Ausführungsformen ist insbesondere erhältlich nach einem Verfahren umfassend die folgenden Schritte:
A. Zurverfügungstellung eines Gemisches, enthaltend
   i. eines Ammoniumnioboxalats und
   ii. von Oxalsäure und/oder von Ammoniumoxalat,
   wobei das Gemisch
   - einen Massenanteil w(Niob) von wenigstens 15 % und von höchstens 30 % aufweist, vorteilhaft von wenigstens 17 % und von höchstens 28 %, vorteilhafter von wenigstens 18 % und von höchstens 27 %, insbesondere von wenigstens 19 % und von höchstens 26 %, und
   - ein molares Verhältnis Niob : Oxalat von wenigstens 1 : 2,1 und von höchstens 1 : 4 aufweist, vorteilhaft von wenigstens 1 : 2,1 und von höchstens 1 : 3,9, vorteilhafter von wenigstens 1 : 2,1 und von höchstens 1 : 3,8, insbesondere von wenigstens 1 : 2,2 und von höchstens 1 : 3,7, beispielsweise 1 : 2,3 oder 1 : 2,4 oder 1 : 2,5 oder 1 : 2,6 oder 1 : 2,7 oder 1 : 2,8 oder 1 : 2,9 oder 1 : 3 oder 1 : 3,1 oder 1 : 3,2 oder 1 : 3,3 oder 1 : 3,4 oder 1 : 3,5 oder 1 : 3,6;
B. Behandlung des Gemisches aus Schritt A. unter hydrothermalen Bedingungen;
C. Gefriertrocknung und/oder Wärmetrocknung des in Schritt B. erhaltenen Produktes.

Das Ammoniumnioboxalat ((NH₄)[NbO(C₂O₄)₂]), die Oxalsäure und das Ammoniumoxalat können unabhängig voneinander auch in Form eines Hydrates vorliegen.

Eine thermische Behandlung bei einer Temperatur von bis zu ca. 100 °C wird vorliegend als Trocknung bezeichnet. Dabei kann es sich um eine Gefriertrocknung und/oder um eine Wärmetrocknung bei einer Temperatur von bis ca. 100 °C, beispielsweise im Bereich von ca. 70 °C bis ca. 100 °C, handeln. Ergänzend kann die jeweilige Trocknung auch unter Vakuum erfolgen. Dem Fachmann ist bekannt, welche Maßnahmen zu ergreifen sind, um ein anorganisches poröses oxidisches Material zu trocknen, insbesondere an der Materialoberfläche anhaftendes Wasser zu entfernen.

Auf diese Weise können die ersten porösen oxidischen Niob(V) enthaltenden Materialien vorteilhafterweise einfach, reproduzierbar, umwelt- und ressourcenschonend und vergleichsweise kostengünstig in quantitativer oder nahezu quantitativer Ausbeute und hoher Reinheit zur Verfügung gestellt werden, und zwar auch im industriellen Maßstab.

Eine vorteilhafte Ausführungsform sieht vor, dass die Zurverfügungstellung gemäß Schritt A. eine Herstellung einer Lösung, enthaltend Ammoniumnioboxalat und Oxalsäure und/oder Ammoniumoxalat, in vollentsalztem Wasser umfasst.

Gemäß einer weiteren vorteilhaften Ausführungsvariante des Verfahrens ist in Schritt A. die Zurverfügungstellung eines Gemisches, enthaltend Ammoniumnioboxalat und Oxalsäure und/oder Ammoniumoxalat, vorgesehen, wobei die vorgenannten Verbindungen unabhängig voneinander auch in Form eines Hydrates vorliegen können. Besonders einfach ist die Durchführung des Verfahrens, wenn ein kommerziell erhältliches Gemisch, enthaltend Ammoniumnioboxalat und Oxalsäure und/oder Ammoniumoxalat, eingesetzt wird, insbesondere das Produkt NAmOx (Niobammoniumoxalat, TANIOBIS GmbH).

Nach einer weiteren Ausführungsform ist in Schritt B. eine Stoffmengenkonzentration c(Nb⁵⁺) von wenigstens 0,05 mol/L und von höchstens 0,5 mol/L vorgesehen, vorteilhaft von wenigstens 0,1 mol/L und von höchstens 0,5 mol/L, vorteilhafter von wenigstens 0,15 mol/L und von höchstens 0,5 mol/L, noch vorteilhafter von wenigstens 0,2 mol/L und von höchstens 0,5 mol/L, insbesondere von wenigstens 0,3 mol/L und von höchstens 0,5 mol/L, beispielsweise von 0,31 mol/L oder von 0,32 mol/L oder von 0,33 mol/L oder von 0,34 mol/L oder von 0,35 mol/L oder von 0,36 mol/L oder von 0,37 mol/L oder von 0,38 mol/L oder von 0,39 mol/L oder von 0,4 mol/L oder von 0,41 mol/L oder von 0,42 mol/L oder von 0,43 mol/L oder von 0,44 mol/L oder von 0,45 mol/L oder von 0,46 mol/L oder von 0,47 mol/L oder von 0,48 mol/L oder von 0,49 mol/L.

In einer anderen vorteilhaften Variante wird die gemäß Schritt B. vorgesehene Behandlung unter hydrothermalen Bedingungen in einem gasdicht verschließbaren Druckbehälter (Autoklav) durchgeführt. Dabei beträgt eine Innentemperatur des Autoklavs vorteilhafterweise wenigstens 160 °C. Noch vorteilhafter ist es, wenn die Innentemperatur des Autoklavs wenigstens 160 °C und höchstens 240 °C beträgt. Insbesondere liegt die Innentemperatur des Autoklavs oberhalb von 160 °C und beträgt höchstens 235 °C. Beispielsweise liegt die Innentemperatur des Autoklavs im Bereich von 160 °C bis 230 °C oder im Bereich von 160 °C bis 225 °C. Besonders vorteilhaft ist es, wenn die Innentemperatur des Autoklavs im Bereich von 165 °C bis 220 °C liegt. Dann kann die Innentemperatur des Autoklavs beispielsweise auch 170 °C oder 175 °C oder 180 °C oder 185 °C oder 190 °C oder 195 °C oder 200 °C oder 205 °C oder 210 °C oder 215 °C betragen.

Eine weitere Ausführungsform sieht vor, dass eine Reaktionszeit wenigstens drei Stunden und höchstens zehn Stunden beträgt, vorteilhaft wenigstens vier Stunden und höchstens neun Stunden, insbesondere wenigstens fünf Stunden und höchstens acht Stunden, beispielsweise sechs Stunden oder sieben Stunden.

Hinsichtlich weiterer Vorteile eines hier vorgestellten ersten porösen oxidischen Niob(V) enthaltenden Materials, erhalten oder erhältlich nach einem Verfahren zur Herstellung solcher Materialien gemäß einer oder mehreren der vorgenannten Ausführungsformen, wird auf die Vorteile verwiesen, welche für das weiter oben beschriebene erste poröse oxidische Niob(V) enthaltende Material genannt sind.

Die Aufgabe wird außerdem gelöst durch ein zweites poröses oxidisches Niob(V) enthaltendes Material, welches ein Nichtleiter ist und, insbesondere bis zu einer Temperatur von 400 °C, temperaturstabil oder im Wesentlichen temperaturstabil ist, wobei das oxidische Niob(V) enthaltende Material
i. gemäß Elementaranalyse Wasserstoff (H) enthält, wobei ein Massenanteil w(Wasserstoff) an der Gesamtmasse des oxidischen Niob(V) enthaltenden Materials wenigstens 0,5 % und höchstens 2 % beträgt;
ii. gemäß Elementaranalyse Stickstoff (N) enthält,
   wobei ein Massenanteil w(Stickstoff) an der Gesamtmasse des oxidischen Niob(V) enthaltenden Materials wenigstens 0,5 % und höchstens 3 % beträgt, oder frei von Stickstoff (N) ist; und
iii. nach einer thermischen Behandlung, insbesondere einer Kalzination, vorteilhaft einer Kalzination unter Luftatmosphäre, für einen Zeitraum von 1 Stunde bei einer Temperatur von 400 °C eine mittels der BET-Methode bestimmte spezifische Oberfläche von wenigstens 200 m²/g und von höchstens 350 m²/g aufweist.

Für das hier vorgestellte zweite poröse oxidische Niob(V) enthaltende Material gelten die im Zusammenhang mit dem weiter oben beschriebenen ersten porösen oxidischen Niob(V) enthaltenden Material angegebenen Definitionen und Informationen betreffend die Ausdrücke "Nichtleiter", "temperaturstabil", "im Wesentlichen temperaturstabil", "thermische Behandlung", "hohe spezifische Oberfläche", "hoher BET-Wert", "sehr hohe spezifische Oberfläche" und "sehr hoher BET-Wert" analog.

Das hier vorgestellte zweite poröse oxidische Niob(V) enthaltende Material ist - ebenso wie das weiter oben beschriebene erste poröse oxidische Niob(V) enthaltende Material - mittels einer einfach und kostengünstig durchführbaren Hydrothermalsynthese herstellbar. Im Unterschied zu dem weiter oben beschriebenen ersten porösen oxidischen Niob(V) enthaltenden Material erfolgt die Synthese des hier vorgestellten zweiten porösen oxidischen Niob(V) enthaltenden Materials ausgehend von einer wässrigen Nioboxalat-Lösung. Besonders einfach ist es, eine kommerziell erhältliche wässrige Nioboxalat-Lösung einzusetzen, insbesondere die wässrige Nioboxalat-Lösung der TANIOBIS GmbH (NOx-Lösung). Unabhängig davon, ob eine kommerziell erhältliche wässrige Nioboxalat-Lösung verwendet wird oder nicht, kann vorgesehen sein, zusätzlich Oxalsäure und/oder Ammoniumoxalat zu der jeweiligen wässrigen Nioboxalat-Lösung hinzuzufügen. Wird Ammoniumoxalat hinzugefügt, so enthält das poröse oxidische Niob(V) enthaltende Material unmittelbar nach seiner Herstellung, also ohne Durchführung einer thermischen Behandlung, Stickstoff.

Der Ausdruck "gemäß Elementaranalyse frei von Stickstoff (N)" bedeutet, dass a) das untersuchte erste poröse oxidische Niob(V) enthaltende Material keinen Stickstoff enthält oder b) der Massenanteil w(Stickstoff) des untersuchten ersten porösen oxidischen Niob(V) enthaltenden Materials unterhalb der Nachweisgrenze des für die Elementaranalyse eingesetzten Gerätes (Nachweisgrenze: 0,1 Gew.-%) liegt.

Ein poröses oxidisches Niob(V) enthaltendes Material des hier vorgestellten Typs kann beispielsweise einen Massenanteil w(Wasserstoff) von 0,6 % oder 0,7 % oder 0,8 % oder 0,9 % oder 1 % oder 1,1 % oder 1,2 % oder 1,3 % oder 1,4 % oder 1,5 % oder 1,6 % oder 1,7 % oder 1,8 % oder 1,9 % aufweisen.

Der Massenanteil w(Stickstoff) kann beispielsweise 0,6 % oder 0,7 % oder 0,8 % oder 0,9 % oder 1 % oder 1,1 % oder 1,2 % oder 1,3 % oder 1,4 % oder 1,5 % oder 1,6 % oder 1,7 % oder 1,8 % oder 1,9 % oder 2 % oder 2,1 % oder 2,2 % oder 2,3 % oder 2,4 % oder 2,5 % oder 2,6 % oder 2,7 % oder 2,8 % oder 2,9 % betragen.

Es sei darauf hingewiesen, dass sich Merkmale, welche ohne Temperaturangabe genannt sind, hier und im Folgenden auf das jeweilige isolierte und getrocknete zweite poröse oxidische Niob(V) enthaltende Material beziehen. Ein Beispiel für ein solches Merkmal ist das weiter oben für das zweite poröse oxidische Niob(V) enthaltende Material genannte Merkmal "gemäß Elementaranalyse Wasserstoff (H) enthält, wobei ein Massenanteil w(Wasserstoff) wenigstens 0,5 % und höchstens 2 % beträgt".

Ein für einen Zeitraum von 1 Stunde bei einer Temperatur von 400 °C thermisch behandeltes, insbesondere unter Luftatmosphäre kalziniertes, Niob(V) enthaltendes Material des hier genannten Typs kann auch eine mittels der BET-Methode bestimmte spezifische Oberfläche von beispielsweise 205 m²/g oder 210 m²/g oder 215 m²/g oder 220 m²/g oder 225 m²/g oder 230 m²/g oder 235 m²/g oder 240 m²/g oder 245 m²/g oder 250 m²/g oder 255 m²/g oder 260 m²/g oder 265 m²/g oder 270 m²/g oder 275 m²/g oder 280 m²/g oder 285 m²/g oder 290 m²/g oder 295 m²/g oder 300 m²/g oder 305 m²/g oder 310 m²/g oder 315 m²/g oder 320 m²/g oder 325 m²/g oder 330 m²/g oder 335 m²/g oder 340 m²/g oder 345 m²/g aufweisen.

Überraschenderweise wurden für die hier beschriebenen oxidischen Niob(V) enthaltenden Materialien nach Trocknung, beispielsweise Gefriertrocknung, sehr hohe BET-Werte bestimmt (nach DIN 66132), nämlich von mehr als 200 m²/g bis 360 m²/g, üblicherweise von mehr als 250 m²/g oder von mehr als 300 m²/g, beispielsweise von ca. 280 m²/g. Die BET-Analyse einer Probe eines hier beschriebenen zweiten oxidischen Niob(V) enthaltenden Materials, welche für einen Zeitraum von 1 Stunde bei 400 °C kalziniert worden war, dass das Material noch eine sehr hohe spezifische Oberfläche aufwies, nämlich von ca. 220 m²/g. Nach Kalzination einer Probe desselben Materials für einen Zeitraum von 1 Stunde bei 200 °C betrug die BET-Oberfläche des Materials noch ca. 248 m²/g. Wurde eine Probe desselben Materials für einen Zeitraum von 1 Stunde bei 600 °C kalziniert, wies das Material danach immer noch eine hohe BET-Oberfläche auf, nämlich von ca. 121 m²/g. Nach Kalzination einer Probe desselben Materials bei einer Temperatur von 800 °C für einen Zeitraum von 1 Stunde wurde eine BET-Oberfläche von ca. 9 m²/g bestimmt.
Vor Durchführung der jeweiligen Kalzination erfolgte eine Trocknung, d. h. eine Gefriertrocknung und/oder eine Wärmetrocknung bei einer Temperatur von bis ca. 100 °C, insbesondere ausschließlich eine Gefriertrocknung.

Besonders vorteilhaft ist, dass die Eigenschaften des hier vorgestellten zweiten porösen oxidischen Niob(V) enthaltenden Materials je nach geplantem Verwendungszweck innerhalb gewisser Grenzen einstellbar sind. Dies gilt insbesondere für die spezifische Oberfläche, welche in vielen Anwendungsbereichen eine entscheidende Rolle spielen kann. Sie kann durch die für die thermische Behandlung gewählten Bedingungen, insbesondere durch die Wahl der Innentemperatur des Muffelofens oder des Trockenschranks, für jedes zweite poröse oxidische Niob(V) enthaltende Material innerhalb gewisser Grenzen eingestellt werden. Naturgemäß ist die spezifische Oberfläche eines oxidischen Materials nach (Gefrier-)Trocknung am größten und nimmt mit zunehmender Temperatur der thermischen Behandlung ab. So kann ein hier beschriebenes zweites poröses oxidisches Niob(V) enthaltendes Material nach (Gefrier-)Trocknung beispielsweise eine spezifische Oberfläche im Bereich von mehr als 200 m²/g bis 360 m²/g aufweisen. Durch eine weitere thermische Behandlung, insbesondere durch eine Kalzinierung, vorteilhaft unter Luftatmosphäre, kann eine vordefinierte spezifische Oberfläche eingestellt werden. Es können also maßgeschneiderte, insbesondere betreffend die spezifische Oberfläche, poröse oxidische Niob(V) enthaltende Materialien zur Verfügung gestellt werden.

Eine weitere vorteilhafte Ausführungsform des hier vorgestellten zweiten porösen oxidischen Niob(V) enthaltenden Materials sieht vor, dass das oxidische Niob(V) enthaltende Material eine oder mehrere der folgenden Eigenschaften aufweist:
a. der Massenanteil w(Wasserstoff) an der Gesamtmasse des oxidischen Niob(V) enthaltenden Materials beträgt gemäß Elementaranalyse wenigstens 1 % und höchstens 1,5 %;
b. der Massenanteil w(Stickstoff) an der Gesamtmasse des oxidischen Niob(V) enthaltenden Materials beträgt gemäß Elementaranalyse wenigstens 1 % und höchstens 1,5 %;
c. ein Massenanteil w(Niob) an der Gesamtmasse des oxidischen Niob(V) enthaltenden Materials beträgt gemäß ICP-OES-Analyse wenigstens 50 % und höchstens 65 %.

Dann kann ein poröses oxidisches Niob(V) enthaltendes Material des hier vorgestellten Typs beispielsweise einen Massenanteil w(Wasserstoff) von 1,1 % oder 1,2 % oder 1,3 % oder 1,4 % aufweisen.

Der Massenanteil w(Stickstoff) kann ebenfalls beispielsweise 1,1 % oder 1,2 % oder 1,3 % oder 1,4 % betragen.

Der mittels ICP-OES-Analyse bestimmte Massenanteil w(Niob) an der Gesamtmasse des zweiten oxidischen Niob(V) enthaltenden Materials kann also beispielsweise auch 51 % oder 52 % oder 53 % oder 54 % oder 55 % oder 56 % oder 57 % oder 58 % oder 59 % oder 60 % oder 61 % oder 62 % oder 63 % oder 64 % betragen.

In einer anderen vorteilhaften Variante des hier beschriebenen zweiten porösen oxidischen Niob(V) enthaltenden Materials beträgt der Massenanteil w(Niob) an der Gesamtmasse des oxidischen Niob(V) enthaltenden Materials gemäß ICP-OES-Analyse wenigstens 51 % und höchsten 65 % oder wenigstens 52 % und höchstens 65 % oder wenigstens 53 % und höchstens 65 % oder wenigstens 54 % und höchstens 65 % oder wenigstens 55 % und höchstens 65 % oder wenigstens 56 % und höchstens 65 % oder wenigstens 57 % und höchstens 65 %. Der Massenanteil w(Niob) an der Gesamtmasse des zweiten porösen oxidischen Niob(V) enthaltenden Materials kann dann beispielsweise auch 58 % oder 59 % oder 60 % oder 61 % oder 62 % oder 63 % oder 64 % betragen.

Für ein isoliertes und getrocknetes, insbesondere gefriergetrocknetes, poröses oxidisches Niob(V) enthaltendes Material des hier vorgestellten Typs wurde gefunden, dass der Massenanteil w(Niob) an der Gesamtmasse gemäß ICP-OES-Analyse 62,2 % betrug.

Es sei darauf hingewiesen, dass der Massenanteil w(Niob) eines getrockneten, insbesondere gefriergetrockneten, zweiten porösen oxidischen Niob(V) enthaltenden Materials nachweislich unterhalb des Massenanteils w(Niob) von Nb₂O₅ liegt, welcher 69,9 % beträgt. Mithin kann ausgeschlossen werden, dass ein ausschließlich getrocknetes, insbesondere gefriergetrocknetes Material vom hier beschriebenen Typ aus Nb₂O₅ besteht, nicht aber, dass in einem solchen Material Nb₂O₅ enthalten sein kann.

Gemäß einer anderen Variante des hier beschriebenen zweiten porösen oxidischen Niob(V) enthaltenden Materials weist das oxidische Niob(V) enthaltende Material nach der thermischen Behandlung, insbesondere einer Kalzination, vorteilhaft einer Kalzination unter Luftatmosphäre, für einen Zeitraum von 1 Stunde bei einer Temperatur von 400 °C eine oder mehrere der folgenden Eigenschaften auf:
a. enthält gemäß Elementaranalyse Wasserstoff (H), wobei der Massenanteil w(Wasserstoff) an der Gesamtmasse des oxidischen Niob(V) enthaltenden Materials insbesondere wenigstens 0,8 % und höchstens 1,2 % beträgt;
b. ist gemäß Elementaranalyse frei von Stickstoff (N);
c. der Massenanteil w(Niob) an der Gesamtmasse des oxidischen Niob(V) enthaltenden Materials beträgt gemäß ICP-OES-Analyse wenigstens 57 % und höchstens 67 %;

Der Ausdruck "gemäß Elementaranalyse frei von Stickstoff (N)" bedeutet, dass a) das untersuchte erste poröse oxidische Niob(V) enthaltende Material keinen Stickstoff enthält oder b) der Massenanteil w(Stickstoff) des untersuchten ersten porösen oxidischen Niob(V) enthaltenden Materials unterhalb der Nachweisgrenze des für die Elementaranalyse eingesetzten Gerätes (Nachweisgrenze: 0,1 Gew.-%) liegt.

Ein für einen Zeitraum von 1 Stunde bei einer Temperatur von 400 °C thermisch behandeltes, insbesondere unter Luftatmosphäre kalziniertes, Niob(V) enthaltendes Material des hier genannten Typs kann also beispielsweise auch einen Massenanteil w(Wasserstoff) an der Gesamtmasse des oxidischen Niob(V) enthaltenden Materials von 0,9 % oder 1 % oder 1,1 % aufweisen, wobei der Massenanteil w(Wasserstoff) mittels Elementaranalyse ermittelt wurde. Alternativ oder ergänzend kann der mittels ICP-OES-Analyse bestimmte Massenanteil w(Niob) an der Gesamtmasse des oxidischen Niob(V) enthaltenden Materials beispielsweise auch 58 % oder 59 % oder 60 % oder 61 % oder 62 % oder 63 % oder 64 % oder 65 % oder 66 % betragen.

Nach einer noch alternativen oder ergänzenden Ausführungsvariante des hier beschriebenen zweiten porösen oxidischen Niob(V) enthaltenden Materials weist das oxidische Niob(V) enthaltende Material nach einer thermischen Behandlung, insbesondere einer Kalzination, vorteilhaft einer Kalzination unter Luftatmosphäre, für einen Zeitraum von 1 Stunde bei einer Temperatur von 600 °C eine oder mehrere der folgenden Eigenschaften auf:
a. enthält gemäß Elementaranalyse Wasserstoff (H), wobei der Massenanteil w(Wasserstoff) an der Gesamtmasse des oxidischen Niob(V) enthaltenden Materials insbesondere wenigstens 0,5 % und höchstens 1 % beträgt;
b. ist gemäß Elementaranalyse frei von Stickstoff (N);
c. der Massenanteil w(Niob) an der Gesamtmasse des oxidischen Niob(V) enthaltenden Materials beträgt gemäß ICP-OES-Analyse wenigstens 58 % und höchstens 68 %;
d. die mittels der BET-Methode bestimmte spezifische Oberfläche beträgt wenigstens 100 m²/g und höchstens 200 m²/g.

Folglich kann ein für einen Zeitraum von 1 Stunde bei einer Temperatur von 600 °C thermisch behandeltes, insbesondere unter Luftatmosphäre kalziniertes, Niob(V) enthaltendes Material des hier genannten Typs beispielsweise auch einen Massenanteil w(Wasserstoff) an der Gesamtmasse des oxidischen Niob(V) enthaltenden Materials von 0,6 % oder 0,7 % oder 0,8 % oder 0,9 % aufweisen, wobei der Massenanteil w(Wasserstoff) mittels Elementaranalyse ermittelt wurde. Ein auf diese Weise thermisch behandeltes oxidisches Niob(V) enthaltendes Material des hier vorgestellten Typs kann alternativ oder ergänzend eine mittels der BET-Methode bestimmte spezifische Oberfläche von beispielsweise 105 m²/g oder 110 m²/g 115 m²/g oder 120 m²/g oder 125 m²/g oder 130 m²/g oder 135 m²/g oder 140 m²/g oder 145 m²/g oder 150 m²/g oder 155 m²/g oder 160 m²/g oder 165 m²/g oder 170 m²/g oder 175 m²/g oder 180 m²/g oder 185 m²/g oder 190 m²/g oder 195 m²/g aufweisen. Außerdem kann - alternativ oder ergänzend - der mittels ICP-OES-Analyse bestimmte Massenanteil w(Niob) an der Gesamtmasse des oxidischen Niob(V) enthaltenden Materials beispielsweise auch 59 % oder 60 % oder 61 % oder 62 % oder 63 % oder 64 % oder 65 % oder 66 % oder 67 % betragen.

Gemäß einer weiteren Ausführungsvariante des zweiten porösen oxidischen Niob(V) enthaltenden Materials liegt das Material in Form eines, insbesondere wenigstens teilkristallinen, Pulvers vor.

Ein zweites poröses oxidisches Niob(V) enthaltendes Material gemäß einer oder mehreren der weiter oben beschriebenen Ausführungsformen ist insbesondere erhältlich nach einem Verfahren umfassend die folgenden Schritte:
A. Zurverfügungstellung einer wässrigen Lösung eines Nioboxalats;
B. Behandlung der wässrigen Lösung aus Schritt A. unter hydrothermalen Bedingungen;
C. Gefriertrocknung und/oder Wärmetrocknung des in Schritt B. erhaltenen Produktes.

Eine thermische Behandlung bei einer Temperatur von bis zu ca. 100 °C wird vorliegend als Trocknung bezeichnet. Dabei kann es sich um eine Gefriertrocknung und/oder um eine Wärmetrocknung bei einer Temperatur von bis ca. 100 °C, beispielsweise im Bereich von ca. 70 °C bis ca. 100 °C, handeln. Ergänzend kann die jeweilige Trocknung auch unter Vakuum erfolgen. Dem Fachmann ist bekannt, welche Maßnahmen zu ergreifen sind, um ein anorganisches poröses oxidisches Material zu trocknen, insbesondere an der Materialoberfläche anhaftendes Wasser zu entfernen.

Auf diese Weise können die zweiten porösen oxidischen Niob(V) enthaltenden Materialien vorteilhafterweise einfach, reproduzierbar, umwelt- und ressourcenschonend und vergleichsweise kostengünstig in quantitativer oder nahezu quantitativer Ausbeute und hoher Reinheit zur Verfügung gestellt werden, und zwar auch im industriellen Maßstab.

Eine vorteilhafte Ausführungsform sieht vor, dass die Zurverfügungstellung gemäß Schritt A. in Form einer Lösung in vollentsalztem Wasser erfolgt, wobei die wässrige Lösung des Nioboxalats eine übersättigte Lösung oder eine gesättigte Lösung ist. Eine andere vorteilhafte Variante sieht vor, dass die Lösung des Nioboxalats eine Massenkonzentration β (Niob) im Bereich von ca. 60 g/L bis ca. 190 g/L aufweist. Besonders einfach ist die Durchführung des Verfahrens, wenn eine kommerziell erhältliche wässrige Nioboxalat-Lösung eingesetzt wird, insbesondere die wässrige Nioboxalat-Lösung der TANIOBIS GmbH (NOx-Lösung). Unabhängig davon, ob eine kommerziell erhältliche wässrige Nioboxalat-Lösung verwendet wird oder nicht, kann vorgesehen sein, zusätzlich Oxalsäure und/oder Ammoniumoxalat zu der jeweiligen wässrigen Nioboxalat-Lösung hinzuzufügen. Wird Ammoniumoxalat hinzugefügt, so enthält das poröse oxidische Niob(V) enthaltende Material unmittelbar nach seiner Herstellung, also ohne Durchführung einer thermischen Behandlung, Stickstoff.

Nach einer weiteren Ausführungsform ist in Schritt B. eine Stoffmengenkonzentration c(Nb⁵⁺) von wenigstens 0,05 mol/L und von höchstens 0,5 mol/L vorgesehen, vorteilhaft von wenigstens 0,1 mol/L und von höchstens 0,5 mol/L, vorteilhafter von wenigstens 0,15 mol/L und von höchstens 0,5 mol/L, noch vorteilhafter von wenigstens 0,2 mol/L und von höchstens 0,5 mol/L, insbesondere von wenigstens 0,3 mol/L und von höchstens 0,5 mol/L, beispielsweise von 0,31 mol/L oder von 0,32 mol/L oder von 0,33 mol/L oder von 0,34 mol/L oder von 0,35 mol/L oder von 0,36 mol/L oder von 0,37 mol/L oder von 0,38 mol/L oder von 0,39 mol/L oder von 0,4 mol/L oder von 0,41 mol/L oder von 0,42 mol/L oder von 0,43 mol/L oder von 0,44 mol/L oder von 0,45 mol/L oder von 0,46 mol/L oder von 0,47 mol/L oder von 0,48 mol/L oder von 0,49 mol/L.

Die Behandlung gemäß Schritt B. kann auch eine Verdünnung der wässrigen Lösung aus Schritt A. umfassen.

In einer anderen vorteilhaften Variante wird die gemäß Schritt B. vorgesehene Behandlung unter hydrothermalen Bedingungen in einem gasdicht verschließbaren Druckbehälter (Autoklav) durchgeführt. Dabei beträgt eine Innentemperatur des Autoklavs vorteilhafterweise wenigstens 160 °C. Noch vorteilhafter ist es, wenn die Innentemperatur des Autoklavs wenigstens 160 °C und höchstens 240 °C beträgt. Insbesondere liegt die Innentemperatur des Autoklavs oberhalb von 160 °C und beträgt höchstens 235 °C. Beispielsweise liegt die Innentemperatur des Autoklavs im Bereich von 160 °C bis 230 °C oder im Bereich von 160 °C bis 225 °C. Besonders vorteilhaft ist es, wenn die Innentemperatur des Autoklavs im Bereich von 165 °C bis 220 °C liegt. Dann kann die Innentemperatur des Autoklavs beispielsweise auch 170 °C oder 175 °C oder 180 °C oder 185 °C oder 190 °C oder 195 °C oder 200 °C oder 205 °C oder 210 °C oder 215 °C betragen.

Eine weitere Ausführungsform sieht vor, dass eine Reaktionszeit wenigstens drei Stunden und höchstens zehn Stunden beträgt, vorteilhaft wenigstens vier Stunden und höchstens neun Stunden, insbesondere wenigstens fünf Stunden und höchstens acht Stunden, beispielsweise sechs Stunden oder sieben Stunden.

Hinsichtlich weiterer Vorteile eines hier vorgestellten zweiten porösen oxidischen Niob(V) enthaltenden Materials, erhalten oder erhältlich nach einem Verfahren zur Herstellung solcher Materialien gemäß einer oder mehreren der vorgenannten Ausführungsformen, wird auf die Vorteile verwiesen, welche für das weiter oben beschriebene zweite poröse oxidische Niob(V) enthaltende Material genannt sind.

Die Aufgabe wird zudem gelöst durch ein poröses oxidisches Tantal(V) enthaltendes Material, welches ein Nichtleiter ist und, insbesondere bis zu einer Temperatur von 400 °C, temperaturstabil oder im Wesentlichen temperaturstabil ist,
wobei das oxidische Tantal(V) enthaltende Material
i. gemäß Elementaranalyse Wasserstoff (H) enthält, wobei
   ein Massenanteil w(Wasserstoff) an der Gesamtmasse des oxidischen Tantal(V) enthaltenden Materials insbesondere wenigstens 0,5 % und höchstens 2 % beträgt;
ii. gemäß Elementaranalyse Stickstoff (N) enthält,
   wobei ein Massenanteil w(Stickstoff) an der Gesamtmasse des oxidischen Tantal(V) enthaltenden Materials insbesondere wenigstens 0,5 % und höchstens 3 % beträgt, oder frei von Stickstoff (N) ist; und
iii. nach einer thermischen Behandlung, insbesondere einer Kalzination, vorteilhaft einer Kalzination unter Luftatmosphäre, für einen Zeitraum von 1 Stunde bei einer Temperatur von 400 °C eine mittels der BET-Methode bestimmte spezifische Oberfläche von wenigstens 150 m²/g und von höchstens 250 m²/g aufweist.

Für das hier vorgestellte poröse oxidische Tantal(V) enthaltende Material gelten die im Zusammenhang mit dem weiter oben beschriebenen ersten porösen oxidischen Niob(V) enthaltenden Material angegebenen Definitionen und Informationen betreffend die Ausdrücke "Nichtleiter", "temperaturstabil", "im Wesentlichen temperaturstabil", "thermische Behandlung", "hohe spezifische Oberfläche", "hoher BET-Wert", "sehr hohe spezifische Oberfläche" und "sehr hoher BET-Wert" analog.

Das hier vorgestellte poröse oxidische Tantal(V) enthaltende Material ist - ebenso wie das weiter oben beschriebene erste poröse oxidische Niob(V) enthaltende Material - mittels einer einfach und kostengünstig durchführbaren Hydrothermalsynthese herstellbar. Die Synthese erfolgt ausgehend von einer Tantaloxalat-Lösung. Besonders einfach ist es, eine kommerziell erhältliche wässrige Tantaloxalat-Lösung einzusetzen, insbesondere die wässrige Nioboxalat-Lösung der TANIOBIS GmbH (TOx-Lösung). Mithin ist das hier vorgestellte poröse oxidische Tantal(V) enthaltende Material *per* se, d. h. unmittelbar nach seiner Herstellung, also ohne Durchführung einer thermischen Behandlung, und somit auch gemäß Elementaranalyse frei von Stickstoff. Unabhängig davon, ob eine kommerziell erhältliche wässrige Tantaloxalat-Lösung verwendet wird oder nicht, kann vorgesehen sein, zusätzlich Oxalsäure und/oder Ammoniumoxalat zu der jeweiligen wässrigen Tantaloxalat-Lösung hinzuzufügen. Wird Ammoniumoxalat hinzugefügt, so enthält das poröse oxidische Tantal(V) enthaltende Material unmittelbar nach seiner Herstellung, also ohne Durchführung einer thermischen Behandlung, Stickstoff.

Der Ausdruck "gemäß Elementaranalyse frei von Stickstoff (N)" bedeutet, dass a) das untersuchte erste poröse oxidische Niob(V) enthaltende Material keinen Stickstoff enthält oder b) der Massenanteil w(Stickstoff) des untersuchten ersten porösen oxidischen Niob(V) enthaltenden Materials unterhalb der Nachweisgrenze des für die Elementaranalyse eingesetzten Gerätes (Nachweisgrenze: 0,1 Gew.-%) liegt.

Besonders vorteilhaft ist, dass die Eigenschaften des hier vorgestellten porösen oxidischen Tantal(V) enthaltenden Materials je nach geplantem Verwendungszweck innerhalb gewisser Grenzen einstellbar sind. Dies gilt insbesondere für die spezifische Oberfläche, welche in vielen Anwendungsbereichen eine entscheidende Rolle spielen kann. Sie kann durch die für die thermische Behandlung gewählten Bedingungen, insbesondere durch die Wahl der Innentemperatur des Muffelofens oder des Trockenschranks für jedes oxidische Tantal(V) enthaltende Material innerhalb gewisser Grenzen eingestellt werden. Naturgemäß ist die spezifische Oberfläche eines oxidischen Materials nach (Gefrier-)Trocknung am größten und nimmt mit zunehmender Temperatur der thermischen Behandlung ab. So kann ein hier beschriebenes poröses oxidisches Tantal(V) enthaltendes Material nach (Gefrier-)Trocknung beispielsweise eine spezifische Oberfläche im Bereich von mehr als 150 m²/g bis 300 m²/g aufweisen. Durch eine weitere thermische Behandlung, insbesondere durch eine Kalzinierung, vorteilhaft unter Luftatmosphäre, kann eine vordefinierte spezifische Oberfläche eingestellt werden. Es können also maßgeschneiderte, insbesondere betreffend die spezifische Oberfläche, poröse oxidische Tantal(V) enthaltende Materialien zur Verfügung gestellt werden.

Ein poröses oxidisches Tantal(V) enthaltendes Material des hier vorgestellten Typs kann beispielsweise einen Massenanteil w(Wasserstoff) von 0,6 % oder 0,7 % oder 0,8 % oder 0,9 % oder 1 % oder 1,1 % oder 1,2 % oder 1,3 % oder 1,4 % oder 1,5 % oder 1,6 % oder 1,7 % oder 1,8 % oder 1,9 % aufweisen.

Der Massenanteil w(Stickstoff) kann beispielsweise 0,6 % oder 0,7 % oder 0,8 % oder 0,9 % oder 1 % oder 1,1 % oder 1,2 % oder 1,3 % oder 1,4 % oder 1,5 % oder 1,6 % oder 1,7 % oder 1,8 % oder 1,9 % oder 2 % oder 2,1 % oder 2,2 % oder 2,3 % oder 2,4 % oder 2,5 % oder 2,6 % oder 2,7 % oder 2,8 % oder 2,9 % betragen.

Es sei darauf hingewiesen, dass sich Merkmale, welche ohne Temperaturangabe genannt sind, hier und im Folgenden auf das jeweilige isolierte und getrocknete poröse oxidische Tantal(V) enthaltende Material beziehen. Ein Beispiel für ein solches Merkmal ist das weiter oben für das poröse oxidische Tantal(V) enthaltende Material genannte Merkmal "gemäß Elementaranalyse Wasserstoff (H) enthält, wobei ein Massenanteil w(Wasserstoff) wenigstens 0,5 % und höchstens 2 % beträgt".

Ein für einen Zeitraum von 1 Stunde bei einer Temperatur von 400 °C thermisch behandeltes, insbesondere unter Luftatmosphäre kalziniertes, Tantal(V) enthaltendes Material des hier genannten Typs kann auch eine mittels der BET-Methode bestimmte spezifische Oberfläche von beispielsweise 155 m²/g oder 160 m²/g oder 165 m²/g oder 170 m²/g oder 175 m²/g oder 180 m²/g oder 185 m²/g oder 190 m²/g oder 195 m²/g oder 200 m²/g oder 205 m²/g oder 210 m²/g oder 215 m²/g oder 220 m²/g oder 225 m²/g oder 230 m²/g oder 235 m²/g oder 240 m²/g oder 245 m²/g aufweisen.

Überraschenderweise wurden für die hier beschriebenen oxidischen Tantal(V) enthaltenden Materialien nach Trocknung, beispielsweise Gefriertrocknung, sehr hohe BET-Werte bestimmt, nämlich von mehr als 150 m²/g bis 300 m²/g, üblicherweise von mehr als 200 m²/g oder von mehr als 220 m²/g, beispielsweise ca. 250 m²/g. Sogar nach einer weiteren thermischen Behandlung, insbesondere einer Kalzination unter Luftatmosphäre, für einen Zeitraum von 1 Stunde bei einer Temperatur von 800 °C wurden noch hohe BET-Werte bestimmt, nämlich zwischen 20 m²/g und 30 m²/g, beispielsweise 25 m²/g. Letzteres ist insbesondere deswegen überraschend, weil
a) das getrocknete, beispielsweise gefriergetrocknete, und bei 800 °C kalzinierte oxidische Tantal(V) enthaltende Material, welches eine BET-Oberfläche von 25 m²/g aufwies, gemäß ICP-OES-Analyse nach Trocknung, beispielsweise Gefriertrocknung, einen Massenanteil w(Tantal) an der Gesamtmasse des oxidischen Tantal(V) enthaltenden Materials von ca. 73 % enthielt,
   und im Vergleich dazu
b) Tantal(V)-oxid (Ta₂O₅) einen Massenanteil w(Tantal) von 81,9 % aufweist, wobei die spezifische Oberfläche - analog zu Ta₂O₅ - typischerweise weniger als 10 m²/g betragen dürfte. Dies gilt jedenfalls dann, wenn das Ta₂O₅ mittels einer einfach und kostengünstig durchführbaren nasschemischen Fällungsreaktion und nicht mittels eines arbeits- und kostenintensiven Sol-Gel-Verfahrens hergestellt wird (Synthese von Nb₂O₅-Nanopartikeln mittels Sol-Gel-Verfahren, z. B.: N. Uekawa, T. Kudo, F. Mori, Y. Jun Wu, K. Kakegawa, J. Colloid Interface Sci. 2003, 264, 378 - 384).

Eine weitere Ausführungsform des hier vorgestellten ersten porösen oxidischen Tantal(V) enthaltenden Materials sieht vor, dass das oxidische Niob(V) enthaltende Material eine oder mehrere der folgenden Eigenschaften aufweist:
a. der Massenanteil w(Wasserstoff) an der Gesamtmasse des oxidischen Tantal(V) enthaltenden Materials beträgt gemäß Elementaranalyse wenigstens 1 % und höchstens 1,5 %;
b. der Massenanteil w(Stickstoff) an der Gesamtmasse des oxidischen Tantal(V) enthaltenden Materials beträgt gemäß Elementaranalyse wenigstens 1 % und höchstens 1,5 %;
c. ein Massenanteil w(Niob) an der Gesamtmasse des oxidischen Tantal(V) enthaltenden Materials beträgt gemäß ICP-OES-Analyse wenigstens 67 % und höchstens 77 %.

Dann kann ein poröses oxidisches Tantal(V) enthaltendes Material des hier vorgestellten Typs beispielsweise einen Massenanteil w(Wasserstoff) von 1,1 % oder 1,2 % oder 1,3 % oder 1,4 % aufweisen.

Der Massenanteil w(Stickstoff) kann ebenfalls beispielsweise 1,1 % oder 1,2 % oder 1,3 % oder 1,4 % betragen.

Der mittels ICP-OES-Analyse bestimmte Massenanteil w(Tantal) an der Gesamtmasse des porösen oxidischen Tantal(V) enthaltenden Materials kann also beispielsweise 68 % oder 69 % oder 70 % oder 71 % oder 72 % oder 73 % oder 74 % oder 75 % oder 76 % betragen.

In einer anderen vorteilhaften Ausführungsform des hier beschriebenen oxidischen Tantal(V) enthaltenden Materials beträgt der Massenanteil w(Tantal) an der Gesamtmasse des Tantal(V) enthaltenden Materials gemäß ICP-OES-Analyse wenigstens 68 % und höchstens 77 % oder wenigstens 69 % und höchstens 77 % oder wenigstens 70 % und höchstens 77 %. Der Massenanteil w(Tantal) an der Gesamtmasse des oxidischen Tantal(V) enthaltenden Materials kann dann beispielsweise auch 71 % oder 72 % oder 73 % oder 74 % oder 75 % oder 76 % betragen.

Im Falle eines isolierten und getrockneten, insbesondere gefriergetrockneten, porösen oxidischen Tantal(V) enthaltenden Materials des hier vorgestellten Typs betrug der Massenanteil w(Tantal) an der Gesamtmasse gemäß ICP-OES-Analyse 73,3 %.

Es sei darauf hingewiesen, dass der Massenanteil w(Tantal) eines getrockneten, insbesondere gefriergetrockneten, porösen oxidischen Tantal(V) enthaltenden Materials des hier vorgestellten Typs nachweislich unterhalb des Massenanteils w(Tantal) von Ta₂O₅ liegt, welcher 81,9 % beträgt. Mithin kann ausgeschlossen werden, dass ein ausschließlich getrocknetes, insbesondere gefriergetrocknetes Material vom hier beschriebenen Typ aus Ta₂O₅ besteht, nicht aber, dass in einem solchen Material Ta₂O₅ enthalten sein kann.

Eine andere Variante des hier beschriebenen porösen oxidischen Tantal(V) enthaltenden Materials sieht vor, dass das oxidische Tantal(V) enthaltende Material nach der thermischen Behandlung, insbesondere einer Kalzination, vorteilhaft einer Kalzination unter Luftatmosphäre, für einen Zeitraum von 1 Stunde bei einer Temperatur von 400 °C wenigstens eine der folgenden Eigenschaften aufweist:
a. enthält gemäß Elementaranalyse Wasserstoff (H),
   wobei der Massenanteil w(Wasserstoff) an der Gesamtmasse des oxidischen Tantal(V) enthaltenden Materials insbesondere wenigstens 0,8 % und höchstens 1,2 % beträgt;
b. ist gemäß Elementaranalyse frei von Stickstoff (N).

Der Ausdruck "gemäß Elementaranalyse frei von Stickstoff (N)" ist für das poröse oxidische Tantal(V) enthaltende Material bereits weiter oben definiert.

In einer alternative oder ergänzenden Ausführungsform des hier vorgestellten porösen oxidischen Tantal(V) enthaltenden Materials weist das oxidische Tantal(V) enthaltende Material nach einer thermischen Behandlung, insbesondere einer Kalzination, vorteilhaft einer Kalzination unter Luftatmosphäre, für einen Zeitraum von 1 Stunde bei einer Temperatur von 600 °C wenigstens eine der folgenden Eigenschaften aufweist:
a. enthält gemäß Elementaranalyse Wasserstoff (H),
   wobei der Massenanteil w(Wasserstoff) an der Gesamtmasse des oxidischen Tantal(V) enthaltenden Materials insbesondere wenigstens 0,5 % und höchstens 1 % beträgt;
b. ist gemäß Elementaranalyse frei von Stickstoff (N);
c. die mittels der BET-Methode bestimmte spezifische Oberfläche beträgt wenigstens 100 m²/g und höchstens 200 m²/g.

Ein für einen Zeitraum von 1 Stunde bei einer Temperatur von 600 °C thermisch behandeltes, insbesondere unter Luftatmosphäre kalziniertes, oxidisches Tantal(V) enthaltendes Material des hier vorgestellten Typs kann also beispielsweise eine mittels der BET-Methode bestimmte spezifische Oberfläche von 105 m²/g oder 110 m²/g 115 m²/g oder 120 m²/g oder 125 m²/g oder 130 m²/g oder 135 m²/g oder 140 m²/g oder 145 m²/g oder 150 m²/g oder 155 m²/g oder 160 m²/g oder 165 m²/g oder 170 m²/g oder 175 m²/g oder 180 m²/g oder 185 m²/g oder 190 m²/g oder 195 m²/g aufweisen.

Gemäß einer weiteren Ausführungsvariante des porösen oxidischen Tantal(V) enthaltenden Materials liegt das Material in Form eines, insbesondere wenigstens teilkristallinen, Pulvers vor.

Ein poröses oxidisches Tantal(V) enthaltendes Material gemäß einer oder mehreren der weiter oben beschriebenen Ausführungsformen ist insbesondere erhalten oder erhältlich nach einem Verfahren umfassend die folgenden Schritte:
A. Zurverfügungstellung einer wässrigen Lösung eines Tantaloxalats;
B. Behandlung der wässrigen Lösung aus Schritt A. unter hydrothermalen Bedingungen;
C. Gefriertrocknung und/oder Wärmetrocknung des in Schritt B. erhaltenen Produktes.

Eine thermische Behandlung bei einer Temperatur von bis zu ca. 100 °C wird vorliegend als Trocknung bezeichnet. Dabei kann es sich um eine Gefriertrocknung und/oder um eine Wärmetrocknung bei einer Temperatur von bis ca. 100 °C, beispielsweise im Bereich von ca. 70 °C bis ca. 100 °C, handeln. Ergänzend kann die jeweilige Trocknung auch unter Vakuum erfolgen. Dem Fachmann ist bekannt, welche Maßnahmen zu ergreifen sind, um ein anorganisches poröses oxidisches Material zu trocknen, insbesondere an der Materialoberfläche anhaftendes Wasser zu entfernen.

Auf diese Weise können die porösen oxidischen Tantal(V) enthaltenden Materialien vorteilhafterweise einfach, reproduzierbar, umwelt- und ressourcenschonend und vergleichsweise kostengünstig in quantitativer oder nahezu quantitativer Ausbeute und hoher Reinheit zur Verfügung gestellt werden, und zwar auch im industriellen Maßstab.

Eine vorteilhafte Ausführungsform sieht vor, dass die Zurverfügungstellung gemäß Schritt A. in Form einer Lösung in vollentsalztem Wasser erfolgt, wobei die wässrige Lösung des Tantaloxalats eine übersättigte Lösung oder eine gesättigte Lösung ist. Eine andere vorteilhafte Variante sieht vor, dass die Lösung des Tantaloxalats eine Massenkonzentration β(Tantal) im Bereich von ca. 120 g/L bis ca. 170 g/L aufweist. Besonders einfach ist die Durchführung des Verfahrens, wenn eine kommerziell erhältliche wässrige Tantaloxalat-Lösung eingesetzt wird, insbesondere die wässrige Tantaloxalat-Lösung der TANIOBIS GmbH (TOx-Lösung). Unabhängig davon, ob eine kommerziell erhältliche wässrige Tantaloxalat-Lösung verwendet wird oder nicht, kann vorgesehen sein, zusätzlich Oxalsäure und/oder Ammoniumoxalat zu der jeweiligen wässrigen Tantaloxalat-Lösung hinzuzufügen. Wird Ammoniumoxalat hinzugefügt, so enthält das poröse oxidische Tantal(V) enthaltende Material unmittelbar nach seiner Herstellung, also ohne Durchführung einer thermischen Behandlung, Stickstoff.

Nach einer weiteren Ausführungsform ist in Schritt B. eine Stoffmengenkonzentration c(Ta⁵⁺) von wenigstens 0,05 mol/L und von höchstens 0,5 mol/L vorgesehen, vorteilhaft von wenigstens 0,1 mol/L und von höchstens 0,5 mol/L, vorteilhafter von wenigstens 0,15 mol/L und von höchstens 0,5 mol/L, noch vorteilhafter von wenigstens 0,2 mol/L und von höchstens 0,5 mol/L, insbesondere von wenigstens 0,3 mol/L und von höchstens 0,5 mol/L, beispielsweise von 0,31 mol/L oder von 0,32 mol/L oder von 0,33 mol/L oder von 0,34 mol/L oder von 0,35 mol/L oder von 0,36 mol/L oder von 0,37 mol/L oder von 0,38 mol/L oder von 0,39 mol/L oder von 0,4 mol/L oder von 0,41 mol/L oder von 0,42 mol/L oder von 0,43 mol/L oder von 0,44 mol/L oder von 0,45 mol/L oder von 0,46 mol/L oder von 0,47 mol/L oder von 0,48 mol/L oder von 0,49 mol/L.

Die Behandlung gemäß Schritt B. kann auch eine Verdünnung der wässrigen Lösung aus Schritt A. umfassen.

In einer anderen vorteilhaften Variante wird die gemäß Schritt B. vorgesehene Behandlung unter hydrothermalen Bedingungen in einem gasdicht verschließbaren Druckbehälter (Autoklav) durchgeführt. Dabei beträgt eine Innentemperatur des Autoklavs vorteilhafterweise wenigstens 160 °C. Noch vorteilhafter ist es, wenn die Innentemperatur des Autoklavs wenigstens 160 °C und höchstens 240 °C beträgt. Insbesondere liegt die Innentemperatur des Autoklavs oberhalb von 160 °C und beträgt höchstens 235 °C. Beispielsweise liegt die Innentemperatur des Autoklavs im Bereich von 160 °C bis 230 °C oder im Bereich von 160 °C bis 225 °C. Besonders vorteilhaft ist es, wenn die Innentemperatur des Autoklavs im Bereich von 165 °C bis 220 °C liegt. Dann kann die Innentemperatur des Autoklavs beispielsweise auch 170 °C oder 175 °C oder 180 °C oder 185 °C oder 190 °C oder 195 °C oder 200 °C oder 205 °C oder 210 °C oder 215 °C betragen.

Eine weitere Ausführungsform sieht vor, dass eine Reaktionszeit wenigstens drei Stunden und höchstens zehn Stunden beträgt, vorteilhaft wenigstens vier Stunden und höchstens neun Stunden, insbesondere wenigstens fünf Stunden und höchstens acht Stunden, beispielsweise sechs Stunden oder sieben Stunden.

Hinsichtlich weiterer Vorteile eines hier vorgestellten porösen oxidischen Tantal(V) enthaltenden Materials, erhalten oder erhältlich nach einem Verfahren zur Herstellung solcher Materialien gemäß einer oder mehreren der vorgenannten Ausführungsformen, wird auf die Vorteile verwiesen, welche für das weiter oben beschriebene poröse oxidische Tantal(V) enthaltende Material genannt sind.

Die Aufgabe wird außerdem gelöst durch ein poröses oxidisches Niob(V) und Tantal(V) enthaltendes Material gemäß der allgemeinen Formel Nb_{1-y}Ta_{y}Ox, wobei 0 < y < 1 ist, welches ein Nichtleiter ist und, insbesondere bis zu einer Temperatur von 400 °C, temperaturstabil oder im Wesentlichen temperaturstabil ist,
wobei das oxidische Niob(V) und Tantal(V) enthaltende Material
i. gemäß Elementaranalyse Wasserstoff (H) enthält, wobei ein Massenanteil w(Wasserstoff) an der Gesamtmasse des oxidischen Niob(V) und Tantal(V) enthaltenden Materials wenigstens 0,5 % und höchstens 2 % beträgt;
ii. gemäß Elementaranalyse Stickstoff (N) enthält,
   wobei ein Massenanteil w(Stickstoff) an der Gesamtmasse des oxidischen Niob(V) und Tantal(V) enthaltenden Materials wenigstens 0,5 % und höchstens 3 % beträgt, oder frei von Stickstoff (N) ist, und
iii. nach einer thermischen Behandlung, insbesondere einer Kalzination, vorteilhaft einer Kalzination unter Luftatmosphäre, für einen Zeitraum von 1 Stunde bei einer Temperatur von 400 °C eine mittels der BET-Methode bestimmte spezifische Oberfläche von wenigstens 150 m²/g und von höchstens 350 m²/g aufweist.

Bezüglich der allgemeinen Formel Nb_{1-y}Ta_{y}Ox ist ausschließlich das molare Verhältnis von Niob zu Tantal bekannt und daher definiert. Dabei soll "Ox" verdeutlichen, dass es sich um ein anorganisches Sauerstoff enthaltendes Material handelt, welches Sauerstoff in der Oxidationszahl -II enthält. Zudem soll durch die Angabe "Ox" angezeigt werden, dass das jeweilige Material nicht die Zusammensetzung eines stöchiometrischen Niob-Tantal-Mischoxids aufweist. Vielmehr sind nach Isolierung und Trocknung neben Niob(V), Tantal(V) und Sauerstoff(II) üblicherweise noch Wasserstoff (H) und Stickstoff (N) enthalten, insbesondere in Form von H₂O-Molekülen, Hydroxidionen (OH⁻) und Ammoniumionen (NH₄⁺).

Es sei zudem angemerkt, dass es sich bei dem hier vorgestellten porösen oxidischen Niob(V) und Tantal(V) enthaltenden Material nicht um ein Stoffgemisch, welches aus Niob(V)-oxid (Nb₂O₅) und Tantal(V)-oxid (Ta₂O₅) besteht, handelt. Ein poröses oxidisches Niob(V) und Tantal(V) enthaltendes Material des hier beschriebenen Typs kann jedoch Niob(V)-oxid (Nb₂O₅) und/oder Tantal(V)-oxid (Ta₂O₅) enthalten.

Die im Zusammenhang mit dem weiter oben beschriebenen ersten porösen oxidischen Niob(V) enthaltenden Material angegebenen Definitionen und Informationen betreffend die Ausdrücke "Nichtleiter", "temperaturstabil", "im Wesentlichen temperaturstabil", "thermische Behandlung", "hohe spezifische Oberfläche", "hoher BET-Wert", "sehr hohe spezifische Oberfläche" und "sehr hoher BET-Wert" gelten analog für die hier vorgestellten porösen oxidischen Niob(V) und Tantal(V) enthaltenden Materialien.

Das hier vorgestellte poröse oxidische Niob(V) und Tantal(V) enthaltende Material ist - ebenso wie das weiter oben beschriebene erste poröse oxidische Niob(V) enthaltende Material - mittels einer einfach und kostengünstig durchführbaren Hydrothermalsynthese herstellbar. Als besonders vorteilhaft hat es sich erwiesen, a) Ammoniumnioboxalat, Oxalsäure und/oder Ammoniumoxalat zu verwenden, wobei die vorgenannten Verbindungen unabhängig voneinander als ein Hydrat vorliegen können, und eine wässrige Tantaloxalat-Lösung, oder b) eine wässrige Nioboxalat-Lösung und eine wässrige Tantaloxalat-Lösung zu verwenden. Besonders einfach ist die Synthese durchführbar, wenn a) ein kommerziell erhältliches Gemisch, enthaltend Ammoniumnioboxalat, Oxalsäure und/oder Ammoniumoxalat, eingesetzt wird, insbesondere das Produkt NAmOx (Niobammoniumoxalat, TANIOBIS GmbH), und eine kommerziell erhältliche wässrige Tantaloxalat-Lösung, insbesondere von der TANIOBIS GmbH (TOx-Lösung), verwendet werden oder b) eine kommerziell erhältliche wässrige Nioboxalat-Lösung, insbesondere die von der TANIOBIS GmbH (NOx-Lösung), und eine kommerziell erhältliche wässrige Tantaloxalat-Lösung, insbesondere von der TANIOBIS GmbH (TOx-Lösung). Unabhängig davon, ob eine kommerziell erhältliche wässrige Nioboxalat-Lösung und/oder eine kommerziell erhältliche Tantaloxalat-Lösung verwendet wird oder nicht, kann vorgesehen sein, zusätzlich Oxalsäure und/oder Ammoniumoxalat zu der jeweiligen wässrigen Tantaloxalat-Lösung und/oder wässrigen Nioboxalat-Lösung hinzuzufügen. Wird Ammoniumoxalat hinzugefügt, so enthält das poröse oxidische Tantal(V) enthaltende Material unmittelbar nach seiner Herstellung, also ohne Durchführung einer thermischen Behandlung, Stickstoff.

Besonders vorteilhaft ist, dass die Eigenschaften des hier vorgestellten oxidischen Niob(V) und Tantal(V) enthaltenden Materials gemäß der allgemeinen Formel Nb_{1-y}Ta_{y}Ox, wobei 0 < y < 1 ist, je nach geplantem Verwendungszweck innerhalb gewisser Grenzen einstellbar sind. Dies gilt insbesondere für die spezifische Oberfläche, welche in vielen Anwendungsbereichen eine entscheidende Rolle spielen kann. Sie kann durch die für die thermische Behandlung gewählten Bedingungen, insbesondere durch die Wahl der Innentemperatur des Muffelofens oder des Trockenschranks für jedes oxidische Niob(V) und Tantal(V) enthaltende Material innerhalb gewisser Grenzen eingestellt werden. Naturgemäß ist die spezifische Oberfläche eines oxidischen Materials nach (Gefrier-)Trocknung am größten und nimmt mit zunehmender Temperatur der thermischen Behandlung ab. So kann ein hier beschriebenes poröses oxidisches Niob(V) und Tantal(V) enthaltenden Material nach (Gefrier-)Trocknung beispielsweise eine spezifische Oberfläche im Bereich von mehr als 150 m²/g bis 360 m²/g aufweisen. Durch eine weitere thermische Behandlung, insbesondere durch eine Kalzinierung, vorteilhaft unter Luftatmosphäre, kann eine vordefinierte spezifische Oberfläche eingestellt werden. Es können also maßgeschneiderte, insbesondere betreffend die spezifische Oberfläche, poröse oxidische Niob(V) und Tantal(V) enthaltende Materialien zur Verfügung gestellt werden.

Ein poröses oxidisches Niob(V) und Tantal(V) enthaltendes Material des hier vorgestellten Typs kann beispielsweise einen Massenanteil w(Wasserstoff) von 0,6 % oder 0,7 % oder 0,8 % oder 0,9 % oder 1 % oder 1,1 % oder 1,2 % oder 1,3 % oder 1,4 % oder 1,5 % oder 1,6 % oder 1,7 % oder 1,8 % oder 1,9 % aufweisen.

Der Massenanteil w(Stickstoff) kann beispielsweise 0,6 % oder 0,7 % oder 0,8 % oder 0,9 % oder 1 % oder 1,1 % oder 1,2 % oder 1,3 % oder 1,4 % oder 1,5 % oder 1,6 % oder 1,7 % oder 1,8 % oder 1,9 % oder 2 % oder 2,1 % oder 2,2 % oder 2,3 % oder 2,4 % oder 2,5 % oder 2,6 % oder 2,7 % oder 2,8 % oder 2,9 % betragen.

Gemäß Elementaranalyse kann ein poröses oxidisches Niob(V) und Tantal(V) enthaltendes Material dieses Typs zusätzlich Kohlenstoff (C) enthalten, wobei ein Massenanteil w(Kohlenstoff) höchstens 4 % beträgt, insbesondere ≥ 0,1 % und ≤ 4 % oder ≥ 0,1 % und ≤ 3,5 %, beispielsweise höchstens 3,2 % beträgt. In der überwiegenden Zahl der untersuchten Proben dieses Materialtyps betrug der Massenanteil w(Kohlenstoff) gemäß Elementaranalyse < 0,1 % und lag somit unterhalb der Nachweisgrenze des für die Elementaranalyse eingesetzten Gerätes.

Es sei darauf hingewiesen, dass sich Merkmale, welche ohne Temperaturangabe genannt sind, hier und im Folgenden auf das jeweilige isolierte und getrocknete poröse oxidische Niob(V) und Tantal(V) enthaltende Material beziehen. Ein Beispiel für ein solches Merkmal ist das weiter oben für das poröse oxidische Niob(V) und Tantal(V) enthaltende Material genannte Merkmal "gemäß Elementaranalyse Wasserstoff (H) enthält, wobei ein Massenanteil w(Wasserstoff) wenigstens 0,5 % und höchstens 2 % beträgt".

Ein für einen Zeitraum von 1 Stunde bei einer Temperatur von 400 °C thermisch behandeltes, insbesondere unter Luftatmosphäre kalziniertes, Niob(V) und Tantal(V) enthaltendes Material des hier vorgestellten Typs kann auch eine mittels der BET-Methode bestimmte spezifische Oberfläche von beispielsweise 155 m²/g oder 160 m²/g oder 165 m²/g oder 170 m²/g oder 175 m²/g oder 180 m²/g oder 185 m²/g oder 190 m²/g oder 195 m²/g oder 200 m²/g oder 205 m²/g oder 210 m²/g oder 215 m²/g oder 220 m²/g oder 225 m²/g oder 230 m²/g oder 235 m²/g oder 240 m²/g oder 245 m²/g oder 250 m²/g oder 255 m²/g oder 260 m²/g oder 265 m²/g oder 270 m²/g oder 275 m²/g oder 280 m²/g oder 285 m²/g oder 290 m²/g oder 295 m²/g oder 300 m²/g oder 305 m²/g oder 310 m²/g oder 315 m²/g oder 320 m²/g oder 325 m²/g oder 330 m²/g oder 335 m²/g oder 340 m²/g oder 345 m²/g aufweisen.

Gemäß einer Ausführungsvariante des hier vorgestellten porösen oxidischen Niob(V) und Tantal(V) enthaltenden Materials weist das oxidische Niob(V) und Tantal(V) enthaltende Material nach einer thermischen Behandlung, insbesondere einer Kalzination, vorteilhaft einer Kalzination unter Luftatmosphäre, für einen Zeitraum von 1 Stunde bei einer Temperatur von 400 °C eine oder mehrere der folgenden Eigenschaften auf:
a. enthält gemäß Elementaranalyse Wasserstoff (H)
   wobei ein Massenanteil w(Wasserstoff) an der Gesamtmasse des oxidischen Niob(V) und Tantal(V) enthaltenden Materials insbesondere wenigstens 0,8 % und höchstens 1,2 % beträgt;
b. ist gemäß Elementaranalyse frei von Stickstoff (N);
c. die spezifische Oberfläche beträgt wenigstens 150 m²/g und höchstens 280 m²/g.

Der Ausdruck "gemäß Elementaranalyse frei von Stickstoff (N)" bedeutet, dass a) das untersuchte erste poröse oxidische Niob(V) enthaltende Material keinen Stickstoff enthält oder b) der Massenanteil w(Stickstoff) des untersuchten ersten porösen oxidischen Niob(V) enthaltenden Materials unterhalb der Nachweisgrenze des für die Elementaranalyse eingesetzten Gerätes (Nachweisgrenze: 0,1 Gew.-%) liegt.

Ein für einen Zeitraum von 1 Stunde bei einer Temperatur von 400 °C thermisch behandeltes, insbesondere unter Luftatmosphäre kalziniertes, Niob(V) und Tantal(V) enthaltendes Material des hier genannten Typs kann also beispielsweise auch einen Massenanteil w(Wasserstoff) an der Gesamtmasse des oxidischen Niob(V) und Tantal(V) enthaltenden Materials von 0,9 % oder 1 % oder 1,1 % aufweisen, wobei der Massenanteil w(Wasserstoff) mittels Elementaranalyse ermittelt wurde.

Die mittels der BET-Methode bestimmte spezifische Oberfläche kann beispielsweise auch 155 m²/g oder 160 m²/g oder 165 m²/g oder 170 m²/g oder 175 m²/g oder 180 m²/g oder 185 m²/g oder 190 m²/g oder 195 m²/g oder 200 m²/g oder 205 m²/g oder 210 m²/g oder 215 m²/g oder 220 m²/g oder 225 m²/g oder 230 m²/g oder 235 m²/g oder 240 m²/g oder 245 m²/g oder 250 m²/g oder 255 m²/g oder 260 m²/g oder 265 m²/g oder 270 m²/g oder 275 m²/g betragen.

Nach einer alternativen oder ergänzenden Ausführungsform weist das oxidische Niob(V) und Tantal(V) enthaltende Material nach einer thermischen Behandlung, insbesondere einer Kalzination, vorteilhaft einer Kalzination unter Luftatmosphäre, für einen Zeitraum von 1 Stunde bei einer Temperatur von 600 °C eine oder mehrere der folgenden Eigenschaften auf:
a. enthält gemäß Elementaranalyse Wasserstoff (H),
   wobei ein Massenanteil w(Wasserstoff) an der Gesamtmasse des oxidischen Niob(V) und Tantal(V) enthaltenden Materials insbesondere wenigstens 0,5 % und höchstens 1 % beträgt;
b. ist gemäß Elementaranalyse frei von Stickstoff (N);
c. die spezifische Oberfläche beträgt wenigstens 70 m²/g und höchstens 180 m²/g.

Folglich kann ein für einen Zeitraum von 1 Stunde bei einer Temperatur von 600 °C thermisch behandeltes, insbesondere unter Luftatmosphäre kalziniertes, Niob(V) und Tantal(V) enthaltendes Material des hier genannten Typs beispielsweise auch einen Massenanteil w(Wasserstoff) an der Gesamtmasse des oxidischen Niob(V) enthaltenden Materials von 0,6 % oder 0,7 % oder 0,8 % oder 0,9 % aufweisen, wobei der Massenanteil w(Wasserstoff) mittels Elementaranalyse ermittelt wurde.

Die mittels der BET-Methode bestimmte spezifische Oberfläche kann beispielsweise auch 75 m²/g oder 80 m²/g oder 85 m²/g oder 90 m²/g oder 95 m²/g oder 100 m²/g oder 105 m²/g oder 110 m²/g oder 115 m²/g oder 120 m²/g oder 125 m²/g oder 130 m²/g oder 135 m²/g oder 140 m²/g oder 145 m²/g oder 150 m²/g oder 155 m²/g oder 160 m²/g oder 165 m²/g oder 170 m²/g oder 175 m²/ betragen.

Eine vorteilhafte Ausführungsform des hier beschriebenen porösen oxidischen Niob(V) und Tantal(V) enthaltenden Materials sieht vor, dass y = 0,25 ist oder y = 0,5 ist oder y = 0,75 ist, das poröse oxidische Niob(V) und Tantal(V) enthaltende Material also die Formel Nb_{0,75}Ta_{0,25}Ox oder die Formel Nb_{0,5}Ta_{0,5}Ox oder die Formel Nb_{0,25}Ta_{0,75}Ox aufweist.

Gemäß einer weiteren Ausführungsform des porösen oxidischen Niob(V) und Tantal(V) enthaltenden Materials ist vorgesehen, dass
a. y = 0,25 ist, wobei gemäß ICP-OES-Analyse
   i. der Massenanteil w(Niob) an der Gesamtmasse des oxidischen Niob(V) und Tantal(V) enthaltenden Materials gemäß der Formel Nb_{0,75}Ta_{0,25}Ox wenigstens 30 % und höchstens 40 % beträgt, und
   ii. der Massenanteil w(Tantal) an der Gesamtmasse des oxidischen Niob(V) und Tantal(V) enthaltenden Materials gemäß der Formel Nb_{0,75}Ta_{0,25}Ox wenigstens 20 % und höchstens 30 % beträgt.
   oder
b. y = 0,5 ist, wobei gemäß ICP-OES-Analyse
   i. ein Massenanteil w(Niob) an der Gesamtmasse des oxidischen Niob(V) und Tantal(V) enthaltenden Materials gemäß der Formel Nb_{0,5}Ta_{0,5}Ox wenigstens 15 % und höchstens 25 % beträgt, und
   ii. ein Massenanteil w(Tantal) an der Gesamtmasse des oxidischen Niob(V) und Tantal(V) enthaltenden Materials gemäß der Formel Nb_{0,5}Ta_{0,5}Ox wenigstens 40 % und höchstens 50 % beträgt;
   oder
c. y = 0,75 ist, wobei gemäß ICP-OES-Analyse
   i. der Massenanteil w(Niob) an der Gesamtmasse des oxidischen Niob(V) und Tantal(V) enthaltenden Materials gemäß der Formel Nb_{0,25}Ta_{0,75}Ox wenigstens 5 % und höchstens 15 % beträgt, und
   ii. der Massenanteil w(Tantal) an der Gesamtmasse des oxidischen Niob(V) und Tantal(V) enthaltenden Materials gemäß der Formel Nb_{0,25}Ta_{0,75}Ox wenigstens 55 % und höchstens 65 % beträgt.

Der mittels ICP-OES-Analyse bestimmte Massenanteil w(Niob) an der Gesamtmasse des porösen oxidischen Niob(V) und Tantal(V) enthaltenden Materials, wobei y = 0,5 ist, kann beispielsweise auch 16 % oder 17 % oder 18 % oder 19 % oder 20 % oder 21 % oder 22 % oder 23 % oder 24 % betragen. Und der mittels ICP-OES-Analyse bestimmte w(Tantal) an der Gesamtmasse des porösen oxidischen Niob(V) und Tantal(V) enthaltenden Materials kann beispielsweise auch 41 % oder 42 % oder 43 % oder 44 % oder 45 % oder 46 % oder 47 % oder 48 % oder 49 % betragen.

Überraschenderweise wurde für ein hier vorgestelltes oxidisches Niob(V) und Tantal(V) enthaltendes Material gemäß der Formel Nb_{0,5}Ta_{0,5}Ox nach Trocknung, beispielsweise Gefriertrocknung, ein sehr hoher BET-Wert bestimmt, nämlich von mehr als 150 m²/g bis 320 m²/g, üblicherweise von mehr als 200 m²/g oder von mehr als 250 m²/g oder von mehr als 280 m²/g, beispielsweise von ca. 290 m²/g. Sogar nach einer weiteren thermischen Behandlung, insbesondere einer Kalzination unter Luftatmosphäre, für einen Zeitraum von 1 Stunde bei einer Temperatur von 800 °C wurde noch ein hoher BET-Wert bestimmt, nämlich beispielsweise von 17 m²/g.

Nach einer anderen Ausführungsform des porösen oxidischen Niob(V) und Tantal(V) enthaltenden Materials ist y = 0,5, wobei das oxidische Niob(V) und Tantal(V) enthaltende Material gemäß der Formel Nb_{0,5}Ta_{0,5}Ox nach einer thermischen Behandlung, insbesondere einer Kalzination, vorteilhaft einer Kalzination unter Luftatmosphäre, für einen Zeitraum von 1 Stunde bei einer Temperatur von 400 °C eine oder mehrere der folgenden Eigenschaften aufweist:
a. enthält gemäß Elementaranalyse Wasserstoff (H),
   wobei der Massenanteil w(Wasserstoff) an der Gesamtmasse des oxidischen Niob(V) und Tantal(V) enthaltenden Materials insbesondere wenigstens 0,8 % und höchstens 1,2 % beträgt;
b. ist gemäß Elementaranalyse frei von Stickstoff (N);
c. die spezifische Oberfläche beträgt wenigstens 180 m²/g und höchstens 280 m²/g.

Der Ausdruck "gemäß Elementaranalyse frei von Stickstoff (N)" ist für das poröse oxidische Niob(V) und Tantal(V) enthaltende Material bereits weiter oben definiert.

Ein für einen Zeitraum von 1 Stunde bei einer Temperatur von 400 °C thermisch behandeltes, insbesondere unter Luftatmosphäre kalziniertes, Niob(V) und Tantal(V) enthaltendes Material des hier genannten Typs kann beispielsweise auch eine mittels der BET-Methode bestimmte spezifische Oberfläche von beispielsweise 185 m²/g oder 190 m²/g oder 195 m²/g oder 200 m²/g oder 205 m²/g oder 210 m²/g oder 215 m²/g oder 220 m²/g oder 225 m²/g oder 230 m²/g oder 235 m²/g oder 240 m²/g oder 245 m²/g oder 250 m²/g oder 255 m²/g oder 260 m²/g oder 265 m²/g oder 270 m²/g oder 275 m²/g aufweisen.

Nach einer anderen Ausführungsform des porösen oxidischen Niob(V) und Tantal(V) enthaltenden Materials ist y = 0,5, wobei das oxidische Niob(V) und Tantal(V) enthaltende Material gemäß der Formel Nb_{0,5}Ta_{0,5}Ox nach einer thermischen Behandlung, insbesondere einer Kalzination, vorteilhaft einer Kalzination unter Luftatmosphäre, für einen Zeitraum von 1 Stunde bei einer Temperatur von 600 °C eine oder mehrere der folgenden Eigenschaften aufweist:
a. enthält gemäß Elementaranalyse Wasserstoff (H),
   wobei der Massenanteil w(Wasserstoff) an der Gesamtmasse des oxidischen Niob(V) und Tantal(V) enthaltenden Materials insbesondere wenigstens 0,5 % und höchstens 1 % beträgt;
b. ist gemäß Elementaranalyse frei von Stickstoff (N);
c. die spezifische Oberfläche beträgt wenigstens 80 m²/g und höchstens 180 m²/g.

Ein für einen Zeitraum von 1 Stunde bei einer Temperatur von 600 °C thermisch behandeltes, insbesondere unter Luftatmosphäre kalziniertes, Niob(V) und Tantal(V) enthaltendes Material des hier genannten Typs kann beispielsweise auch eine mittels der BET-Methode bestimmte spezifische Oberfläche von beispielsweise 85 m²/g oder 90 m²/g oder 95 m²/g oder 100 m²/g oder 105 m²/g oder 110 m²/g oder 115 m²/g oder 120 m²/g oder 125 m²/g oder 130 m²/g oder 135 m²/g oder 140 m²/g oder 145 m²/g oder 150 m²/g oder 155 m²/g oder 160 m²/g oder 165 m²/g oder 170 m²/g oder 175 m²/g aufweisen.

Der mittels ICP-OES-Analyse bestimmte Massenanteil w(Niob) an der Gesamtmasse des porösen oxidischen Niob(V) und Tantal(V) enthaltenden Materials, wobei y = 0,25 ist, kann beispielsweise auch 31 % oder 32 % oder 33 % oder 34 % oder 35 % oder 36 % oder 37 % oder 38 % oder 39 % betragen. Und der mittels ICP-OES-Analyse bestimmte w(Tantal) an der Gesamtmasse des porösen oxidischen Niob(V) und Tantal(V) enthaltenden Materials kann beispielsweise auch 21 % oder 22 % oder 23 % oder 24 % oder 25 % oder 26 % oder 27 % oder 28 % oder 29 % betragen.

Überraschenderweise wurden für die hier beschriebenen oxidischen Niob(V) und Tantal(V) enthaltenden Materialien gemäß der Formel Nb_{0,75}Ta_{0,25}Ox nach Trocknung, beispielsweise Gefriertrocknung, sehr hohe BET-Werte bestimmt, nämlich von mehr als 150 m²/g bis 320 m²/g, üblicherweise von mehr als 200 m²/g oder von mehr als 250 m²/g oder von mehr als 300 m²/g, beispielsweise ca. 320 m²/g. Sogar nach einer weiteren thermischen Behandlung, insbesondere einer Kalzination unter Luftatmosphäre, für einen Zeitraum von 1 Stunde bei einer Temperatur von 800 °C wurde noch ein hoher BET-Wert bestimmt, nämlich beispielsweise von 12 m²/g.

In einer weiteren Variante des porösen oxidischen Niob(V) und Tantal(V) enthaltenden Materials ist y = 0,25, wobei das oxidische Niob(V) und Tantal(V) enthaltende Material gemäß der Formel Nb_{0,75}Ta_{0,25}Ox nach einer thermischen Behandlung, insbesondere einer Kalzination, vorteilhaft einer Kalzination unter Luftatmosphäre, für einen Zeitraum von 1 Stunde bei einer Temperatur von 400 °C eine oder mehrere der folgenden Eigenschaften aufweist:
a. enthält gemäß Elementaranalyse Wasserstoff (H),
   wobei der Massenanteil w(Wasserstoff) an der Gesamtmasse des oxidischen Niob(V) und Tantal(V) enthaltenden Materials insbesondere wenigstens 0,8 % und höchstens 1,2 % beträgt;
b. ist gemäß Elementaranalyse frei von Stickstoff (N);
c. die spezifische Oberfläche beträgt wenigstens 180 m²/g und höchstens 280 m²/g.

Ein für einen Zeitraum von 1 Stunde bei einer Temperatur von 400 °C thermisch behandeltes, insbesondere unter Luftatmosphäre kalziniertes, Niob(V) und Tantal(V) enthaltendes Material des hier genannten Typs kann beispielsweise auch eine mittels der BET-Methode bestimmte spezifische Oberfläche von beispielsweise 185 m²/g oder 190 m²/g oder 195 m²/g oder 200 m²/g oder 205 m²/g oder 210 m²/g oder 215 m²/g oder 220 m²/g oder 225 m²/g oder 230 m²/g oder 235 m²/g oder 240 m²/g oder 245 m²/g oder 250 m²/g oder 255 m²/g oder 260 m²/g oder 265 m²/g oder 270 m²/g oder 275 m²/g aufweisen.

In einer noch anderen Ausführungsform des porösen oxidischen Niob(V) und Tantal(V) enthaltenden Materials ist y = 0,25, wobei das oxidische Niob(V) und Tantal(V) enthaltende Material gemäß der Formel Nb_{0,75}Ta_{0,25}Ox nach einer thermischen Behandlung, insbesondere einer Kalzination, vorteilhaft einer Kalzination unter Luftatmosphäre, für einen Zeitraum von 1 Stunde bei einer Temperatur von 600 °C eine oder mehrere der folgenden Eigenschaften aufweist:
a. enthält gemäß Elementaranalyse Wasserstoff (H),
   wobei der Massenanteil w(Wasserstoff) an der Gesamtmasse des oxidischen Niob(V) und Tantal(V) enthaltenden Materials insbesondere wenigstens 0,5 % und höchstens 1 % beträgt;
b. ist gemäß Elementaranalyse frei von Stickstoff (N);
c. die spezifische Oberfläche beträgt wenigstens 70 m²/g und höchstens 170 m²/g.

Ein für einen Zeitraum von 1 Stunde bei einer Temperatur von 600 °C thermisch behandeltes, insbesondere unter Luftatmosphäre kalziniertes, Niob(V) und Tantal(V) enthaltendes Material des hier genannten Typs kann beispielsweise auch eine mittels der BET-Methode bestimmte spezifische Oberfläche von beispielsweise 75 m²/g oder 80 m²/g oder 85 m²/g oder 90 m²/g oder 95 m²/g oder 100 m²/g oder 105 m²/g oder 110 m²/g oder 115 m²/g oder 120 m²/g oder 125 m²/g oder 130 m²/g oder 135 m²/g oder 140 m²/g oder 145 m²/g oder 150 m²/g oder 155 m²/g oder 160 m²/g oder 165 m²/g aufweisen.

Der mittels ICP-OES-Analyse bestimmte Massenanteil w(Niob) an der Gesamtmasse des porösen oxidischen Niob(V) und Tantal(V) enthaltenden Materials, wobei y = 0,75 ist, kann beispielsweise auch 6 % oder 7 % oder 8 % oder 9 % oder 10 % oder 11 % oder 12 % oder 13 % oder 14 % betragen. Und der mittels ICP-OES-Analyse bestimmte w(Tantal) an der Gesamtmasse des porösen oxidischen Niob(V) und Tantal(V) enthaltenden Materials kann beispielsweise auch 56 % oder 57 % oder 58 % oder 59 % oder 60 % oder 61 % oder 62 % oder 63 % oder 64 % betragen.

Überraschenderweise wurde für ein hier vorgestelltes oxidisches Niob(V) und Tantal(V) enthaltendes Material gemäß der Formel Nb_{0,25}Ta_{0,75}Ox nach Trocknung, beispielsweise Gefriertrocknung, ein sehr hoher BET-Wert bestimmt, nämlich von mehr als 150 m²/g bis 320 m²/g, üblicherweise von mehr als 200 m²/g oder von mehr als 250 m²/g, beispielsweise von ca. 260 m²/g. Sogar nach einer weiteren thermischen Behandlung, insbesondere einer Kalzination unter Luftatmosphäre, für einen Zeitraum von 1 Stunde bei einer Temperatur von 800 °C wurde noch ein hoher BET-Wert bestimmt, nämlich beispielsweise von 20 m²/g.

Gemäß einer weiteren Ausführungsform des porösen oxidischen Niob(V) und Tantal(V) enthaltenden Materials ist y = 0,75, wobei das oxidische Niob(V) und Tantal(V) enthaltende Material gemäß der Formel Nb_{0,25}Ta_{0,75}Ox nach einer thermischen Behandlung, insbesondere einer Kalzination, vorteilhaft einer Kalzination unter Luftatmosphäre, für einen Zeitraum von 1 Stunde bei einer Temperatur von 400 °C eine oder mehrere der folgenden Eigenschaften aufweist:
a. enthält gemäß Elementaranalyse Wasserstoff (H),
   wobei der Massenanteil w(Wasserstoff) an der Gesamtmasse des oxidischen Niob(V) enthaltenden Materials insbesondere wenigstens 0,8 % und höchstens 1,2 % beträgt;
b. ist gemäß Elementaranalyse frei von Stickstoff (N);
c. die spezifische Oberfläche beträgt wenigstens 150 m²/g und höchstens 250 m²/g.

Der Ausdruck "gemäß Elementaranalyse frei von Stickstoff (N)" ist für das poröse oxidische Niob(V) und Tantal(V) enthaltende Material bereits weiter oben definiert.

Ein für einen Zeitraum von 1 Stunde bei einer Temperatur von 400 °C thermisch behandeltes, insbesondere unter Luftatmosphäre kalziniertes, Niob(V) und Tantal(V) enthaltendes Material des hier beschriebenen Typs kann beispielsweise auch eine mittels der BET-Methode bestimmte spezifische Oberfläche von beispielsweise oder 155 m²/g oder 160 m²/g oder 165 m²/g oder 170 m²/g oder 175 m²/g oder 180 m²/g oder 185 m²/g oder 190 m²/g oder 195 m²/g oder 200 m²/g oder 205 m²/g oder 210 m²/g oder 215 m²/g oder 220 m²/g oder 225 m²/g oder 230 m²/g oder 235 m²/g oder 240 m²/g oder 245 m²/g aufweisen.

Gemäß einer weiteren Ausführungsform des porösen oxidischen Niob(V) und Tantal(V) enthaltenden Materials ist y = 0,75, wobei das oxidische Niob(V) und Tantal(V) enthaltende Material gemäß der Formel Nb_{0,25}Ta_{0,75}Ox nach einer thermischen Behandlung, insbesondere einer Kalzination, vorteilhaft einer Kalzination unter Luftatmosphäre, für einen Zeitraum von 1 Stunde bei einer Temperatur von 600 °C eine oder mehrere der folgenden Eigenschaften aufweist:
a. enthält gemäß Elementaranalyse Wasserstoff (H),
   wobei der Massenanteil w(Wasserstoff) an der Gesamtmasse des oxidischen Niob(V) und Tantal(V) enthaltenden Materials insbesondere wenigstens 0,5 % und höchstens 1 % beträgt
b. ist gemäß Elementaranalyse frei von Stickstoff (N);
c. die spezifische Oberfläche beträgt wenigstens 80 m²/g und höchstens 180 m²/g.

Ein für einen Zeitraum von 1 Stunde bei einer Temperatur von 600 °C thermisch behandeltes, insbesondere unter Luftatmosphäre kalziniertes, Niob(V) und Tantal(V) enthaltendes Material des hier beschriebenen Typs kann beispielsweise auch eine mittels der BET-Methode bestimmte spezifische Oberfläche von beispielsweise 85 m²/g oder 90 m²/g oder 95 m²/g oder 100 m²/g oder 105 m²/g oder 110 m²/g 115 m²/g oder 120 m²/g oder 125 m²/g oder 130 m²/g oder 135 m²/g oder 140 m²/g oder 145 m²/g oder 150 m²/g oder 155 m²/g oder 160 m²/g oder 165 m²/g oder 170 m²/g oder 175 m²/g aufweisen.

Gemäß einer weiteren vorteilhaften Variante der hier beschriebenen porösen oxidischen Niob(V) und/oder Tantal(V) enthaltenden Materialien sind oxidische Verbindungen, die zusätzlich zu Niob und/oder Tantal und Sauerstoff ein oder mehrere weitere Nebengruppenelemente und/oder ein oder mehrere Hauptgruppenelemente aufweisen, ausgenommen.

In einer weiteren Ausführungsvariante des porösen oxidischen Niob(V) und Tantal(V) enthaltenden Materials, wobei y = 0,25 ist oder y = 0,5 ist oder y = 0,75 ist und insbesondere y = 0,5 ist, liegt das Material in Form eines, insbesondere wenigstens teilkristallinen, Pulvers vor.

Ein poröses oxidisches Niob(V) und Tantal(V) enthaltendes Material gemäß der allgemeinen Formel Nb_{1-y}Ta_{y}Ox, wobei 0 < y < 1 ist, nach einer oder mehreren der weiter oben beschriebenen Ausführungsformen ist insbesondere erhalten oder erhältlich nach einem Verfahren umfassend die folgenden Schritte:
A. Zurverfügungstellung einer Mischung, enthaltend
   a) ein Gemisch, umfassend Ammoniumnioboxalat und Oxalsäure und/oder Ammoniumoxalat, wobei das Gemisch
      - einen Massenanteil w(Niob) von wenigstens 15 % und von höchstens 30 % aufweist, vorteilhaft von wenigstens 17 % und von höchstens 28 %, vorteilhafter von wenigstens 18 % und von höchstens 27 %, insbesondere von wenigstens 19 % und von höchstens 26 %, und
      - ein molares Verhältnis Niob : Oxalat von wenigstens 1 : 2,1 und von höchstens 1 : 4 aufweist, vorteilhaft von wenigstens 1 : 2,1 und von höchstens 1 : 3,9, vorteilhafter von wenigstens 1 : 2,1 und von höchstens 1 : 3,8, insbesondere von wenigstens 1 : 2,2 und von höchstens 1 : 3,7, beispielsweise 1 : 2,3 oder 1 : 2,4 oder 1 : 2,5 oder 1 : 2,6 oder 1 : 2,7 oder 1 : 2,8 oder 1 : 2,9 oder 1 : 3 oder 1 : 3,1 oder 1 : 3,2 oder 1 : 3,3 oder 1 : 3,4 oder 1 : 3,5 oder 1 : 3,6; und
      eine wässrige Lösung eines Tantaloxalats;
      oder
   b) eine wässrige Lösung eines Nioboxalats, und
      eine wässrige Lösung eines Tantaloxalats;
B. Behandlung der Mischung aus Schritt A. unter hydrothermalen Bedingungen;
C. Gefriertrocknung und/oder Wärmetrocknung des in Schritt B. erhaltenen Produktes.

Bezüglich der allgemeinen Formel Nb_{1-y}Ta_{y}Ox ist ausschließlich das molare Verhältnis von Niob zu Tantal bekannt und daher definiert. Dabei soll "Ox" verdeutlichen, dass es sich um ein anorganisches Sauerstoff enthaltendes Material handelt, welches Sauerstoff in der Oxidationszahl -II enthält. Zudem soll durch die Angabe "Ox" angezeigt werden, dass das jeweilige Material nicht die Zusammensetzung eines stöchiometrischen Niob-Tantal-Mischoxids aufweist. Vielmehr sind nach Isolierung und Trocknung neben Niob(V), Tantal(V) und Sauerstoff(II) üblicherweise noch Wasserstoff (H) und Stickstoff (N) enthalten, insbesondere in Form von H₂O-Molekülen, Hydroxidionen (OH⁻) und Ammoniumionen (NH₄⁺).

Es sei zudem angemerkt, dass es sich bei dem hier vorgestellten porösen oxidischen Niob(V) und Tantal(V) enthaltenden Material nicht um ein Stoffgemisch, bestehend aus Niob(V)-oxid (Nb₂O₅) und Tantal(V)-oxid (Ta₂O₅), handelt. Ein poröses oxidisches Niob(V) und Tantal(V) enthaltendes Material des hier beschriebenen Typs kann jedoch Niob(V)-oxid (Nb₂O₅) und/oder Tantal(V)-oxid (Ta₂O₅) enthalten.

Eine thermische Behandlung bei einer Temperatur von bis zu ca. 100 °C wird vorliegend als Trocknung bezeichnet. Dabei kann es sich um eine Gefriertrocknung und/oder um eine Wärmetrocknung bei einer Temperatur von bis ca. 100 °C, beispielsweise im Bereich von ca. 70 °C bis ca. 100 °C, handeln. Ergänzend kann die jeweilige Trocknung auch unter Vakuum erfolgen. Dem Fachmann ist bekannt, welche Maßnahmen zu ergreifen sind, um ein anorganisches poröses oxidisches Material zu trocknen, insbesondere an der Materialoberfläche anhaftendes Wasser zu entfernen.

Auf diese Weise können die porösen oxidischen Niob(V) und Tantal(V) enthaltenden Materialien vorteilhafterweise einfach, reproduzierbar, umwelt- und ressourcenschonend und vergleichsweise kostengünstig in quantitativer oder nahezu quantitativer Ausbeute und hoher Reinheit zur Verfügung gestellt werden, und zwar auch im industriellen Maßstab.

Das Ammoniumnioboxalat ((NH₄)[NbO(C₂O₄)₂]), die Oxalsäure und das Ammoniumoxalat können unabhängig voneinander auch in Form eines Hydrates vorliegen.

Eine vorteilhafte Ausführungsform sieht vor, dass die Zurverfügungstellung gemäß Schritt A. a) eine Herstellung einer Lösung des Ammoniumnioboxalats und der Oxalsäure und/oder des Ammoniumoxalats in vollentsalztem Wasser umfasst. Gemäß einer weiteren vorteilhaften Ausführungsvariante des Verfahrens ist in Schritt A. a) die Zurverfügungstellung eines Gemisches, enthaltend Ammoniumnioboxalat und Oxalsäure und/oder Ammoniumoxalat, vorgesehen, wobei die vorgenannten Verbindungen unabhängig voneinander auch in Form eines Hydrates vorliegen können. Besonders einfach ist die Durchführung des Verfahrens, wenn ein kommerziell erhältliches Gemisch, enthaltend Ammoniumnioboxalat und Oxalsäure und/oder Ammoniumoxalat, eingesetzt, insbesondere das Produkt NAmOx (Niobammoniumoxalat, TANIOBIS GmbH).

Gemäß einer anderen vorteilhaften Ausführungsform ist vorgesehen, dass die wässrige Lösung des Tantaloxalats in Schritt A. a) oder in Schritt A. b) in Form einer Lösung in vollentsalztem Wasser zur Verfügung gestellt wird, wobei die wässrige Lösung des Tantaloxalats eine übersättigte Lösung oder eine gesättigte Lösung ist. Eine andere vorteilhafte Variante sieht vor, dass die Lösung des Tantaloxalats eine Massenkonzentration β(Tantal) im Bereich von 120 g/L bis 170 g/L aufweist. Besonders einfach ist die Durchführung des Verfahrens, wenn eine kommerziell erhältliche wässrige Tantaloxalat-Lösung eingesetzt wird, insbesondere die wässrige Tantaloxalat-Lösung der TANIOBIS GmbH (TOx-Lösung).

Eine weitere vorteilhafte Ausführungsform sieht vor, dass die wässrige Lösung des Nioboxalats in Schritt A. b) in Form einer Lösung in vollentsalztem Wasser zur Verfügung gestellt wird, wobei die wässrige Lösung des Nioboxalats eine übersättigte Lösung oder eine gesättigte Lösung ist. Eine andere vorteilhafte Variante sieht vor, dass die Lösung des Nioboxalats eine Massenkonzentration β (Niob) im Bereich von 60 g/L bis 190 g/L aufweist. Besonders einfach ist die Durchführung des Verfahrens, wenn eine kommerziell erhältliche wässrige Nioboxalat-Lösung eingesetzt wird, insbesondere die wässrige Nioboxalat-Lösung der TANIOBIS GmbH (NOx-Lösung). Unabhängig davon, ob eine kommerziell erhältliche wässrige Nioboxalat-Lösung und/oder eine kommerziell erhältliche Tantaloxalat-Lösung verwendet wird oder nicht, kann vorgesehen sein, zusätzlich Oxalsäure und/oder Ammoniumoxalat zu der jeweiligen wässrigen Tantaloxalat-Lösung und/oder wässrigen Nioboxalat-Lösung hinzuzufügen. Wird Ammoniumoxalat hinzugefügt, so enthält das poröse oxidische Tantal(V) enthaltende Material unmittelbar nach seiner Herstellung, also ohne Durchführung einer thermischen Behandlung, Stickstoff.

In einer weiteren Ausführungsform beträgt in Schritt B. eine Summe einer Stoffmengenkonzentration c(Nb⁵⁺) und einer Stoffmengenkonzentration c(Ta⁵⁺) wenigstens 0,05 mol/L und höchstens 0,5 mol/L, insbesondere wenigstens 0,1 mol/L und höchstens 0,5 mol/L, beispielsweise 0,11 mol/L oder 0,12 mol/L oder 0,13 mol/L oder 0,14 mol/L oder 0,15 mol/L oder 0,16 mol/L oder 0,17 mol/L oder 0,18 mol/L oder 0,19 mol/L oder 0,2 mol/L oder 0,21 mol/L oder 0,22 mol/L oder 0,23 mol/L oder 0,24 mol/L oder 0,25 mol/L oder 0,26 mol/L oder 0,27 mol/L oder 0,28 mol/L oder 0,29 mol/L oder 0,3 mol/L oder 0,31 mol/L oder 0,32 mol/L oder 0,33 mol/L oder 0,34 mol/L oder 0,35 mol/L oder 0,36 mol/L oder 0,37 mol/L oder 0,38 mol/L oder 0,39 mol/L oder 0,4 mol/L oder 0,41 mol/L oder 0,42 mol/L oder 0,43 mol/L oder 0,44 mol/L oder 0,45 mol/L oder 0,46 mol/L oder 0,47 mol/L oder 0,48 mol/L oder 0,49 mol/L.

Die Behandlung gemäß Schritt B. kann auch eine Verdünnung der wässrigen Lösung aus Schritt A. oder der wässrigen Lösungen aus Schritt A. umfassen.

Beispielsweise beträgt im Falle der Herstellung von Nb_{0,5}Ta_{0,5}Ox (y = 0,5) die Summe der Stoffmengenkonzentration c(Nb⁵⁺) und der Stoffmengenkonzentration c(Ta⁵⁺) 0,15 mol/L, wobei die Stoffmengenkonzentration c(Nb⁵⁺) 0,075 mol/L beträgt und die Stoffmengenkonzentration c(Ta⁵⁺) 0,075 mol/L beträgt.

Im Falle der Herstellung von Nb_{0,75}Ta_{0,25}Ox (y = 0,25) beträgt die Summe der Stoffmengenkonzentration c(Nb⁵⁺) und der Stoffmengenkonzentration c(Ta⁵⁺) beispielsweise 0,15 mol/L, wobei die Stoffmengenkonzentration c(Nb⁵⁺) 0,1125 mol/L beträgt und die Stoffmengenkonzentration c(Ta⁵⁺) 0,0375 mol/L.

Im Rahmen der Herstellung von Nb_{0,25}Ta_{0,75}Ox (y = 0,75) beträgt die Summe der Stoffmengenkonzentration c(Nb⁵⁺) und der Stoffmengenkonzentration c(Ta⁵⁺) beispielsweise 0,15 mol/L, wobei die Stoffmengenkonzentration c(Nb⁵⁺) 0,0375 mol/L beträgt und die Stoffmengenkonzentration c(Ta⁵⁺) 0,1125 mol/L beträgt.

In einer anderen vorteilhaften Variante wird die gemäß Schritt B. vorgesehene Behandlung unter hydrothermalen Bedingungen in einem gasdicht verschließbaren Druckbehälter (Autoklav) durchgeführt. Dabei beträgt eine Innentemperatur des Autoklavs vorteilhafterweise wenigstens 160 °C. Noch vorteilhafter ist es, wenn die Innentemperatur des Autoklavs wenigstens 160 °C und höchstens 240 °C beträgt. Insbesondere liegt die Innentemperatur des Autoklavs oberhalb von 160 °C und beträgt höchstens 235 °C. Beispielsweise liegt die Innentemperatur des Autoklavs im Bereich von 160 °C bis 230 °C oder im Bereich von 160 °C bis 225 °C. Besonders vorteilhaft ist es, wenn die Innentemperatur des Autoklavs im Bereich von 165 °C bis 220 °C liegt. Dann kann die Innentemperatur des Autoklavs beispielsweise auch 170 °C oder 175 °C oder 180 °C oder 185 °C oder 190 °C oder 195 °C oder 200 °C oder 205 °C oder 210 °C oder 215 °C betragen.

Eine weitere Ausführungsform sieht vor, dass eine Reaktionszeit wenigstens drei Stunden und höchstens zehn Stunden beträgt, vorteilhaft wenigstens vier Stunden und höchstens neun Stunden, insbesondere wenigstens fünf Stunden und höchstens acht Stunden, beispielsweise sechs Stunden oder sieben Stunden.

Hinsichtlich weiterer Vorteile eines hier vorgestellten porösen oxidischen Niob(V) und Tantal(V) enthaltenden Materials, erhalten oder erhältlich nach einem Verfahren zur Herstellung solcher Materialien gemäß einer oder mehreren der vorgenannten Ausführungsformen, wird auf die Vorteile verwiesen, welche für die weiter oben beschriebenen porösen oxidischen Niob(V) und Tantal(V) enthaltenden Materialien genannt sind.

Ein Vorteil aller hier vorgestellten porösen oxidischen Materialien, welche Niob und/oder das schwere Homologe Tantal enthalten, insbesondere erhalten oder erhältlich nach einem Verfahren zur Herstellung solcher Materialien gemäß wenigstens einer der weiter oben beschriebenen Ausführungsformen, besteht darin, dass sie, insbesondere im Vergleich zu kommerziell erhältlichen Niob(V)-oxiden, große spezifische Oberfläche aufweisen. Zudem sind die hier beschriebenen oxidischen Materialien auf einfache Weise, reproduzierbar, umwelt- und ressourcenschonend und vergleichsweise kostengünstig herstellbar, und zwar in quantitativer oder nahezu quantitativer Ausbeute und in sehr hoher Reinheit. So können die oxidischen Materialien zwar Verunreinigungen, insbesondere durch Haupt- oder Nebengruppenmetalle, Halbmetalle oder Kohlenstoff enthalten. Die Summe aller mittels ICP-OES-Analyse bestimmten Verunreinigungen beträgt jedoch höchstens 1000 ppmw. Aufgrund der sehr hohen Reinheit der hier vorgestellten Materialien sowie der Tatsache, dass sie säure- und laugenstabil sind, genügen diese oxidischen Materialien den Anforderungen, welche an Materialien für (Elektro-)Katalysatoren gestellt werden. Hinzu kommt, dass sie auch im industriellen Maßstab in vergleichbarer Ausbeute und Reinheit erhältlich sind. Nach alledem sind diese oxidischen Materialien aus (atom-)ökonomischer und ökologischer Sicht vorteilhaft und für den Einsatz im großtechnischen Maßstab prädestiniert.

Die Aufgabe wird auch gelöst durch eine Verwendung
- wenigstens eines ersten porösen oxidischen Niob(V) enthaltenden Materials gemäß wenigstens einer der weiter oben beschriebenen Ausführungsformen
   und/oder
- wenigstens eines zweiten porösen oxidischen Niob(V) enthaltenden Materials gemäß wenigstens einer der weiter oben beschriebenen Ausführungsformen
   und/oder
- wenigstens eines porösen oxidischen Tantal(V) enthaltenden Materials gemäß wenigstens einer der weiter oben beschriebenen Ausführungsformen
   und/oder
- wenigstens eines porösen oxidischen Niob(V) und Tantal(V) enthaltenden Materials gemäß wenigstens einer der weiter oben beschriebenen Ausführungsformen zur Herstellung eines Katalysators.

Bei der vorgenannten Verwendung handelt es sich um ein Verfahren zur Herstellung eines Katalysators unter Verwendung
- wenigstens eines ersten porösen oxidischen Niob(V) enthaltenden Materials gemäß wenigstens einer der weiter oben beschriebenen Ausführungsformen
   und/oder
- wenigstens eines zweiten porösen oxidischen Niob(V) enthaltenden Materials gemäß wenigstens einer der weiter oben beschriebenen Ausführungsformen
   und/oder
- wenigstens eines porösen oxidischen Tantal(V) enthaltenden Materials gemäß wenigstens einer der weiter oben beschriebenen Ausführungsformen
   und/oder
- wenigstens eines porösen oxidischen Niob(V) und Tantal(V) enthaltenden Materials gemäß wenigstens einer der weiter oben beschriebenen Ausführungsformen.

Das Verfahren umfasst die folgenden Schritte:
A. Zurverfügungstellung des wenigstens einen porösen oxidischen Materials, insbesondere einer wässrigen Suspension, enthaltend das wenigstens eine poröse oxidische Material,
B. Zurverfügungstellung einer Iridium(IV) enthaltenden Vorläuferverbindung einer Aktivkomponente,
C. Durchführung einer nasschemischen Reaktion, welche eine pH-Wert-Erhöhung und eine pH-Wert-Erniedrigung umfasst, wobei die pH-Wert-Erhöhung vor der pH-Wert-Erniedrigung durchgeführt wird und ein maximaler pH-Wert im Bereich von pH 9 bis pH 14 vorgesehen ist und ein minimaler pH-Wert im Bereich von pH 0 bis pH 8 vorgesehen ist,
D. Isolierung und Trocknung des Katalysators,
E. Optional Kalzination des getrockneten Katalysators.

Zur pH-Wert-Erhöhung ist vorteilhafterweise eine anorganische Base vorgesehen. Und zur pH-Wert-Erniedrigung ist vorteilhafterweise eine anorganische Säure vorgesehen. Bei der anorganischen Base kann es sich um eine Natriumhydroxidlösung, beispielsweise um eine Natriumhydroxidlösung. Bei der anorganischen Säure kann es sich um eine Mineralsäure handeln, insbesondere um eine Salpetersäurelösung.

### [Anspruch 22]

Die Aufgabe wird außerdem gelöst durch einen Katalysator, umfassend
A. eine Trägerkomponente, welche ein Nichtleiter ist, und
B. eine iridiumhaltige Aktivkomponente,
wobei
▪ die Trägerkomponente wenigstens ein poröses oxidisches Material umfasst oder aus wenigstens einem porösen oxidischen Material besteht, welches ausgewählt ist aus der Gruppe bestehend aus
   i. einem ersten porösen oxidischen Niob(V) enthaltenden Material gemäß wenigstens einer der weiter oben beschriebenen Ausführungsformen;
   ii. einem zweiten porösen oxidischen Niob(V) enthaltenden Material gemäß wenigstens einer der weiter oben beschriebenen Ausführungsformen;
   iii. einem porösen oxidischen Tantal(V) enthaltenden Material gemäß wenigstens einer der weiter oben beschriebenen Ausführungsformen;
   iv. einem porösen oxidischen Niob(V) und Tantal(V) enthaltenden Material gemäß wenigstens einer der weiter oben beschriebenen Ausführungsformen,
   und Mischungen davon;
▪ die iridiumhaltige Aktivkomponente Iridium(IV)-oxid (IrO₂) umfasst, wobei
   i. IrO₂ wenigstens teilkristallin vorliegt, wobei kristallines IrO₂ Rutilstruktur aufweist,
   ii. ein Massenanteil w(lridium) an einer Gesamtmasse des Katalysators wenigstens 50 % und höchstens 80 % beträgt;
   wobei der Katalysator
   i. für einen Zeitraum von 1 Stunde bei einer Temperatur im Bereich von 300 °C bis 800 °C, insbesondere im Bereich von 300 °C bis 600 °C oder im Bereich von 350 °C bis 500 °C oder im Bereich von 400 °C bis 600 °C, thermisch behandelt ist, insbesondere kalziniert ist, vorteilhaft unter Luftatmosphäre kalziniert ist,
      und
   ii. eine mittels der BET-Methode bestimmte spezifische Oberfläche von mehr als 10 m²/g und von höchstens 150 m²/g aufweist.

Der Ausdruck "spezifische Oberfläche" und der Begriff "BET-Oberfläche" werden im Folgenden synonym verwendet.

Bei dem hier vorgestellten Katalysator handelt es sich um einen Mehrkomponenten-Katalysator. Er umfasst jeweils
A. eine Trägerkomponente, welche ein Nichtleiter ist und
   - wenigstens ein poröses oxidisches Niob(V) und/oder Tantal(V) enthaltendes Material gemäß einer oder mehreren der weiter oben beschriebenen Ausführungsformen umfasst,
      oder
   - aus wenigstens einem porösen oxidischen Niob(V) und/oder Tantal(V) enthaltenden Material gemäß einer oder mehreren der weiter oben beschriebenen Ausführungsformen besteht,
   wobei die Trägerkomponente auch nach einer thermischen Behandlung für einen Zeitraum von 1 Stunde bei einer Temperatur
   i. im Bereich von ca. 300 °C bis ca. 600 °C noch eine sehr hohe spezifische Oberfläche aufweist,
   ii. von ca. 800 °C noch eine hohe spezifische Oberfläche aufweist;
   und
B. eine iridiumhaltige Aktivkomponente, welche kristallines IrO₂ in der Rutilstruktur umfasst.

Überraschenderweise wurde gefunden, dass bei Vorsehen wenigstens eines porösen oxidischen Niob(V) und/oder Tantal(V) enthaltenden Materials gemäß einer der weiter oben beschriebenen Ausführungsformen die Struktur, insbesondere die Oberflächenstruktur, des jeweiligen IrO₂ enthaltenden Katalysators derart stabilisiert wird, dass selbst nach einer thermischen Behandlung bei erhöhter Temperatur, d. h. oberhalb von 100 °C, nämlich bei Temperaturen im Bereich von ca. 300 °C und bis ca. 800 °C, beispielsweise bei ca. 350 °C oder bei ca. 400 °C oder bei ca. 450 °C oder bei ca. 500 °C oder bei ca. 550 °C oder bei ca. 600 °C oder bei ca. 650 °C oder bei ca. 700 °C oder bei ca. 750 °C, insbesondere bei Temperaturen im Bereich von ca. 300 °C und bis zu ca. 600 °C, beispielsweise bei ca. 350 °C oder bei ca. 400 °C oder bei ca. 450 °C oder bei ca. 500 °C oder bei ca. 550 °C,
1. die spezifische Oberfläche des jeweiligen Katalysators noch oberhalb der BET-Oberfläche von ungeträgertem IrO₂ (typischerweise ca. 10 m²/g) liegt, wobei sie - in Abhängigkeit von der Zusammensetzung des Katalysators, insbesondere in Abhängigkeit von dem Katalysatortyp und dem Massenanteil w(lridium) - in der Regel wenigstens 10 m²/g beträgt, insbesondere mehr als 10 m²/g oder wenigstens 12 m²/g;
2. die spezifische Oberfläche des jeweiligen Katalysators unverändert oder im Wesentlichen unverändert ist, insbesondere bis zu einer Temperatur von ca. 600 °C.

Nach alledem kann die Trägerkomponente auch als nicht leitfähiger Strukturgeber und/oder als nicht leitfähiger Strukturstabilisatoren bezeichnet werden.

Besonders vorteilhaft ist, dass die spezifischen Oberflächen der hier beschriebenen Katalysatoren als temperaturstabil oder als im Wesentlichen temperaturstabil bezeichnet werden können.

Für die Einstufung der spezifischen Oberfläche eines hier vorgestellten Mehrkomponenten-Katalysators als "temperaturstabil" oder "im Wesentlichen temperaturstabil" wurden mittels der BET-Methode jeweils die folgenden Werte zu bestimmt:
a) eine erste spezifische Oberfläche, welche das bei ca. 100 °C getrocknete und danach bei einer ersten Temperatur von wenigstens ca. 350 °C für einen Zeitraum von ca. 1 Stunde thermisch behandelte Katalysatormaterial aufweist,
   und
b) eine zweite spezifische Oberfläche, welche das bei ca. 100 °C getrocknete, bei der ersten Temperatur von wenigstens ca. 350 °C für einen Zeitraum von ca. 1 Stunde thermisch behandelte und zusätzlich bei einer zweiten Temperatur, welche wenigstens ca. 150 °C oberhalb der ersten Temperatur liegt, für einen Zeitraum von wenigstens 1 Stunde thermisch behandelte Katalysatormaterial aufweist.

Gemäß der vorliegenden Erfindung wird die spezifische Oberfläche eines hier vorgestellten Mehrkomponenten-Katalysators als "temperaturstabil" bezeichnet, wenn der für die erste spezifische Oberfläche und der für die zweite spezifische Oberfläche bestimmte Wert um höchstens 12 % voneinander abweichen. Dagegen wird die spezifische Oberfläche eines hier vorgestellten Mehrkomponenten-Katalysators als "im Wesentlichen temperaturstabil" eingestuft, wenn der für die erste spezifische Oberfläche und der für die zweite spezifische Oberfläche bestimmte Wert um mehr als 12 % und um höchstens 15 % voneinander abweichen. Die Abweichung kann dann beispielsweise 12,5 % oder 13 % oder 13,5 % oder 14 % oder 14,5 % betragen.

Bei den porösen oxidischen Niob(V) und/oder Tantal(V) enthaltenden nicht leitfähigen Materialien gemäß wenigstens einer der weiter oben beschriebenen Ausführungsformen handelt es sich um anorganische oxidische Niob(V) und/oder Tantal(V) enthaltende Materialien, welche nach ihrer Herstellung, einschließlich einer Trocknung, sehr hohe spezifische Oberflächen besitzen. Besonders hier vorgestellte Niob(V) enthaltende Materialien zeichnen sich vorteilhafterweise unter anderem dadurch aus, dass sie,

insbesondere bis zu einer Temperatur von 400 °C, temperaturstabil sind, insbesondere betreffend ihre spezifische Oberfläche (gemessen nach DIN 66132). Für weiter oben beschriebene Tantal(V) enthaltende Materialien wurde gefunden, dass sie, insbesondere bis zu einer Temperatur von 400 °C, im Wesentlichen temperaturstabil sind, insbesondere bezüglich ihrer spezifischen Oberfläche. Letzteres gilt auch für weiter oben beschriebene Niob(V) und Tantal(V) enthaltende Materialien, insbesondere gemäß den Formeln Nb_{0,5}Ta_{0,5}Ox und Nb_{0,5}Ta_{0,75}Ox. Hinsichtlich Details wird auf die Beschreibung dieser Materialien sowie auf die Ausführungsbeispiele verwiesen.

Die bereits weiter oben, nämlich im Zusammenhang mit dem ersten porösen oxidischen Niob(V) enthaltenden Material, angegebenen Definitionen für die Ausdrücke "hohe spezifische Oberfläche", "hoher BET-Wert", "sehr hohe spezifische Oberfläche", "sehr hoher BET-Wert" gelten analog für die hier beschriebenen Mehrkomponenten-Katalysatoren. Dasselbe gilt für Definitionen und Informationen betreffend die Ausdrücke "Nichtleiter" und "thermische Behandlung".

Das als eine Trägerkomponente vorsehbare und weiter oben beschriebene erste poröse oxidische Niob(V) enthaltende Material zeichnet sich unter anderem dadurch aus, dass es nach einer thermischen Behandlung, insbesondere einer Kalzination, vorteilhaft einer Kalzination unter Luftatmosphäre, für einen Zeitraum von 1 Stunde bei einer Temperatur von 400 °C
- eine mittels der BET-Methode bestimmte spezifische Oberfläche von wenigstens 200 m²/g und von höchstens 350 m²/g aufweist,
- gemäß Elementaranalyse Wasserstoff (H) enthält, wobei der Massenanteil w(Wasserstoff) an der Gesamtmasse des oxidischen Niob(V) enthaltenden Materials insbesondere wenigstens 0,8 % und höchstens 1,2 % beträgt, und
- gemäß Elementaranalyse frei von Stickstoff (N) ist.

Beispielsweise wurde für eine Probe des ersten porösen oxidischen Niob(V) enthaltenden Materials gefunden, dass das Material nach Kalzination für einen Zeitraum von 1 Stunde bei 400 °C unter Luftatmosphäre noch eine sehr hohe spezifische Oberfläche aufwies, nämlich von ca. 320 m²/g. Wurde eine Probe desselben ersten porösen oxidischen Niob(V) enthaltenden Materials für 4 Stunden bei 400 °C unter Luftatmosphäre kalziniert, wies das nach Beendigung der Kalzination vorliegende poröse oxidische Niob(V) enthaltende Material überraschenderweise immer noch eine sehr hohe spezifische Oberfläche auf, nämlich von 264 m²/g.

Das als eine alternative oder ergänzende Trägerkomponente vorsehbare und weiter oben beschriebene zweite poröse oxidische Niob(V) enthaltende Material ist unter anderem dadurch gekennzeichnet, dass es nach einer thermischen Behandlung, insbesondere einer Kalzination, vorteilhaft einer Kalzination unter Luftatmosphäre, für einen Zeitraum von 1 Stunde bei einer Temperatur von 400 °C
- eine mittels der BET-Methode bestimmte spezifische Oberfläche von wenigstens 200 m²/g und von höchstens 350 m²/g aufweist,
- gemäß Elementaranalyse Wasserstoff (H) enthält, wobei der Massenanteil w(Wasserstoff) an der Gesamtmasse des oxidischen Niob(V) enthaltenden Materials insbesondere wenigstens 0,8 % und höchstens 1,2 % beträgt, und
- gemäß Elementaranalyse frei von Stickstoff (N) ist.

Die bereits weiter oben, nämlich im Zusammenhang mit den porösen oxidischen Niob(V) und/oder Tantal(V) enthaltenden Materialien, angegebenen Definitionen gelten analog für die hier und nachfolgend vorgestellten Mehrkomponenten-Katalysatoren.

Das als eine weitere alternative oder ergänzende Trägerkomponente vorsehbare und weiter oben beschriebene poröse oxidische Tantal(V) enthaltende Material zeichnet sich unter anderem dadurch aus, dass es nach einer thermischen Behandlung, insbesondere einer Kalzination, vorteilhaft einer Kalzination unter Luftatmosphäre, für einen Zeitraum von 1 Stunde bei einer Temperatur von 400 °C
- eine spezifische Oberfläche von wenigstens 150 m²/g und von höchstens 250 m²/g aufweist,
- gemäß Elementaranalyse Wasserstoff (H) enthält, wobei der Massenanteil w(Wasserstoff) an der Gesamtmasse des oxidischen Tantal(V) enthaltenden Materials insbesondere wenigstens 0,8 % und höchstens 1,2 % beträgt;
- gemäß Elementaranalyse frei von Stickstoff (N) ist.

Für das als eine andere alternative oder ergänzende Trägerkomponente vorsehbare und weiter oben beschriebene poröse oxidische Niob(V) und Tantal(V) enthaltende Material gemäß der allgemeinen Formel Nb_{1-y}Ta_{y}Ox, wobei 0 < y < 1 ist, gilt unter anderem, dass es nach einer thermischen Behandlung, insbesondere einer Kalzination, vorteilhaft einer Kalzination unter Luftatmosphäre, für einen Zeitraum von 1 Stunde bei einer Temperatur von 400 °C
- eine spezifische Oberfläche von wenigstens 150 m²/g und von höchstens 350 m²/g aufweist,
- gemäß Elementaranalyse Wasserstoff (H) enthält, wobei der Massenanteil w(Wasserstoff) an der Gesamtmasse des oxidischen Tantal(V) enthaltenden Materials insbesondere wenigstens 0,8 % und höchstens 1,2 % beträgt;
- gemäß Elementaranalyse frei von Stickstoff (N) ist.

Bezüglich der allgemeinen Formel Nb_{1-y}Ta_{y}Ox ist ausschließlich das molare Verhältnis von Niob zu Tantal bekannt und daher definiert. Dabei soll "Ox" verdeutlichen, dass es sich um ein anorganisches Sauerstoff enthaltendes Material handelt, welches Sauerstoff in der Oxidationszahl -II enthält. Zudem soll durch die Angabe "Ox" angezeigt werden, dass das jeweilige Material nicht die Zusammensetzung eines stöchiometrischen Niob-Tantal-Mischoxids aufweist. Vielmehr sind nach Isolierung und Trocknung neben Niob(V), Tantal(V) und Sauerstoff(ll) üblicherweise noch Wasserstoff (H) und Stickstoff (N) enthalten, insbesondere in Form von H₂O-Molekülen, Hydroxidionen (OH⁻) und Ammoniumionen (NH₄⁺).

Es sei zudem angemerkt, dass es sich bei dem hier vorgestellten porösen oxidischen Niob(V) und Tantal(V) enthaltenden Material nicht um ein Stoffgemisch, bestehend aus Niob(V)-oxid (Nb₂O₅) und Tantal(V)-oxid (Ta₂O₅), handelt. Ein poröses oxidisches Niob(V) und Tantal(V) enthaltendes Material des hier beschriebenen Typs kann jedoch Niob(V)-oxid (Nb₂O₅) und/oder Tantal(V)-oxid (Ta₂O₅) enthalten.

In einer vorteilhaften Ausführungsform ist als eine Trägerkomponente ein poröses oxidisches Niob(V) und Tantal(V) enthaltendes Material vorgesehen, wobei y = 0,25 ist oder y = 0,5 ist oder y = 0,75 ist. Eine noch vorteilhaftere Variante sieht vor, dass y = 0,5 ist.

Besonders vorteilhaft ist, dass die als Trägerkomponenten vorgesehenen porösen oxidischen Niob(V) und/oder Tantal(V) enthaltenden Materialien auch nach einer thermischen Behandlung, insbesondere einer Kalzination, vorteilhaft einer Kalzination unter Luftatmosphäre, bei Temperaturen im Bereich von 600 °C bis 800 °C noch sehr hohe oder zumindest hohe spezifische Oberflächen aufweisen. So besitzen die hier in Rede stehenden porösen oxidischen Materialien nach einer thermischen Behandlung für einen Zeitraum von 1 Stunde bei einer Temperatur von 600 °C noch sehr hohe spezifische Oberflächen, nämlich von wenigstens 80 m²/g bis wenigstens 180 m²/g, zum Teil sogar von 200 m²/g.

Das als eine Trägerkomponente vorsehbare erste poröse oxidische Niob(V) enthaltende Material ist unter anderem dadurch gekennzeichnet, dass es nach einer thermischen Behandlung, insbesondere einer Kalzination, vorteilhaft einer Kalzination unter Luftatmosphäre, für einen Zeitraum von 1 Stunde bei einer Temperatur von 600 °C
- eine mittels der BET-Methode bestimmte spezifische Oberfläche von wenigstens 100 m²/g und von höchstens 200 m²/g aufweist,
- gemäß Elementaranalyse Wasserstoff (H) enthält, wobei ein Massenanteil w(Wasserstoff) an der Gesamtmasse des Niob(V) enthaltenden Materials insbesondere wenigstens 0,5 % und höchstens 1 % beträgt,
- gemäß Elementaranalyse frei von Stickstoff (N) ist,
- der Massenanteil w(Niob) an der Gesamtmasse des oxidischen Niob(V) enthaltenden Materials gemäß ICP-OES-Analyse wenigstens 58 % und höchstens 68 % beträgt.

Das als eine alternative oder ergänzende Trägerkomponente vorsehbare zweite poröse oxidische Niob(V) enthaltende Material zeichnet sich unter anderem dadurch aus, dass es nach einer thermischen Behandlung, insbesondere einer Kalzination, vorteilhaft einer Kalzination unter Luftatmosphäre, für einen Zeitraum von 1 Stunde bei einer Temperatur von 600 °C eine mittels der BET-Methode bestimmte spezifische Oberfläche von wenigstens 100 m²/g und von höchstens 200 m²/g aufweist,
- eine mittels der BET-Methode bestimmte spezifische Oberfläche von wenigstens 100 m²/g und von höchstens 200 m²/g aufweist,
- gemäß Elementaranalyse Wasserstoff (H) enthält, wobei ein Massenanteil w(Wasserstoff) an der Gesamtmasse des Niob(V) enthaltenden Materials insbesondere wenigstens 0,5 % und höchstens 1 % beträgt,
- gemäß Elementaranalyse frei von Stickstoff (N) ist,
- der Massenanteil w(Niob) an der Gesamtmasse des oxidischen Niob(V) enthaltenden Materials gemäß ICP-OES-Analyse wenigstens 58 % und höchstens 68 % beträgt.

Das als eine weitere alternative oder ergänzende Trägerkomponente vorsehbare poröse oxidische Tantal(V) enthaltende Materials ist unter anderem dadurch gekennzeichnet, dass es nach einer thermischen Behandlung, insbesondere einer Kalzination, vorteilhaft einer Kalzination unter Luftatmosphäre, für einen Zeitraum von 1 Stunde bei einer Temperatur von 600 °C
- eine mittels der BET-Methode bestimmte spezifische Oberfläche von wenigstens 150 m²/g und von höchstens 250 m²/g aufweist,
- gemäß Elementaranalyse Wasserstoff (H) enthält, wobei der Massenanteil w(Wasserstoff) an der Gesamtmasse des oxidischen Tantal(V) enthaltenden Materials insbesondere wenigstens 0,5 % und höchstens 1 % beträgt;
- gemäß Elementaranalyse frei von Stickstoff (N) ist.

Das als eine andere alternative oder ergänzende Trägerkomponente vorsehbare poröse oxidische Niob(V) und Tantal(V) enthaltende Material gemäß der Formel Nb_{0,5}Ta_{0,5}Ox ist unter anderem dadurch gekennzeichnet, dass es nach einer thermischen Behandlung, insbesondere einer Kalzination, vorteilhaft einer Kalzination unter Luftatmosphäre, für einen Zeitraum von 1 Stunde bei einer Temperatur von 600 °C
- eine mittels der BET-Methode bestimmte spezifische Oberfläche von wenigstens 80 m²/g und von höchstens 180 m²/g aufweist,
- gemäß Elementaranalyse Wasserstoff (H) enthält, wobei ein Massenanteil w(Wasserstoff) an der Gesamtmasse des oxidischen Niob(V) und Tantal(V) enthaltenden Materials insbesondere wenigstens 0,5 % und höchstens 1 % beträgt;
- gemäß Elementaranalyse frei von Stickstoff (N) ist.

Das als eine noch andere alternative oder ergänzende Trägerkomponente vorsehbare poröse oxidische Niob(V) und Tantal(V) enthaltende Material gemäß der Formel Nb_{0,75}Ta_{0,25}Ox zeichnet sich unter anderem dadurch aus, dass es nach einer thermischen Behandlung, insbesondere einer Kalzination, vorteilhaft einer Kalzination unter Luftatmosphäre, für einen Zeitraum von 1 Stunde bei einer Temperatur von 600 °C
- eine mittels der BET-Methode bestimmte spezifische Oberfläche von wenigstens 70 m²/g und von höchstens 180 m²/g aufweist,
- gemäß Elementaranalyse Wasserstoff (H) enthält, wobei ein Massenanteil w(Wasserstoff) an der Gesamtmasse des oxidischen Niob(V) und Tantal(V) enthaltenden Materials
- gemäß Elementaranalyse frei von Stickstoff (N) ist.

Das als eine weitere alternative oder ergänzende Trägerkomponente vorsehbare poröse oxidische Niob(V) und Tantal(V) enthaltende Material gemäß der Formel Nb_{0,25}Ta_{0,75}Ox zeichnet sich unter anderem dadurch aus, dass es nach einer thermischen Behandlung, insbesondere einer Kalzination, vorteilhaft einer Kalzination unter Luftatmosphäre, für einen Zeitraum von 1 Stunde bei einer Temperatur von 600 °C
- eine mittels der BET-Methode bestimmte spezifische Oberfläche von wenigstens 80 m²/g und von höchstens 180 m²/g aufweist,
- gemäß Elementaranalyse Wasserstoff (H) enthält, wobei ein Massenanteil w(Wasserstoff) an der Gesamtmasse des oxidischen Niob(V) und Tantal(V) enthaltenden Materials;
- gemäß Elementaranalyse frei von Stickstoff (N) ist.

Wird die thermische Behandlung für einen Zeitraum von 1 Stunde bei einer Temperatur von 800 °C durchgeführt, weisen die vorgenannten porösen oxidischen Niob(V) und/oder Tantal(V) enthaltenden Materialien danach immer noch hohe spezifische Oberflächen auf, d. h. von wenigstens ca. 10 m²/g, insbesondere von ca. 10 m²/g bis ca. 50 m²/g.

Aufgrund der sehr hohen spezifischen Oberflächen der oxidischen Niob(V) und/oder Tantal(V) enthaltenden Materialien, insbesondere bis zu einer Temperatur von ca. 600 °C, kann eine hohe Dispersion der leitfähigen Aktivkomponente garantiert werden. Dies ist besonders vorteilhaft, weil die hier beschriebenen Katalysatoren vor ihrer Verwendung üblicherweise thermisch behandelt werden, insbesondere bei erhöhten Temperaturen im Rahmen einer Kalzination, vorteilhaft bei Temperaturen im Bereich von ca. 300 °C bis ca. 600 °C.

Nach alledem kann festgestellt werden, dass die hier beschriebenen Mehrkomponenten-Katalysatoren hohe katalytisch aktive Oberflächen aufweisen, und zwar vorteilhafterweise auch bei den vorgenannten erhöhten Temperaturen.

Die spezifischen Oberflächen der hier beschriebenen Katalysatoren sind, insbesondere in Abhängigkeit von dem Iridiumgehalt des Katalysators und der für die thermische (Vorbehandlung des jeweiligen Katalysators gewählten Dauer, hoch bis sehr hoch und betragen mehr als 10 m²/g und höchstens 150 m²/g, üblicherweise wenigstens 12 m²/g und höchstens 150 m²/g, insbesondere mehr als 12 m²/g und höchstens 150 m²/g oder wenigstens 15 m²/g und höchstens 150 m²/g. Diese BET-Werte gelten typischerweise für hier vorgestellte Katalysatoren, welche einer thermischen Behandlung für 1 Stunde bei einer Temperatur im Bereich von ca. 300 °C bis ca. 800 °C, insbesondere bei einer Temperatur im Bereich von ca. 300 °C bis ca. 600 °C, beispielsweise im Bereich von ca. 350 °C bis ca. 500 °C oder im Bereich von ca. 400 °C bis ca. 600 °C, unterzogen wurden. Dabei gilt: Je höher der Iridiumgehalt des Katalysators - im Falle ein und derselben Trägerkomponente gemäß einer oder mehreren Ausführungsformen der weiter oben beschriebenen porösen oxidischen Niob(V) und/oder Tantal(V) enthaltenden Materialien -, desto geringer ist die spezifische Oberfläche des Katalysators.

Zusammenfassend kann festgestellt werden, dass die hier beschriebenen IrO₂ enthaltenden Katalysatoren aufgrund der vorgesehenen Trägerkomponente, welche wenigstens ein poröses oxidisches Niob(V) und/oder Tantal(V) enthaltendes Material enthält oder aus wenigstens einem porösen oxidischen Niob(V) und/oder Tantal(V) enthaltenden Material besteht:
a. nach thermischer Behandlung bei erhöhter Temperatur, d. h. oberhalb von 100 °C, nämlich bei Temperaturen im Bereich von *ca.* 300 °C und bis *ca.* 800 °C, beispielsweise bei *ca.* 350 °C oder bei *ca.* 400 °C oder bei ca. 450 °C oder bei *ca.* 500 °C oder bei *ca.* 550 °C oder bei *ca.* 600 °C oder bei *ca.* 650 °C oder bei *ca.* 700 °C oder bei *ca.* 750 °C, insbesondere bei Temperaturen im Bereich von *ca.* 300 °C bis *ca.* 600 °C, beispielsweise bei *ca.* 350 °C oder bei *ca.* 400 °C oder bei *ca.* 450 °C oder bei *ca.* 500 °C oder bei *ca.* 550 °C noch eine hohe oder sehr hohe spezifische Oberfläche aufweisen, welche insbesondere oberhalb der spezifischen Oberfläche von ungeträgertem IrO₂ liegt;
b. die spezifischen Oberflächen im Bereich von *ca.* 300 °C und bis zu *ca.* 800 °C, insbesondere im Bereich von *ca.* 300 °C bis *ca.* 600 °C, temperaturstabil oder im Wesentlichen temperaturstabil sind;
c. gegenüber Säuren und Basen stabil sind.

Aus alledem ergibt sich, dass die hier beschriebenen Katalysatoren sich beispielsweise eignen für die Verwendung in: a) einer regenerativen Brennstoffzelle, b) einer PEM-Brennstoffzelle, c) einer PEM-Wasserelektrolysezelle, d) einem Sensor, e) einer elektrolytischen Zelle oder f) einer sonstigen elektrochemischen Vorrichtung. Dabei können sie in einer Elektrode, insbesondere einer Anode, vorgesehen sein, in einer katalysatorbeschichteten Membran oder in einer Membran-Elektroden-Einheit, wobei die Membran-Elektroden-Einheit insbesondere Bestandteil einer PEM-Brennstoffzelle oder eines PEM-Wasserelektrolyseurs ist.

Besonders vorteilhaft ist der Einsatz der hier beschriebenen Katalysatoren als OER-Katalysatoren in einer PEM-Wasserelektrolysezelle. Denn überraschenderweise zeigten Katalysatoren der hier vorgestellten Typen ein zufriedenstellendes, d. h. ein ausgeglichenes oder im Wesentlichen ausgeglichenes, Verhältnis zwischen elektrochemischer Stabilität und elektrokatalytischer Aktivität, wobei der Testzeitraum sechs Stunden betrug. Mit anderen Worten: Das Vorsehen der Trägerkomponente, umfassend wenigstens ein poröses oxidisches Niob(V) und/oder Tantal(V) enthaltendes Material oder bestehend aus wenigstens einem porösen oxidischen Niob(V) und/oder Tantal(V) enthaltenden Material, insbesondere gemäß einer der weiter oben beschriebenen Ausführungsformen, bedingt nicht nur eine hohe katalytisch aktive Oberfläche der Katalysatoren, sondern auch eine Stabilisierung des Katalysators. Letztere führt wiederum zu einer Stabilisierung der katalytisch aktiven Oberfläche des Katalysators, welche einen stabilisierenden Effekt bezüglich der elektrokatalytischen Aktivität des Katalysators zur Folge hat.

Die hier beschriebenen Katalysatoren sind vorteilhafterweise auf einfache Weise, reproduzierbar, umwelt- und ressourcenschonend und vergleichsweise kostengünstig herstellbar, und zwar in quantitativer oder nahezu quantitativer Ausbeute und in sehr hoher Reinheit. Letzteres ist unter anderem darauf zurückzuführen, dass die weiter oben beschriebenen porösen oxidischen Niob(V) und/oder Tantal(V) enthaltenden und in hoher Reinheit erhältlichen Materialien als Trägerkomponente vorgesehen sind. Besonders vorteilhaft ist, dass die zur Herstellung der hier vorgestellten Katalysatoren eingesetzten oxidischen Gruppe 5-Element-Materialien säure- und laugenstabil und, insbesondere im Vergleich zu kommerziell erhältlichen Niob(V)-oxiden, große spezifische Oberfläche aufweisen. Die hier beschriebenen Katalysatoren können zwar Verunreinigungen enthalten, insbesondere durch Haupt- oder Nebengruppenmetalle, Halbmetalle oder Kohlenstoff. Die Summe aller mittels ICP-OES Analyse bestimmten Verunreinigungen beträgt jedoch höchstens 1000 ppmw. Nach alledem genügen die hier vorgestellten Katalysatoren den Anforderungen, welche an (Elektro-)Katalysatoren gestellt werden. Hinzu kommt, dass sie auch im industriellen Maßstab in vergleichbarer Ausbeute und Reinheit erhältlich sind. Nach alledem sind diese Katalysatoren aus (atom-)ökonomischer und ökologischer Sicht vorteilhaft und für den Einsatz im großtechnischen Maßstab prädestiniert.

Die Verwendung einer Auswahl hier vorgestellter Iridium enthaltenden Katalysatoren als OER-Katalysatoren zeigte, dass diese Katalysatoren ein ausgeglichenes Verhältnis zwischen elektrochemischer Stabilität und elektrokatalytischer Aktivität aufweisen.

Überraschenderweise besitzen die getesteten Katalysatoren mit einem Massenanteil w(lridium) von ca. 75 % - bei vergleichbarer mittlerer IrO₂-Kristallitgröße und einem vergleichbaren Massenanteil w(lridium) - eine gegenüber Referenzkatalysatoren, welche TiO₂ als Trägerkomponente aufweisen, verbesserte elektrochemische Stabilität (vgl. Ausführungsbeispiele, **Tabelle 8**, Spalte 6). Unter den Referenzkatalysatoren war auch der kommerziell erhältliche Katalysator Umicore^{®} Elyst Ir75 0480 (CAS-Nummer: 12030-49-8).

Besonders überraschend war, dass die getesteten Katalysatoren mit einem geringeren Massenanteil w(lridium), nämlich von ca. 60 %, eine deutlich erhöhte elektrochemische Stabilität gegenüber den vorgenannten TiO₂-geträgerten Vergleichskatalysatoren zeigten. Und zwar unabhängig davon, ob die Trägerkomponente Niob(V) und/oder Tantal(V) enthielt. Zudem wurden für die getesteten Katalysatoren mit einem Massenanteil w(lridium) von *ca.* 60 % insgesamt höhere elektrochemische Stabilitäten beobachtet als im Falle der hier vorgestellten Katalysatoren mit einem Massenanteil w(lridium) von *ca.* 75 % (vgl. Ausführungsbeispiele, **Tabelle 8**, Spalte 6).

Schließlich gilt für alle hier vorgestellten und getesteten Katalysatoren - im Falle ein und derselben Trägerkomponente -: Je kleiner die mittlere IrO₂-Kristallitgröße, desto höher ist die elektrokatalytische Aktivität und desto geringer ist die elektrochemische Stabilität.

Eine andere Ausführungsform des hier vorgestellten Katalysators sieht vor, dass
i. die Aktivkomponente zusätzlich zu IrO₂ Iridium(IV)-hydroxid (Ir(OH)₄) und/oder Iridiumhydroxidoxid IrO(OH)ₓ, wobei 1 ≤ x < 2 ist, umfasst,
   und/oder
ii. IrO₂ vollständig kristallin vorliegt und Rutilstruktur aufweist,
   und/oder
iii. eine mittlere IrO₂-Kristallitgröße wenigstens 1 nm und höchstens 20 nm beträgt.

Die mittlere IrO₂-Kristallitgröße kann auch wenigstens 1 nm und höchstens 19 nm oder wenigstens 2 nm und höchstens 19 nm oder wenigstens 3 nm und höchstens 19 nm, insbesondere wenigstens 4 nm und höchstens 19 nm betragen, beispielsweise 1,5 nm oder 2 nm oder 2,5 nm oder 3 nm oder 3,5 nm oder 4 nm oder 4,5 nm oder 5 nm oder 5,5 nm oder 6 nm oder 6,5 nm oder 7 nm oder 7,5 nm oder 8 nm oder 8,5 nm oder 9 nm oder 9,5 nm oder 10 nm oder 10,5 nm oder 11 nm oder 11,5 nm oder 12 nm oder 12,5 nm oder 13 nm oder 13,5 nm oder 14 nm oder 14,5 nm oder 15 nm oder 15,5 nm oder 16 nm oder 16,5 nm oder 17 nm oder 17,5 nm oder 18 nm oder 18,5 nm oder 19 nm oder 19,5 nm betragen.

Dem Fachmann sind Methoden zur Bestimmung der mittleren IrO₂-Kristallitgröße hinreichend bekannt. Insbesondere geeignet ist die Röntgen-Pulverdiffraktometrie (engl. *X-ray diffraction,* XRD, bzw. *powder X-ray diffraction*, PXRD), wobei eine Rietveld-Analyse durchgeführt wird.

Im Rahmen der Bestimmung der mittleren IrO₂-Kristallitgrößen mit Hilfe der Rietveld-Analyse wurden hier als Referenzen IrO₂ (PDF-Nr.: 98-005-6009) und Ir⁰ (PDF-Nr.: 98-004-1524) verwendet. Ein Auswertefehler bei der Bestimmung der mittleren Kristallitgröße kann hier, insbesondere in Abhängigkeit von der Probenzusammensetzung, der gewählten Kalzinationstemperatur und der Kristallinität der Probenbestandteile, +/- 0,3 nm betragen.

Nach einer weiteren Ausführungsvariante des hier beschriebenen Katalysators
i. besteht die iridiumhaltige Aktivkomponente gemäß einer Rietveld-Analyse aus IrO₂, oder
ii. enthält die Aktivkomponente Iridiummetall (Ir⁰),
   wobei gemäß einer Rietveld-Analyse ein Massenverhältnis IrO₂ : Ir⁰ wenigstens 90 : 10 beträgt, insbesondere mehr als 90 : 10 und weniger als 95 : 5 beträgt oder mehr als 91 : 9 und weniger als 95 : 5 beträgt oder mehr als 92 : 8 und weniger als 95 : 5 beträgt oder mehr als 93 : 7 und weniger als 95: 5 beträgt, beispielsweise mehr als 94 : 6 und weniger als 95 : 5 beträgt.

Für die Rietveld-Analyse der mittels Röntgen-Pulverdiffraktometrie (engl. *X-ray diffraction*, XRD, bzw. *powder X-ray diffraction*, PXRD) erhaltenen Röntgenbeugungsdiagramme wurden als Referenzen IrO₂ (PDF-Nr.: 98-005-6009) und Ir⁰ (PDF-Nr.: 98-004-1524) verwendet. Ein Auswertefehler bei der Bestimmung des Ir⁰-Anteils kann hier, insbesondere in Abhängigkeit von der Probenzusammensetzung, der gewählten Kalzinationstemperatur und der Kristallinität der Probenbestandteile, +/- 2 Gew.-% betragen.

Im Falle einiger weiter unten beschriebener Proben von Gruppe A-Katalysatoren, welche einen Massenanteil w(lridium) von ca. 75 % enthalten, und von Gruppe B-Katalysatoren, welche einen Massenanteil w(lridium) von ca. 60 % enthalten, betrug gemäß Rietveld-Analyse das Massenverhältnis IrO₂ : Ir⁰ mehr als 94 : 6 und weniger als 95 : 5. Zudem konnte mittels XRD-Analyse ausschließlich IrO₂ als Iridium enthaltende Verbindung nachgewiesen werden, d. h. die Aktivkomponenten der untersuchten Gruppe A-Katalysatoren und Gruppe B-Katalysatoren bestand gemäß Rietveld-Analyse aus der Haupt-Aktivkomponente IrO₂ und dem als Nebenprodukt angefallenen Ir⁰.

Es sei an dieser Stelle darauf hingewiesen, dass amorph vorliegendes Ir⁰ und amorph vorliegende Iridium-Verbindungen mittels XRD-Analyse nicht nachweisbar sind. Aus diesem Grund ist nicht auszuschließen, dass die Aktivkomponenten der untersuchten Katalysatoren - zusätzlich zu IrO₂ - Ir⁰ und/oder eine oder mehrere weitere Iridium-Verbindungen enthielten. Dabei könnte es sich - in Abhängigkeit von den für die Synthese der vorgenannten Katalysatoren gewählten Reaktionsbedingungen - um eine oder mehrere weitere Iridium(IV)-Verbindungen handeln, beispielsweise Iridium(IV)-hydroxid (Ir(OH)₄). Das vorgenannte Hydroxid kann auch als Hydrat von IrO₂ betrachtet werden. Zu den Reaktionsbedingungen zählen insbesondere die Wahl des Iridiumsalzes, die Reaktionszeit, die Reaktionstemperatur, die gewählte Iridiumionen-Konzentration, die gewählte Trägerkomponenten-Konzentration.

Gemäß einer weiteren vorteilhaften Variante des hier vorgestellten Katalysators ist der Katalysator für einen Zeitraum von 1 Stunde bei einer Temperatur im Bereich von 300 °C bis weniger als 800 °C oder im Bereich von 300 °C bis 750 °C oder im Bereich von 300 °C bis 700 °C oder im Bereich von 300 °C bis 650 °C, insbesondere im Bereich von 300 °C bis 600 °C, beispielsweise im Bereich von 350 °C bis 500 °C oder im Bereich von 400 °C bis 600 °C, thermisch behandelt, insbesondere kalziniert, vorteilhaft unter Luftatmosphäre kalziniert, und weist wenigstens eine der folgenden Eigenschaften auf:
i. die mittels der BET-Methode bestimmte spezifische Oberfläche des Katalysators beträgt wenigstens 12 m²/g und höchstens 150 m²/g oder mehr als 12 m²/g und höchstens 150 m²/g oder wenigstens 15 m²/g und höchstens 150 m²/g;
ii. die mittlere IrO₂-Kristallitgröße beträgt wenigstens 1 nm und höchstens 12 nm.

In einer anderen Ausführungsform des hier beschriebenen Katalysators beträgt die mittlere IrO₂-Kristallitgröße wenigstens 1 nm und höchstens 11,5 nm oder wenigstens 1 nm und höchstens 11 nm oder wenigstens 1 nm und höchstens 10,5 nm, insbesondere wenigstens 1 nm und höchstens 10 nm betragen. Die mittlere IrO₂-Kristallitgröße kann beispielsweise 1,1 nm oder 1,2 nm oder 1,3 nm oder 1,4 nm oder 1,5 nm oder 1,6 nm oder 1,7 nm oder 1,8 nm oder 1,9 nm oder 2 nm oder 2,1 nm oder 2,2 nm oder 2,3 nm oder 2,4 nm oder 2,5 nm oder 2,6 nm oder 2,7 nm oder 2,8 nm oder 2,9 nm oder 3 nm oder 3,1 nm oder 3,2 nm oder 3,3 nm oder 3,4 nm oder 3,5 nm oder 3,6 nm oder 3,7 nm oder 3,8 nm oder 3,9 nm oder 4 nm oder 4,1 nm oder 4,2 nm oder 4,3 nm oder 4,4 nm oder 4,5 nm oder 4,6 nm oder 4,7 nm oder 4,8 nm oder 4,9 nm oder 5 nm oder 5,1 nm oder 5,2 nm oder 5,3 nm oder 5,4 nm oder 5,5 nm oder 5,6 nm oder 5,7 nm oder 5,8 nm oder 5,9 nm oder 6 nm oder 6,1 nm oder 6,2 nm oder 6,3 nm oder 6,4 nm oder 6,5 nm oder 6,6 nm oder 6,7 nm oder 6,8 nm oder 6,9 nm oder 7 nm oder 7,1 nm oder 7,2 nm oder 7,3 nm oder 7,4 nm oder 7,5 nm oder 7,6 nm oder 7,7 nm oder 7,8 nm oder 7,9 nm oder 8 nm oder 8,1 nm oder 8,2 nm oder 8,3 nm oder 8,4 nm oder 8,5 nm oder 8,6 nm oder 8,7 nm oder 8,8 nm oder 8,9 nm oder 9 nm oder 9,1 nm oder 9,2 nm oder 9,3 nm oder 9,4 nm oder 9,5 nm oder 9,6 nm oder 9,7 nm oder 9,8 nm oder 9,9 nm betragen.

Der Wert der mittels der BET-Methode bestimmten spezifischen Oberfläche hängt - im Falle ein und derselben Trägerkomponente gemäß einer oder mehreren Ausführungsformen der weiter oben beschriebenen porösen oxidischen Niob(V) und/oder Tantal(V) enthaltenden Materialien - insbesondere von der Iridiumbeladung beziehungsweise dem Iridiumgehalt des jeweiligen Katalysators ab, d. h. von dem Massenanteil w(lridium) an der Gesamtmasse des jeweiligen Katalysators, und der für die thermische (Vor-)Behandlung des jeweiligen Katalysators gewählten Zeitdauer ab.

In einer weiteren vorteilhaften Ausführungsform des hier vorgestellten Katalysators ist vorgesehen, dass der Massenanteil w(lridium) an der Gesamtmasse des Katalysators wenigstens 70 % und höchstens 80 % beträgt.

Insbesondere beträgt der Massenanteil w(lridium) an der Gesamtmasse des Katalysators mehr als 70 % und weniger als 80 % oder wenigstens 71 % und höchstens 79 %. Der Massenanteil w(lridium) an der Gesamtmasse des Katalysators kann also beispielsweise 72 % oder 73 % oder 74 % oder 75 % oder 76 % oder 77 % oder 78 % betragen.

Ein Katalysator, welcher einen Massenanteil w(lridium) an der Gesamtmasse des Katalysators von wenigstens 70 % und von höchstens 80 % aufweist, wird - unabhängig davon, bei welcher Temperatur oder bei welchen Temperaturen im Bereich von 300 °C bis 800 °C er, insbesondere nach einer Trocknung bei 100 °C, einer oder mehreren thermischen Behandlungen unterzogen worden ist - nachfolgend als **Gruppe A-**Katalysator oder als Katalysator der **Gruppe A** bezeichnet. Der Katalysatorgruppe A kann eine Vielzahl von Katalysatormaterialien, d. h. Katalysatoren, zugeordnet werden, welche nachfolgend als Katalysatortypen bezeichnet werden. Beispielsweise umfasst Gruppe A-Katalysatoren der Typen Ir75NbOx, Ir75TaOx, Ir75Nb_{0,5}Ta_{0,5}Ox, Ir75Nb_{0,75}Ta_{0,25}Ox, Ir75Nb_{0,25}Ta_{0,75}Ox. Diese beispielhaft genannten Katalysatortypen werden zusammenfassend als Ir75-Katalysatoren bezeichnet.

Die vorgenannten verkürzten Bezeichnungen der Katalysatortypen sind jeweils zusammengesetzt aus:
i. dem Elementsymbol für Iridium (Ir), welches anzeigt, dass eine iridiumhaltige Aktivkomponente enthalten ist, jedoch keine Angabe bezüglich der Oxidationsstufe(n) oder der Zusammensetzung der Aktivkomponente macht,
ii. dem Sollwert des Massenanteils w(lridium) (in Prozent) bezogen auf die Gesamtmasse des jeweiligen Katalysators, wobei der jeweilige wahre Wert für jeden einzelnen Katalysator mittels ICP-OES-Analyse bestimmt werden kann,
   und
iii. der nicht leitenden Trägerkomponente, welche ausgewählt ist aus der Gruppe bestehend aus den porösen oxidischen Materialien gemäß einer oder mehreren der weiter oben beschriebenen Ausführungsformen, deren spezifische Oberfläche von der für die Kalzination vorgesehenen Temperatur T_{K} und der Kalzinationsdauer t_{K} abhängig ist, insbesondere ausgewählt aus der Gruppe bestehend aus NbOx, TaOx und Nb_{1-y}Ta_{y}Ox (y = 0,25 oder y = 0,5 oder y = 0,75).

Ist beispielsweise von einem Ir75-Katalysator die Rede, so kann es sich um einen Gruppe A-Katalysator mit einem Massenanteil w(lridium) von 75 % handeln. Es ist jedoch beispielsweise auch möglich, dass es sich um einen Gruppe A-Katalysator mit einem Massenanteil w(lridium) von 73 % oder 77 % handelt. Dies ist auf zufällige Fehler und gegebenenfalls auf systematische Fehler während der Synthese der Katalysatoren zurückzuführen.

Analoges gilt für die weiter unten beschriebenen Gruppe B-Katalysatoren und Gruppe C-Katalysatoren.

Nach einer vorteilhaften Variante des Gruppe A-Katalysators
a. besteht die Trägerkomponente aus
   - wenigstens einem ersten porösen oxidischen Niob(V) enthaltenden Material gemäß wenigstens einer der weiter oben beschriebenen Ausführungsformen, oder
   - wenigstens einem zweiten porösen oxidischen Niob(V) enthaltenden Material gemäß wenigstens einer der weiter oben beschriebenen Ausführungsformen, oder
   - wenigstens einem porösen oxidischen Tantal(V) enthaltenden Material gemäß wenigstens einer der weiter oben beschriebenen Ausführungsformen, oder
   - wenigstens einem porösen oxidischen Niob(V) und Tantal(V) enthaltenden Material gemäß der allgemeinen Formel Nb_{1-y}Ta_{y}Ox besteht, wobei 0 < y < 1 ist,
   gemäß wenigstens einer der weiter oben beschriebenen Ausführungsformen, und
b. die mittels der BET-Methode bestimmte spezifische Oberfläche des Katalysators beträgt wenigstens 12 m²/g und höchstens 70 m²/g oder mehr als 12 m²/g und höchstens 70 m²/g oder wenigstens 15 m²/g und höchstens 70 m²/g.

Hier handelt es sich um Gruppe A-Katalysatoren des Typs Ir75NbOx, insbesondere erhalten unter Verwendung wenigstens eines ersten porösen oxidischen Niob(V) enthaltenden Materials gemäß wenigstens einer der weiter oben beschriebenen Ausführungsformen, oder des Typs Ir75TaOx oder des Typs Ir75Nb_{1-y}Ta_{y}Ox, wobei 0 < y < 1 ist. Beispielsweise ist y = 0,25 oder y = 0,5 oder y = 0,75.

Gemäß einer weiteren Ausführungsform des Gruppe A-Katalysators vom Typ Ir75NbOx oder des Typs Ir75TaOx oder des Typs Ir75Nb_{1-y}Ta_{y}Ox, wobei 0 < y < 1, ist der Katalysator für einen Zeitraum von 1 Stunde bei einer Temperatur von 600 °C thermisch behandelt, insbesondere kalziniert, vorteilhaft unter Luftatmosphäre kalziniert, und weist wenigstens eine der folgenden Eigenschaften auf:
a. die mittels der BET-Methode bestimmte spezifische Oberfläche des Katalysators beträgt mehr als 12 m²/g und höchstens 70 m²/g oder wenigstens 15 m²/g und höchstens 70 m²/g oder mehr als 15 m²/g und höchstens 70 m²/g;
b. die mittlere IrO₂-Kristallitgröße beträgt wenigstens 4 nm und höchstens 8 nm.

Die für den Gruppe A-Katalysator des Typs Ir75NbOx oder des Typs Ir75TaOx oder des Typs Ir75Nb_{1-y}Ta_{y}Ox, wobei 0 < y < 1, mittels der BET-Methode bestimmte spezifische Oberfläche kann also beispielsweise 13 m²/g oder 14 m²/g oder 15 m²/g oder 16 m²/g oder 17 m²/g oder 18 m²/g oder 19 m²/g oder 20 m²/g oder 21 m²/g oder 22 m²/g oder 23 m²/g oder 24 m²/g oder 25 m²/g oder 26 m²/g oder 27 m²/g oder 28 m²/g oder 29 m²/g oder 30 m²/g oder 31 m²/g oder 32 m²/g oder 33 m²/g oder 34 m²/g oder 35 m²/g oder 36 m²/g oder 37 m²/g oder 38 m²/g oder 39 m²/g oder 40 m²/g oder 41 m²/g oder 42 m²/g oder 43 m²/g oder 44 m²/g oder 45 m²/g oder 46 m²/g oder 47 m²/g oder 48 m²/g oder 49 m²/g oder 50 m²/g oder 51 m²/g oder 52 m²/g oder 53 m²/g oder 54 m²/g oder 55 m²/g oder 56 m²/g oder 57 m²/g oder 58 m²/g oder 59 m²/g oder 60 m²/g oder 61 m²/g oder 62 m²/g oder 63 m²/g oder 64 m²/g oder 65 m²/g oder 66 m²/g oder 67 m²/g oder 68 m²/g oder 69 m²/g betragen.

Die mittlere IrO₂-Kristallitgröße des für einen Zeitraum von 1 Stunde bei einer Temperatur von 600 °C thermisch behandelten Gruppe A-Katalysators des Typs Ir75NbOx oder des Typs Ir75TaOx oder des Typs Ir75Nb_{1-y}Ta_{y}Ox, wobei 0 < y < 1, kann auch wenigstens 4,1 nm und höchstens 7,9 nm oder wenigstens 4,2 nm und höchstens 7,8 nm oder wenigstens 4,3 nm und höchstens 7,7 nm, insbesondere wenigstens 4,4 nm und höchstens 7,6 nm betragen, beispielsweise 4,5 nm oder 4,6 nm oder 4,7 nm oder 4,8 nm oder 4,9 nm oder 5 nm oder 5,1 nm oder 5,2 nm oder 5,3 nm oder 5,4 nm oder 5,5 nm oder 5,6 nm oder 5,7 nm oder 5,8 nm oder 5,9 nm oder 6 nm oder 6,1 nm oder 6,2 nm oder 6,3 nm oder 6,4 nm oder 6,5 nm oder 6,6 nm oder 6,7 nm oder 6,8 nm oder 6,9 nm oder 7 nm oder 7,1 nm oder 7,2 nm oder 7,3 nm oder 7,4 nm oder 7,5 nm.

Beispielsweise beträgt die mittels der BET-Methode bestimmte spezifische Oberfläche für einen Gruppe A-Katalysator des hier vorgestellten Typs Ir75NbOx, welcher einen Massenanteil w(lridium) an der Gesamtmasse des Katalysators im Bereich von ca. 72 % bis ca. 78 % aufweist und für einen Zeitraum von 1 Stunde bei einer Temperatur von 600 °C thermisch behandelt ist, 27 m²/g. Und die mittlere IrO₂-Kristallitgröße beträgt gemäß Rietveld-Analyse 6 nm.

Die mittels der BET-Methode für einen Gruppe A-Katalysator des hier vorgestellten Typs Ir75TaOx, welcher einen Massenanteil w(lridium) an der Gesamtmasse des Katalysators im Bereich von ca. 72 % bis ca. 78 % aufweist und für einen Zeitraum von 1 Stunde bei einer Temperatur von 600 °C thermisch behandelt ist, bestimmte spezifische Oberfläche beträgt beispielsweise 31 m²/g. Und die mittlere IrO₂-Kristallitgröße beträgt gemäß Rietveld-Analyse 6,2 nm.

Für einen Gruppe A-Katalysator des hier vorgestellten Typs Ir75Nb_{1-y}Ta_{y}Ox (y = 0,25: Ir75Nb_{0,75}Ta_{0,25}Ox), welcher einen Massenanteil w(lridium) an der Gesamtmasse des Katalysators im Bereich von ca. 72 % bis ca. 78 % aufweist und für einen Zeitraum von 1 Stunde bei einer Temperatur von 600 °C thermisch behandelt ist, beträgt die mittels der BET-Methode bestimmte spezifische Oberfläche beispielsweise 46 m²/g. Und die mittlere IrO₂-Kristallitgröße beträgt gemäß Rietveld-Analyse 6,2 nm.

Beispielsweise beträgt die mittels der BET-Methode bestimmte spezifische Oberfläche für einen Gruppe A-Katalysator des hier vorgestellten Typs Ir75Nb_{1-y}Ta_{y}Ox (y = 0,5: Ir75Nb_{0,5}Ta_{0,5}Ox), welcher einen Massenanteil w(lridium) an der Gesamtmasse des Katalysators im Bereich von ca. 72 % bis ca. 78 % aufweist und für einen Zeitraum von 1 Stunde bei einer Temperatur von 600 °C thermisch behandelt ist, 49 m²/g. Und die mittlere IrO₂-Kristallitgröße beträgt gemäß Rietveld-Analyse 6,5 nm.

Die mittels der BET-Methode bestimmte spezifische Oberfläche beträgt für einen Gruppe A-Katalysator des hier vorgestellten Typs Ir75Nb_{1-y}Ta_{y}Ox (y = 0,75: Ir75Nb_{0,25}Ta_{0,75}Ox), welcher einen Massenanteil w(lridium) an der Gesamtmasse des Katalysators im Bereich von ca. 72 % bis ca. 78 % aufweist und für einen Zeitraum von 1 Stunde bei einer Temperatur von 600 °C thermisch behandelt ist, beispielsweise 41 m²/g. Und die mittlere IrO₂-Kristallitgröße beträgt gemäß Rietveld-Analyse 6,2 nm.

Gemäß einer weiteren Ausführungsform des Gruppe A-Katalysators des Typs Ir75NbOx oder des Typs Ir75TaOx oder des Typs Ir75Nb_{1-y}Ta_{y}Ox, wobei 0 < y < 1, ist der Katalysator für einen Zeitraum von 1 Stunde bei einer Temperatur von 400 °C thermisch behandelt ist, insbesondere kalziniert, vorteilhaft unter Luftatmosphäre kalziniert, und weist wenigstens eine der folgenden Eigenschaften auf:
a. die mittels der BET-Methode bestimmte spezifische Oberfläche des Katalysators beträgt mehr als 12 m²/g und höchstens 70 m²/g oder wenigstens 15 m²/g und höchstens 70 m²/g oder mehr als 15 m²/g und höchstens 70 m²/g;
b. die mittlere IrO₂-Kristallitgröße beträgt wenigstens 2 nm und höchstens 5 nm.

Mithin kann die mittels der BET-Methode bestimmte spezifische Oberfläche des Gruppe A-Katalysators des Typs Ir75NbOx oder des Typs Ir75TaOx oder des Typs Ir75Nb_{1-y}Ta_{y}Ox, wobei 0 < y < 1, beispielsweise auch 13 m²/g oder 14 m²/g oder 15 m²/g oder 16 m²/g oder 17 m²/g oder 18 m²/g oder 19 m²/g oder 20 m²/g oder 21 m²/g oder 22 m²/g oder 23 m²/g oder 24 m²/g oder 25 m²/g oder 26 m²/g oder 27 m²/g oder 28 m²/g oder 29 m²/g oder 30 m²/g oder 31 m²/g oder 32 m²/g oder 33 m²/g oder 34 m²/g oder 35 m²/g oder 36 m²/g oder 37 m²/g oder 38 m²/g oder 39 m²/g oder 40 m²/g oder 41 m²/g oder 42 m²/g oder 43 m²/g oder 44 m²/g oder 45 m²/g oder 46 m²/g oder 47 m²/g oder 48 m²/g oder 49 m²/g oder 50 m²/g oder 51 m²/g oder 52 m²/g oder 53 m²/g oder 54 m²/g oder 55 m²/g oder 56 m²/g oder 57 m²/g oder 58 m²/g oder 59 m²/g oder 60 m²/g oder 61 m²/g oder 62 m²/g oder 63 m²/g oder 64 m²/g oder 65 m²/g oder 66 m²/g oder 67 m²/g oder 68 m²/g oder 69 m²/g betragen.

Die mittlere IrO₂-Kristallitgröße des für einen Zeitraum von 1 Stunde bei einer Temperatur von 400 °C thermisch behandelten Gruppe A-Katalysators des Typs Ir75NbOx oder des Typs Ir75TaOx oder des Typs Ir75Nb_{1-y}Ta_{y}Ox, wobei 0 < y < 1, kann auch wenigstens 2,1 nm und höchstens 4,9 nm oder wenigstens 2,2 nm und höchstens 4,8 nm oder wenigstens 2,3 nm und höchstens 4,7 nm, insbesondere wenigstens 2,4 nm und höchstens 4,6 nm betragen, beispielsweise 2,5 nm oder 2,6 nm oder 2,7 nm oder 2,8 nm oder 2,9 nm oder 3 nm oder 3,1 nm oder 3,2 nm oder 3,3 nm oder 3,4 nm oder 3,5 nm oder 3,6 nm oder 3,7 nm oder 3,8 nm oder 3,9 nm oder 4 nm oder 4,1 nm oder 4,2 nm oder 4,3 nm oder 4,4 nm oder 4,5 nm.

Beispielsweise beträgt die mittels der BET-Methode bestimmte spezifische Oberfläche für einen Gruppe A-Katalysator des hier vorgestellten Typs Ir75NbOx, welcher einen Massenanteil w(lridium) an der Gesamtmasse des Katalysators im Bereich von ca. 72 % bis ca. 78 % aufweist und für einen Zeitraum von 1 Stunde bei einer Temperatur von 400 °C thermisch behandelt ist, 25 m²/g. Und die mittlere IrO₂-Kristallitgröße beträgt gemäß Rietveld-Analyse 2,7 nm.

Die für einen Gruppe A-Katalysator des hier vorgestellten Typs Ir75TaOx, welcher einen Massenanteil w(lridium) an der Gesamtmasse des Katalysators im Bereich von ca. 72 % bis ca. 78 % aufweist und für einen Zeitraum von 1 Stunde bei einer Temperatur von 400 °C thermisch behandelt ist, mittels der BET-Methode bestimmte spezifische Oberfläche beträgt beispielsweise 30 m²/g. Und die mittlere IrO₂-Kristallitgröße beträgt gemäß Rietveld-Analyse 3,2 nm.

Beispielsweise beträgt die mittels der BET-Methode bestimmte spezifische Oberfläche für einen Gruppe A-Katalysator des hier vorgestellten Typs Ir75Nb_{1-y}Ta_{y}Ox (y = 0,5: Ir75Nb_{0,5}Ta_{0,5}Ox), welcher einen Massenanteil w(lridium) an der Gesamtmasse des Katalysators im Bereich von ca. 72 % bis ca. 78 % aufweist und für einen Zeitraum von 1 Stunde bei einer Temperatur von 400 °C thermisch behandelt ist, 49 m²/g. Und die mittlere IrO₂-Kristallitgröße beträgt gemäß Rietveld-Analyse 3,7 nm.

Gemäß einer anderen vorteilhaften Ausführungsform des hier vorgestellten Katalysators ist vorgesehen, dass der Massenanteil w(lridium) an der Gesamtmasse des Katalysators wenigstens 59 % und weniger als 70 % beträgt.

Insbesondere beträgt der Massenanteil w(lridium) an der Gesamtmasse des Katalysators mehr als 59 % und höchstens 69 % oder wenigstens 60 % und höchstens 68 %. Dann kann der Massenanteil w(lridium) an der Gesamtmasse des Katalysators also zum Beispiel auch 61 % oder 62 % oder 63 % oder 64 % oder 65 % oder 66 % oder 67 % betragen.

Ein Katalysator, welcher einen Massenanteil w(lridium) an der Gesamtmasse des Katalysators von wenigstens 59 % und von weniger als 70 % aufweist, wird - unabhängig davon, bei welcher Temperatur oder bei welchen Temperaturen im Bereich von 300 °C bis 800 °C er, insbesondere nach einer Trocknung bei 100 °C, einer oder mehreren thermischen Behandlungen unterzogen worden ist - nachfolgend als **Gruppe B-**Katalysator oder als Katalysator der **Gruppe B** bezeichnet. Der Katalysatorgruppe B kann eine Vielzahl von Katalysatormaterialien, d. h. Katalysatoren, zugeordnet werden, welche nachfolgend als Katalysatortypen bezeichnet werden. Beispielsweise enthält Gruppe B-Katalysatoren der Typen Ir60NbOx, Ir60TaOx, Ir60Nb_{0,5}Ta_{0,5}Ox. Diese beispielhaft genannten Katalysatortypen werden zusammenfassend als Ir60-Katalysatoren bezeichnet. Für Erläuterungen bezüglich der vorgenannten verkürzten Bezeichnungen der Katalysatortypen wird auf die weiter oben im Zusammenhang mit Gruppe A-Katalysatoren angegebenen Informationen verwiesen.

Nach einer vorteilhaften Variante des Gruppe B-Katalysators
a. besteht die Trägerkomponente aus
   - wenigstens einem ersten porösen oxidischen Niob(V) enthaltenden Material gemäß wenigstens einer der weiter oben beschriebenen Ausführungsformen, oder
   - wenigstens einem zweiten porösen oxidischen Niob(V) enthaltenden Material gemäß wenigstens einer der weiter oben beschriebenen Ausführungsformen, oder
   - wenigstens einem porösen oxidischen Tantal(V) enthaltenden Material gemäß wenigstens einer der weiter oben beschriebenen Ausführungsformen, oder
   - wenigstens einem porösen oxidischen Niob(V) und Tantal(V) enthaltenden Material gemäß der allgemeinen Formel Nb_{1-y}Ta_{y}Ox besteht, wobei 0 < y < 1 ist, gemäß wenigstens einer der weiter oben beschriebenen Ausführungsformen,
   und
b. beträgt die mittels der BET-Methode bestimmte spezifische Oberfläche des Katalysators wenigstens 12 m²/g und höchstens 120 m²/g oder mehr als 12 m²/g und höchstens 120 m²/g oder wenigstens 15 m²/g und höchstens 120 m²/g.

Hier handelt es sich um Gruppe B-Katalysatoren des Typs Ir60NbOx, insbesondere erhalten unter Verwendung wenigstens eines ersten porösen oxidischen Niob(V) enthaltenden Materials gemäß wenigstens einer der weiter oben beschriebenen Ausführungsformen, oder des Typs Ir60TaOx oder des Typs Ir60Nb_{1-y}Ta_{y}Ox, wobei 0 < y < 1 ist. Beispielsweise ist y = 0,25 oder y = 0,5 oder y = 0,75.

Gemäß einer weiteren Ausführungsform des Gruppe B-Katalysators des Typs Ir60NbOx oder des Typs Ir60TaOx oder des Typs Ir60Nb_{1-y}Ta_{y}Ox, wobei 0 < y < 1, ist der Katalysator für einen Zeitraum von 1 Stunde bei einer Temperatur von 500 °C thermisch behandelt, insbesondere kalziniert, vorteilhaft unter Luftatmosphäre kalziniert, und weist wenigstens eine der folgenden Eigenschaften auf:
a. die mittels der BET-Methode bestimmte spezifische Oberfläche des Katalysators beträgt wenigstens 30 m²/g und höchstens 120 m²/g oder mehr als 30 m²/g und höchstens 120 m²/g oder wenigstens 35 m²/g und höchstens 120 m²/g;
b. die mittlere IrO₂-Kristallitgröße beträgt wenigstens 3 nm und höchstens 12 nm.

Die für den Gruppe B-Katalysator des Typs Ir60NbOx oder des Typs Ir60TaOx oder des Typs Ir60Nb_{1-y}Ta_{y}Ox, wobei 0 < y < 1, mittels der BET-Methode bestimmte spezifische Oberfläche kann also beispielsweise auch 31 m²/g oder 32 m²/g oder 33 m²/g oder 34 m²/g oder 35 m²/g oder 36 m²/g oder 37 m²/g oder 38 m²/g oder 39 m²/g oder 40 m²/g oder 41 m²/g oder 42 m²/g oder 43 m²/g oder 44 m²/g oder 45 m²/g oder 46 m²/g oder 47 m²/g oder 48 m²/g oder 49 m²/g oder 50 m²/g oder 51 m²/g oder 52 m²/g oder 53 m²/g oder 54 m²/g oder 55 m²/g oder 56 m²/g oder 57 m²/g oder 58 m²/g oder 59 m²/g oder 60 m²/g oder 61 m²/g oder 62 m²/g oder 63 m²/g oder 64 m²/g oder 65 m²/g oder 66 m²/g oder 67 m²/g oder 68 m²/g oder 69 m²/g oder 70 m²/g oder 71 m²/g oder 72 m²/g oder 73 m²/g oder 74 m²/g oder 75 m²/g oder 76 m²/g oder 77 m²/g oder 78 m²/g oder 79 m²/g oder 80 m²/g oder 81 m²/g oder 82 m²/g oder 83 m²/g oder 84 m²/g oder 85 m²/g oder 86 m²/g oder 87 m²/g oder 88 m²/g oder 89 m²/g oder 90 m²/g oder 91 m²/g oder 92 m²/g oder 93 m²/g oder 94 m²/g oder 95 m²/g oder 96 m²/g oder 97 m²/g oder 98 m²/g oder 99 m²/g oder 100 m²/g oder 101 m²/g oder 102 m²/g oder 103 m²/g oder 104 m²/g oder 105 m²/g oder 106 m²/g oder 107 m²/g oder 108 m²/g oder 109 m²/g oder 110 m²/g oder 111 m²/g oder 112 m²/g oder 113 m²/g oder 114 m²/g oder 115 m²/g oder 116 m²/g oder 117 m²/g oder 118 m²/g oder 119 m²/g betragen.

Die mittlere IrO₂-Kristallitgröße des für einen Zeitraum von 1 Stunde bei einer Temperatur von 500 °C thermisch behandelten Gruppe B-Katalysator des Typs Ir60NbOx oder des Typs Ir60TaOx oder des Typs Ir60Nb_{1-y}Ta_{y}Ox, wobei 0 < y < 1, kann auch wenigstens 3,1 nm und höchstens 11,9 nm oder wenigstens 3,2 nm und höchstens 11,8 nm oder wenigstens 3,3 nm und höchstens 11,7 nm, insbesondere wenigstens 3,4 nm und höchstens 11,6 nm, betragen, beispielsweise 3,5 nm oder 3,6 nm oder 3,7 nm oder 3,8 nm oder 3,9 nm oder 4 nm oder 4,1 nm oder 4,2 nm oder 4,3 nm oder 4,4 nm oder 4,5 nm oder 4,6 nm oder 4,7 nm oder 4,8 nm oder 4,9 nm oder 5 nm oder 5,1 nm oder 5,2 nm oder 5,3 nm oder 5,4 nm oder 5,5 nm oder 5,6 nm oder 5,7 nm oder 5,8 nm oder 5,9 nm oder 6 nm oder 6,1 nm oder 6,2 nm oder 6,3 nm oder 6,4 nm oder 6,5 nm oder 6,6 nm oder 6,7 nm oder 6,8 nm oder 6,9 nm oder 7 nm oder 7,1 nm oder 7,2 nm oder 7,3 nm oder 7,4 nm oder 7,5 nm oder 7,6 nm oder 7,7 nm oder 7,8 nm oder 7,9 nm oder 8 nm oder 8,1 nm oder 8,2 nm oder 8,3 nm oder 8,4 nm oder 8,5 nm oder 8,6 nm oder 8,7 nm oder 8,8 nm oder 8,9 nm oder 9 nm oder 9,1 nm oder 9,2 nm oder 9,3 nm oder 9,4 nm oder 9,5 nm oder 9,6 nm oder 9,7 nm oder 9,8 nm oder 9,9 nm oder 10 nm oder 10,1 nm oder 10,2 nm oder 10,3 nm oder 10,4 nm oder 10,5 nm oder 10,6 nm oder 10,7 nm oder 10,8 nm oder 10,9 nm oder 11 nm oder 11,1 nm oder 11,2 nm oder 11,3 nm oder 11,4 nm oder 11,5 nm.

Beispielsweise beträgt die mittels der BET-Methode bestimmte spezifische Oberfläche für einen Gruppe B-Katalysator des hier vorgestellten Typs Ir60NbOx, welcher einen Massenanteil w(lridium) an der Gesamtmasse des Katalysators im Bereich von mehr als 59 % bis ca. 65 % aufweist und für einen Zeitraum von 1 Stunde bei einer Temperatur von 500 °C thermisch behandelt ist, 64 m²/g. Und die mittlere IrO₂-Kristallitgröße beträgt gemäß Rietveld-Analyse 7,9 nm.

Die für einen Gruppe B-Katalysator des hier vorgestellten Typs Ir60TaOx, welcher einen Massenanteil w(lridium) an der Gesamtmasse des Katalysators im Bereich von mehr als 59 % bis ca. 65 % aufweist und für einen Zeitraum von 1 Stunde bei einer Temperatur von 500 °C thermisch behandelt ist, mittels der BET-Methode bestimmte spezifische Oberfläche beträgt beispielsweise 62 m²/g. Und die mittlere IrO₂-Kristallitgröße beträgt gemäß Rietveld-Analyse 5,1 nm.

Beispielsweise beträgt die mittels der BET-Methode bestimmte spezifische Oberfläche für einen Gruppe B-Katalysator des hier vorgestellten Typs Ir60Nb_{1-y}Ta_{y}Ox (y = 0,5: Ir60Nb_{0,5}Ta_{0,5}Ox), welcher einen Massenanteil w(lridium) an der Gesamtmasse des Katalysators im Bereich von mehr als 59 % bis ca. 65 % aufweist und für einen Zeitraum von 1 Stunde bei einer Temperatur von 500 °C thermisch behandelt ist, 73 m²/g. Und die mittlere IrO₂-Kristallitgröße beträgt gemäß Rietveld-Analyse 6,4 nm.

Gemäß einer weiteren Ausführungsform des Gruppe B-Katalysators des Typs Ir60NbOx oder des Typs Ir60TaOx oder des Typs Ir60Nb_{1-y}Ta_{y}Ox, wobei 0 < y < 1, ist der Katalysator für einen Zeitraum von 1 Stunde bei einer Temperatur von 350 °C thermisch behandelt, insbesondere kalziniert, vorteilhaft unter Luftatmosphäre kalziniert, und weist wenigstens eine der folgenden Eigenschaften auf:
a. die mittels der BET-Methode bestimmte spezifische Oberfläche des Katalysators beträgt mehr als 30 m²/g und höchstens 120 m²/g oder wenigstens 35 m²/g und höchstens 120 m²/g oder mehr als 35 m²/g und höchstens 120 m²/g;
b. die mittlere IrO₂-Kristallitgröße beträgt wenigstens 1 nm und höchstens 5 nm.

Mithin kann die mittels der BET-Methode für den Gruppe B-Katalysator des Typs Ir60NbOx oder des Typs Ir60TaOx oder des Typs Ir60Nb_{1-y}Ta_{y}Ox, wobei 0 < y < 1, bestimmte spezifische Oberfläche beispielsweise auch 31 m²/g oder 32 m²/g oder 33 m²/g oder 34 m²/g oder 35 m²/g oder 36 m²/g oder 37 m²/g oder 38 m²/g oder 39 m²/g oder 40 m²/g oder 41 m²/g oder 42 m²/g oder 43 m²/g oder 44 m²/g oder 45 m²/g oder 46 m²/g oder 47 m²/g oder 48 m²/g oder 49 m²/g oder 50 m²/g oder 51 m²/g oder 52 m²/g oder 53 m²/g oder 54 m²/g oder 55 m²/g oder 56 m²/g oder 57 m²/g oder 58 m²/g oder 59 m²/g oder 60 m²/g oder 61 m²/g oder 62 m²/g oder 63 m²/g oder 64 m²/g oder 65 m²/g oder 66 m²/g oder 67 m²/g oder 68 m²/g oder 69 m²/g oder 70 m²/g oder 71 m²/g oder 72 m²/g oder 73 m²/g oder 74 m²/g oder 75 m²/g oder 76 m²/g oder 77 m²/g oder 78 m²/g oder 79 m²/g oder 80 m²/g oder 81 m²/g oder 82 m²/g oder 83 m²/g oder 84 m²/g oder 85 m²/g oder 86 m²/g oder 87 m²/g oder 88 m²/g oder 89 m²/g oder 90 m²/g oder 91 m²/g oder 92 m²/g oder 93 m²/g oder 94 m²/g oder 95 m²/g oder 96 m²/g oder 97 m²/g oder 98 m²/g oder 99 m²/g oder 100 m²/g oder 101 m²/g oder 102 m²/g oder 103 m²/g oder 104 m²/g oder 105 m²/g oder 106 m²/g oder 107 m²/g oder 108 m²/g oder 109 m²/g oder 110 m²/g oder 111 m²/g oder 112 m²/g oder 113 m²/g oder 114 m²/g oder 115 m²/g oder 116 m²/g oder 117 m²/g oder 118 m²/g oder 119 m²/g betragen.

Die mittlere IrO₂-Kristallitgröße des für einen Zeitraum von 1 Stunde bei einer Temperatur von 350 °C thermisch behandelten Gruppe B-Katalysators des Typs Ir60NbOx oder des Typs Ir60TaOx oder des Typs Ir60Nb_{1-y}Ta_{y}Ox, wobei 0 < y < 1, kann auch wenigstens 1,1 nm und höchstens 4,9 nm oder wenigstens 1,2 nm und höchstens 4,8 nm oder wenigstens 1,3 nm und höchstens 4,7 nm, insbesondere wenigstens 1,4 nm und höchstens 4,6 nm, betragen, beispielsweise 1,5 nm oder 1,6 nm oder 1,7 nm oder 1,8 nm oder 1,9 nm oder 2 nm oder 2,1 nm oder 2,2 nm oder 2,3 nm oder 2,4 nm oder 2,5 nm oder 2,6 nm oder 2,7 nm oder 2,8 nm oder 2,9 nm oder 3 nm oder 3,1 nm oder 3,2 nm oder 3,3 nm oder 3,4 nm oder 3,5 nm oder 3,6 nm oder 3,7 nm oder 3,8 nm oder 3,9 nm oder 4 nm oder 4,1 nm oder 4,2 nm oder 4,3 nm oder 4,4 nm oder 4,5 nm.

Beispielsweise beträgt die mittels der BET-Methode bestimmte spezifische Oberfläche für einen Gruppe B-Katalysator des hier vorgestellten Typs Ir60NbOx, welcher einen Massenanteil w(lridium) an der Gesamtmasse des Katalysators im Bereich von mehr als 59 % bis ca. 65 % aufweist und für einen Zeitraum von 1 Stunde bei einer Temperatur von 350 °C thermisch behandelt ist, 72 m²/g. Und die mittlere IrO₂-Kristallitgröße beträgt gemäß Rietveld-Analyse 1,6 nm.

Die für einen Gruppe B-Katalysator des hier vorgestellten Typs Ir60TaOx, welcher einen Massenanteil w(lridium) an der Gesamtmasse des Katalysators im Bereich von mehr als 59 % bis ca. 65 % aufweist und für einen Zeitraum von 1 Stunde bei einer Temperatur im Bereich von 350 °C thermisch behandelt ist, mittels der BET-Methode bestimmte spezifische Oberfläche beträgt beispielsweise 70 m²/g. Und die mittlere IrO₂-Kristallitgröße beträgt gemäß Rietveld-Analyse 2,1 nm.

Die mittels der BET-Methode für einen Gruppe B-Katalysator des hier vorgestellten Typs Typs Ir60Nb_{1-y}Ta_{y}Ox (y = 0,5: Ir60Nb_{0,5}Ta_{0,5}Ox), welcher einen Massenanteil w(lridium) an der Gesamtmasse des Katalysators im Bereich von mehr als 59 % bis ca. 65 % aufweist und für einen Zeitraum von 1 Stunde bei einer Temperatur von 350 °C thermisch behandelt ist, bestimmte spezifische Oberfläche beträgt beispielsweise 89 m²/g. Und die mittlere IrO₂-Kristallitgröße beträgt gemäß Rietveld-Analyse 2,1 nm.

Gemäß einer noch weiteren vorteilhaften Ausführungsform des hier vorgestellten Katalysators beträgt der Massenanteil w(lridium) an der Gesamtmasse des Katalysators wenigstens 50 % und weniger als 59 %.

Insbesondere beträgt der Massenanteil w(lridium) an der Gesamtmasse des Katalysators mehr als 50 % und höchstens 58 % oder wenigstens 51 % und höchstens 57 %; Dann kann der Massenanteil w(lridium) an der Gesamtmasse des Katalysators beispielsweise auch 52 % oder 53 % oder 54 % oder 55 % oder 56 % betragen.

Ein Katalysator, welcher einen Massenanteil w(lridium) an der Gesamtmasse des Katalysators von wenigstens 50 % und von weniger als 59 % aufweist, wird - unabhängig davon, bei welcher Temperatur oder bei welchen Temperaturen im Bereich von 300 °C bis 800 °C er, insbesondere nach einer Trocknung bei 100 °C, einer oder mehreren thermischen Behandlungen unterzogen worden ist - nachfolgend als **Gruppe C-**Katalysator oder als Katalysator der **Gruppe C** bezeichnet. Der Katalysatorgruppe C kann eine Vielzahl von Katalysatormaterialien, d. h. Katalysatoren, zugeordnet werden, welche nachfolgend als Katalysatortypen bezeichnet werden. Beispielsweise umfasst Gruppe C-Katalysatoren der Typen Ir50NbOx, Ir50TaOx, Ir50Nb_{0,5}Ta_{0,5}Ox, Ir50Nb_{0,75}Ta_{0,25}Ox, Ir50Nb_{0,25}Ta_{0,75}Ox. Diese beispielhaft genannten Katalysatortypen werden zusammenfassend als Ir50-Katalysatoren bezeichnet. Für Erläuterungen bezüglich der vorgenannten verkürzten Bezeichnungen der Katalysatortypen wird auf die weiter oben im Zusammenhang mit Gruppe A-Katalysatoren angegebenen Informationen verwiesen.

Nach einer vorteilhaften Variante des Gruppe C-Katalysators
a. besteht die Trägerkomponente aus
   - wenigstens einem ersten porösen oxidischen Niob(V) enthaltenden Material gemäß wenigstens einer der weiter oben beschriebenen Ausführungsformen, oder
   - wenigstens einem zweiten porösen oxidischen Niob(V) enthaltenden Material gemäß wenigstens einer der weiter oben beschriebenen Ausführungsformen, oder
   - wenigstens einem porösen oxidischen Tantal(V) enthaltenden Material gemäß wenigstens einer der weiter oben beschriebenen Ausführungsformen, oder
   - wenigstens einem porösen oxidischen Niob(V) und Tantal(V) enthaltenden Material gemäß der allgemeinen Formel Nb_{1-y}Ta_{y}Ox besteht, wobei 0 < y < 1 ist, gemäß wenigstens einer der weiter oben beschriebenen Ausführungsformen,
   und
b. beträgt die mittels der BET-Methode bestimmte spezifische Oberfläche des Katalysators wenigstens 12 m²/g und höchstens 150 m²/g oder mehr als 12 m²/g und höchstens 150 m²/g oder wenigstens 15 m²/g und höchstens 150 m²/g.

Hier handelt es sich um Gruppe C-Katalysatoren des Typs Ir50NbOx, insbesondere erhalten unter Verwendung wenigstens eines ersten porösen oxidischen Niob(V) enthaltenden Materials, oder des Typs Ir50TaOx oder des Typs Ir50Nb_{1-y}Ta_{y}Ox, wobei 0 < y < 1 ist. Beispielsweise ist y = 0,25 oder y = 0,5 oder y = 0,75.

Gemäß einer weiteren Ausführungsform des Gruppe C-Katalysators des Typs Ir60NbOx oder des Typs Ir60TaOx oder des Typs Ir60Nb_{1-y}Ta_{y}Ox, wobei 0 < y < 1, ist der Katalysator für einen Zeitraum von 1 Stunde bei einer Temperatur von 500 °C thermisch behandelt ist, insbesondere kalziniert, vorteilhaft unter Luftatmosphäre kalziniert, und weist wenigstens eine der folgenden Eigenschaften auf:
a. die mittels der BET-Methode bestimmte spezifische Oberfläche des Katalysators beträgt wenigstens 40 m²/g und höchstens 150 m²/g oder mehr als 40 m²/g und höchstens 150 m²/g oder wenigstens 45 m²/g und höchstens 150 m²/g;
b. die mittlere IrO₂-Kristallitgröße beträgt wenigstens 3 nm und höchstens 12 nm.

Mithin kann die mittels der BET-Methode für den Gruppe C-Katalysator des Typs Ir60NbOx oder des Typs Ir60TaOx oder des Typs Ir60Nb_{1-y}Ta_{y}Ox, wobei 0 < y < 1, bestimmte spezifische Oberfläche beispielsweise auch 41 m²/g oder 42 m²/g oder 43 m²/g oder 44 m²/g oder 45 m²/g oder 46 m²/g oder 47 m²/g oder 48 m²/g oder 49 m²/g oder 50 m²/g oder 51 m²/g oder 52 m²/g oder 53 m²/g oder 54 m²/g oder 55 m²/g oder 56 m²/g oder 57 m²/g oder 58 m²/g oder 59 m²/g oder 60 m²/g oder 61 m²/g oder 62 m²/g oder 63 m²/g oder 64 m²/g oder 65 m²/g oder 66 m²/g oder 67 m²/g oder 68 m²/g oder 69 m²/g oder 70 m²/g oder 71 m²/g oder 72 m²/g oder 73 m²/g oder 74 m²/g oder 75 m²/g oder 76 m²/g oder 77 m²/g oder 78 m²/g oder 79 m²/g oder 80 m²/g oder 81 m²/g oder 82 m²/g oder 83 m²/g oder 84 m²/g oder 85 m²/g oder 86 m²/g oder 87 m²/g oder 88 m²/g oder 89 m²/g oder 90 m²/g oder 91 m²/g oder 92 m²/g oder 93 m²/g oder 94 m²/g oder 95 m²/g oder 96 m²/g oder 97 m²/g oder 98 m²/g oder 99 m²/g oder 100 m²/g oder 101 m²/g oder 102 m²/g oder 103 m²/g oder 104 m²/g oder 105 m²/g oder 106 m²/g oder 107 m²/g oder 108 m²/g oder 109 m²/g oder 110 m²/g oder 111 m²/g oder 112 m²/g oder 113 m²/g oder 114 m²/g oder 115 m²/g oder 116 m²/g oder 117 m²/g oder 118 m²/g oder 119 m²/g oder 120 m²/g oder 121 m²/g oder 122 m²/g oder 123 m²/g oder 124 m²/g oder 125 m²/g oder 126 m²/g oder 127 m²/g oder 128 m²/g oder 129 m²/g oder 130 m²/g oder 131 m²/g oder 132 m²/g oder 133 m²/g oder 134 m²/g oder 135 m²/g oder 136 m²/g oder 137 m²/g oder 138 m²/g oder 139 m²/g oder 140 m²/g oder 141 m²/g oder 142 m²/g oder 143 m²/g oder 144 m²/g oder 145 m²/g oder 146 m²/g oder 147 m²/g oder 148 m²/g oder 149 m²/g betragen.

Die mittlere IrO₂-Kristallitgröße des für einen Zeitraum von 1 Stunde bei einer Temperatur von 500 °C thermisch behandelten Gruppe C-Katalysator des Typs Ir50NbOx oder des Typs Ir50TaOx oder des Typs Ir50Nb_{1-y}Ta_{y}Ox, wobei 0 < y < 1, kann auch wenigstens 3,1 nm und höchstens 11,9 nm oder wenigstens 3,2 nm und höchstens 11,8 nm oder wenigstens 3,3 nm und höchstens 11,7 nm, insbesondere wenigstens 3,4 nm und höchstens 11,6 nm, betragen, beispielsweise 3,5 nm oder 3,6 nm oder 3,7 nm oder 3,8 nm oder 3,9 nm oder 4 nm oder 4,1 nm oder 4,2 nm oder 4,3 nm oder 4,4 nm oder 4,5 nm oder 4,6 nm oder 4,7 nm oder 4,8 nm oder 4,9 nm oder 5 nm oder 5,1 nm oder 5,2 nm oder 5,3 nm oder 5,4 nm oder 5,5 nm oder 5,6 nm oder 5,7 nm oder 5,8 nm oder 5,9 nm oder 6 nm oder 6,1 nm oder 6,2 nm oder 6,3 nm oder 6,4 nm oder 6,5 nm oder 6,6 nm oder 6,7 nm oder 6,8 nm oder 6,9 nm oder 7 nm oder 7,1 nm oder 7,2 nm oder 7,3 nm oder 7,4 nm oder 7,5 nm oder 7,6 nm oder 7,7 nm oder 7,8 nm oder 7,9 nm oder 8 nm oder 8,1 nm oder 8,2 nm oder 8,3 nm oder 8,4 nm oder 8,5 nm oder 8,6 nm oder 8,7 nm oder 8,8 nm oder 8,9 nm oder 9 nm oder 9,1 nm oder 9,2 nm oder 9,3 nm oder 9,4 nm oder 9,5 nm oder 9,6 nm oder 9,7 nm oder 9,8 nm oder 9,9 nm oder 10 nm oder 10,1 nm oder 10,2 nm oder 10,3 nm oder 10,4 nm oder 10,5 nm oder 10,6 nm oder 10,7 nm oder 10,8 nm oder 10,9 nm oder 11 nm oder 11,1 nm oder 11,2 nm oder 11,3 nm oder 11,4 nm oder 11,5 nm.

Beispielsweise beträgt die mittels der BET-Methode bestimmte spezifische Oberfläche für einen Gruppe C-Katalysator des hier vorgestellten Typs Ir50NbOx, welcher einen Massenanteil w(lridium) an der Gesamtmasse des Katalysators im Bereich von mehr als 50 % bis ca. 55 % aufweist und für einen Zeitraum von 1 Stunde bei einer Temperatur von 500 °C thermisch behandelt ist, 87 m²/g. Und die mittlere IrO₂-Kristallitgröße beträgt gemäß Rietveld-Analyse 8,7 nm.

Die für einen Gruppe C-Katalysator des hier vorgestellten Typs Ir50TaOx, welcher einen Massenanteil w(lridium) an der Gesamtmasse des Katalysators im Bereich von mehr als 50 % bis ca. 55 % aufweist und für einen Zeitraum von 1 Stunde bei einer Temperatur von 500 °C thermisch behandelt ist, mittels der BET-Methode bestimmte spezifische Oberfläche beträgt beispielsweise 80 m²/g. Und die mittlere IrO₂-Kristallitgröße beträgt gemäß Rietveld-Analyse 5,6 nm.

Die mittels der BET-Methode für einen Gruppe C-Katalysator des hier vorgestellten Typs Ir50Nb_{1-y}Ta_{y}Ox (y = 0,25: Ir50Nb_{0,75}Ta_{0,25}Ox), welcher einen Massenanteil w(lridium) an der Gesamtmasse des Katalysators im Bereich von mehr als 50 % bis ca. 55 % aufweist und für einen Zeitraum von 1 Stunde bei einer Temperatur von 500 °C thermisch behandelt ist, bestimmte spezifische Oberfläche beträgt beispielsweise 111 m²/g. Und die mittlere IrO₂-Kristallitgröße beträgt gemäß Rietveld-Analyse 7,8 nm.

Beispielsweise beträgt die mittels der BET-Methode bestimmte spezifische Oberfläche für einen Gruppe C-Katalysator des hier vorgestellten Typs Ir50Nb_{1-y}Ta_{y}Ox (y = 0,5: Ir50Nb_{0,5}Ta_{0,5}Ox), welcher einen Massenanteil w(lridium) an der Gesamtmasse des Katalysators im Bereich von mehr als 50 % bis ca. 55 % aufweist und für einen Zeitraum von 1 Stunde bei einer Temperatur von 500 °C thermisch behandelt ist, 113 m²/g. Und die mittlere IrO₂-Kristallitgröße beträgt gemäß Rietveld-Analyse 6,9 nm.

Die für einen Gruppe C-Katalysator des hier vorgestellten Typs Ir50Nb_{1-y}Ta_{y}Ox (y = 0,75: Ir50Nb_{0,25}Ta_{0,75}Ox), welcher einen Massenanteil w(lridium) an der Gesamtmasse des Katalysators im Bereich von mehr als 50 % bis ca. 55 % aufweist und für einen Zeitraum von 1 Stunde bei einer Temperatur von 500 °C thermisch behandelt ist, mittels der BET-Methode bestimmte spezifische Oberfläche beträgt beispielsweise 107 m²/g. Und die mittlere IrO₂-Kristallitgröße beträgt gemäß Rietveld-Analyse 6,4 nm.

Eine weitere Ausführungsform des hier vorgestellten Katalysators sieht vor, dass das poröse oxidische Niob(V) und/oder Tantal(V) enthaltende Material dotiert ist.

In einer anderen vorteilhaften Ausführungsvariante des hier beschriebenen Katalysators handelt es sich um einen elektrochemischen Katalysator.

Gemäß einer besonders vorteilhaften Ausführungsform ist der Katalysator ein Anodenkatalysator und/oder ein Kathodenkatalysator.

Beispielsweise kann es sich um einen Anodenkatalysator handeln, welcher eine Sauerstoffentwicklungsreaktion (engl. *Oxygen Evolution Reaction*, OER) in einem Protonenaustauschmembran-Wasserelektrolyseur katalysiert. Dann wird der Katalysator auch als OER-Katalysator bezeichnet.

Ein "Protonenaustauschmembran-Wasserelektrolyseur" wird verkürzt als PEM-Wasserelektrolyseur (engl. *Proton Exchange Membrane*, PEM) bezeichnet. Synonym wird der Begriff "Polymerelektrolyt-Wasserelektrolyseur" verwendet, verkürzt PE-Wasserelektrolyseur (engl. *Polymer Electrolyte*, PE).

Alternativ kann es sich um einen Anodenkatalysator oder um einen Kathodenkatalysator in einer Protonenaustauschmembran-Brennstoffzelle handeln, welcher beispielsweise als CoKatalysator fungiert.

Eine "Protonenaustauschmembran-Brennstoffzelle" wird verkürzt als PEM- Brennstoffzelle (engl. *Proton Exchange Membrane*, PEM) bezeichnet. Synonym wird der Begriff "Polymerelektrolyt-Brennstoffzelle" verwendet, verkürzt PE-Brennstoffzelle (engl. *Polymer Electrolyte*, PE).

Die Verwendung hier vorgestellter Iridium enthaltenden Katalysatoren als OER-Katalysatoren zeigte, dass diese Katalysatoren ein ausgeglichenes Verhältnis zwischen elektrochemischer Stabilität und elektrokatalytischer Aktivität aufweisen.

Überraschenderweise besitzen die getesteten Katalysatoren mit einem Massenanteil w(lridium) von ca. 75 % - bei vergleichbarer mittlerer IrO₂-Kristallitgröße und einem vergleichbaren Massenanteil w(lridium) - eine gegenüber Referenzkatalysatoren, welche TiO₂ als Trägerkomponente aufweisen, verbesserte elektrochemische Stabilität (vgl. Ausführungsbeispiele, **Tabelle 8**, Spalte 6). Unter den Referenzkatalysatoren war auch der kommerziell erhältliche Katalysator Umicore^{®} Elyst Ir75 0480 (CAS-Nummer: 12030-49-8).

Besonders überraschend war, dass die getesteten Katalysatoren mit einem geringeren Massenanteil w(lridium), nämlich von ca. 60 %, eine deutlich erhöhte elektrochemische Stabilität gegenüber den vorgenannten TiO₂-geträgerten Vergleichskatalysatoren zeigten. Und zwar unabhängig davon, ob die Trägerkomponente Niob(V) und/oder Tantal(V) enthielt. Zudem wurden für die getesteten Katalysatoren mit einem Massenanteil w(lridium) von ca. 60 % insgesamt höhere elektrochemische Stabilitäten beobachtet als im Falle der hier vorgestellten Katalysatoren mit einem Massenanteil w(lridium) von *ca.* 75 % (vgl. Ausführungsbeispiele, **Tabelle 8**, Spalte 6).

Schließlich gilt für alle hier vorgestellten und getesteten Katalysatoren - im Falle ein und derselben Trägerkomponente -: Je kleiner die mittlere IrO₂-Kristallitgröße, desto höher ist die elektrokatalytische Aktivität und desto geringer ist die elektrochemische Stabilität.

Vorteilhafterweise sind die hier beschriebenen Katalysatoren auf einfache Weise, reproduzierbar, umwelt- und ressourcenschonend und vergleichsweise kostengünstig herstellbar, und zwar in quantitativer oder nahezu quantitativer Ausbeute und in sehr hoher Reinheit. Letzteres ist unter anderem darauf zurückzuführen, dass die weiter oben beschriebenen porösen oxidischen Niob(V) und/oder Tantal(V) enthaltenden und in hoher Reinheit erhältlichen Materialien als Trägerkomponente vorgesehen sind. Besonders vorteilhaft ist, dass die zur Herstellung der hier vorgestellten Katalysatoren eingesetzten oxidischen Gruppe 5-Element-Materialien säure- und laugenstabil und, insbesondere im Vergleich zu kommerziell erhältlichen Niob(V)-oxiden, große spezifische Oberfläche aufweisen. Die hier beschriebenen Katalysatoren können zwar Verunreinigungen enthalten, insbesondere durch Haupt- oder Nebengruppenmetalle, Halbmetalle oder Kohlenstoff. Die Summe aller mittels ICP-OES Analyse bestimmten Verunreinigungen beträgt jedoch höchstens 1000 ppmw. Nach alledem genügen die hier vorgestellten Katalysatoren den Anforderungen, welche an (Elektro-)Katalysatoren gestellt werden. Hinzu kommt, dass sie auch im industriellen Maßstab in vergleichbarer Ausbeute und Reinheit erhältlich sind. Nach alledem sind diese Katalysatoren aus (atom-)ökonomischer und ökologischer Sicht vorteilhaft und für den Einsatz im großtechnischen Maßstab prädestiniert.

Die Aufgabe wird außerdem gelöst durch einen Katalysator oder eine Elektrode, wobei der Katalysator oder die Elektrode wenigstens ein poröses oxidisches Niob(V) und/oder Tantal(V) enthaltendes Material gemäß einer oder mehreren der weiter oben beschriebenen Ausführungsformen umfasst.

Aufgrund der sehr hohen spezifischen Oberflächen der oxidischen Niob(V) und/oder Tantal(V) enthaltenden Materialien, insbesondere bis zu einer Temperatur von ca. 600 °C, kann eine hohe Dispersion einer katalytisch aktiven Komponente, welche zudem leitfähig sein kann, garantiert werden.

Ein Katalysator oder eine Elektrode, welcher/welche wenigstens ein poröses oxidisches Niob(V) und/oder Tantal(V) enthaltendes Material gemäß einer oder mehreren der weiter oben beschriebenen Ausführungsformen enthält
a. weist bei erhöhter Temperatur, d. h. oberhalb von 100 °C, nämlich bei Temperaturen im Bereich von ca. 300 °C bis ca. 800 °C, beispielsweise bei ca. 350 °C oder bei ca. 400 °C oder bei ca. 450 °C oder bei ca. 500 °C oder bei ca. 550 °C oder bei ca. 600 °C oder bei ca. 650 °C oder bei ca. 700 °C oder bei ca. 750 °C, insbesondere noch eine hohe oder sehr hohe spezifische Oberfläche auf, welche insbesondere oberhalb der spezifischen Oberfläche von ungeträgertem IrO₂ liegt;
b. weist eine, insbesondere bis zu einer Temperatur von ca. 400 °C, temperaturstabile oder im Wesentlichen temperaturstabile spezifische Oberfläche auf;
c. ist gegenüber Säuren und Basen stabil.

Bezüglich weiterer Details und Vorteile betreffend die porösen oxidischen Niob(V) und/oder Tantal(V) enthaltenden Materialien wird auf die Angaben verwiesen, welche weiter oben im Zusammenhang mit der Beschreibung dieser Materialien gemacht wurden.

Die Aufgabe wird zudem gelöst durch eine Verwendung eines Katalysators nach wenigstens einer der weiter oben beschriebenen Ausführungsformen
i. in einer regenerativen Brennstoffzelle, in einer elektrolytischen Zelle oder in einer sonstigen elektrochemischen Vorrichtung,
   oder
ii. in einer Elektrode, in einer katalysatorbeschichteten Membran oder in einer Membran-Elektroden-Einheit, wobei die Membran-Elektroden-Einheit insbesondere Bestandteil einer Protonenaustauschmembran-Brennstoffzelle oder eines Protonenaustauschmembran-Wasserelektrolyseurs ist.

Gemäß der vorliegenden Erfindung ist mit dem Ausdruck "regenerative Brennstoffzelle" (engl. *unitized reversible fuel cell,* URFC) eine Einheit gemeint, welche denselben Elektrodenstapel für den Brennstoffzellenvorgang und für die Elektrolyse nutzt. Solche Einheiten werden auch "reversible Brennstoffzelle" genannt.

Der Ausdruck "katalysatorbeschichtete Membran" ist auch unter der Abkürzung CCM (engl. *Catalyst Coated Membrane*) bekannt.

Der Ausdruck "Membran-Elektroden-Einheit" ist auch unter der Abkürzung MEA (engl. *Membrane Electrode Assembly*) bekannt.

Weitere Merkmale, Einzelheiten und Vorteile der Erfindung ergeben sich aus dem Wortlaut der Ansprüche sowie aus der folgenden Beschreibung von Ausführungsbeispielen:

### ■ Poröse oxidische Niob(V) und/oder Tantal(V) enthaltende Materialien

Mittels Hydrothermalsynthese wurden verschiedene poröse oxidische Materialien hergestellt: Niob(V) enthaltende, Tantal(V) enthaltende sowie Niob(V) und Tantal(V) enthaltende. Das angewendete Syntheseprotokoll ist weiter unten in Abschnitt **B.** beschrieben. Die unmittelbaren Reaktionsprodukte werden nachfolgend vereinfachend NbOx (Beispiel **B.1** und Beispiel **B.6**), TaOx (Beispiel **B.2**), Nb_{0,5}Ta_{0,5}Ox (Beispiel **B.3**), Nb_{0,75}Ta_{0,25}Ox (Beispiel **B.4**) und Nb_{0,25}Ta_{0,75}Ox (Beispiel **B.5**) genannt. Dabei soll "Ox" verdeutlichen, dass es sich um ein anorganisches Sauerstoff enthaltendes Material handelt, welches Sauerstoff in der Oxidationszahl -II enthält. Zudem soll durch die Angabe "Ox" angezeigt werden, dass das jeweilige Material nicht die Zusammensetzung eines stöchiometrischen Niob-Tantal-Mischoxids aufweist. Vielmehr sind nach Isolierung und Trocknung neben Niob(V), Tantal(V) und Sauerstoff(II) üblicherweise noch Wasserstoff (H) und Stickstoff (N) enthalten. Details dazu folgen weiter unten.

Die vorgenannten Kurzbezeichnungen (ohne Zusatzangabe) gelten sowohl für das aus der jeweiligen Reaktionslösung ausgefallene, noch nicht isolierte oxidische Material als auch für das mittels Filtration und/oder Dekantation und/oder Zentrifugation isolierte, mit vollentsalztem Wasser gewaschene oxidische Material.

Die Materialien Nb_{0,5}Ta_{0,5}Ox, Nb_{0,75}Ta_{0,25}Ox und Nb_{0,25}Ta_{0,75}Ox werden zusammenfassend als Nb_{1-y}Ta_{y}Ox bezeichnet (y = 0,5, Beispiel **B.3;** y = 0,25, Beispiel **B.4**; y = 0,75, Beispiel **B.5**). Ist y = 0,5, so liegen Nb⁵⁺ und Ta⁵⁺ äquimolar vor, machen also jeweils 50 Mol-% der Kationen aus. Im Falle von y = 0,25 macht Nb⁵⁺ 75 Mol-% der Kationen aus, Ta⁵⁺ 25 Mol-% der Kationen. Gilt y = 0,75, so macht Nb⁵⁺ 25 Mol-% der Kationen aus, Ta⁵⁺ 75 Mol-% der Kationen.

Die isolierten und mit vollentsalztem Wasser gewaschenen Materialien werden nachfolgend vereinfachend als gewaschene Materialien bezeichnet, verkürzt als gewaschenes NbOx, gewaschenes TaOx und gewaschenes Nb_{1-y}Ta_{y}Ox (y = 0,25 oder y = 0,25 oder y = 0,75). Sie wurden einer oder mehreren thermischen Behandlungen unterzogen: a) Gefriertrocknung oder b) Gefriertrocknung und Kalzination. Alternativ oder ergänzend zu der Gefriertrocknung kann eine Trocknung bei einer Temperatur oberhalb von 0 °C bis ca. 100 °C vorgesehen sein. Dann handelt es sich um eine Wärmetrocknung, beispielsweise im Bereich von ca. 70 °C bis ca. 100 °C bei Normaldruck (p = 1013,25 hPa). Die Gefriertrocknung und/oder Wärmetrocknung kann auch bei Unterdruck durchgeführt werden.

Die nach der Isolierung und dem Waschen mit vollentsalztem Wasser thermisch behandelten oxidischen Materialien werden nachfolgend allgemein als thermisch behandelte Materialien bezeichnet, verkürzt als thermisch behandeltes NbOx, thermisch behandeltes TaOx und thermisch behandeltes Nb_{1-y}Ta_{y}Ox (y = 0,25 oder y = 0,5 oder y = 0,75). Im Falle der Behandlung gemäß a) wird vereinfachend der Ausdruck gefriergetrocknete Materialien verwendet, und im Falle der Behandlung gemäß b) wird vereinfachend die Bezeichnung kalzinierte Materialien verwendet. Verkürzt werden diese Materialien als gefriergetrocknetes NbOx, gefriergetrocknetes TaOx, gefriergetrocknetes Nb_{1-y}Ta_{y}Ox (y = 0,25 oder y = 0,5 oder y = 0,75), kalziniertes NbOx, kalziniertes TaOx und kalziniertes Nb_{1-y}Ta_{y}Ox (y = 0,25 oder y = 0,5 oder y = 0,75) bezeichnet. Im Falle der kalzinierten Materialien werden zusätzlich Temperatur und Dauer der Kalzination in Klammern angegeben.

Sowohl die Hydrothermalsynthese als auch die jeweilige thermische Behandlung erfolgte gemäß vordefinierter Protokolle. Eine reproduzierbare Darstellung der hier vorgestellten porösen oxidischen Materialien ist somit gewährleistet.

Die Verhältnisformeln der hier beschriebenen porösen oxidischen Materialien können - insbesondere in Abhängigkeit von der jeweiligen Niob(V)- und/oder Tantal(V)-Vorläuferverbindung und der jeweiligen thermischen Behandlung - zusätzlich zu Niob (Nb) und/oder Tantal (Ta) sowie Sauerstoff (O) noch Wasserstoff (H) und/oder Stickstoff (N) enthalten, insbesondere in Form von H₂O-Molekülen, Hydroxidionen (OH⁻) und Ammoniumionen (NH₄⁺).

Auf die Bestimmung der Verhältnisformeln der hier vorgestellten porösen oxidischen Materialien wurde verzichtet. Der Massenanteil w(Niob) und/oder der Massenanteil w(Tantal) der gefriergetrockneten oxidischen Materialien wurden mittels optischer Emissionsspektrometrie mit induktiv gekoppeltem Plasma (engl. *Inductively Coupled Plasma Optical Emission Spectrometry,* ICP-OES) bestimmt. Die Ergebnisse sind nachfolgend in **Tabelle 1.1** aufgeführt.

**Tabelle 1.1: Massenanteil w(Niob) von gefriergetrocknetem NbOx (Beispiel B.1), Massenanteil w(Tantal) von gefriergetrocknetem TaOx (Beispiel B.2), Massenanteil w(Niob) und Massenanteil w(Tantal) von gefriergetrocknetem Nb_{1-y}Ta_{y}Ox (y = 0,5, Beispiel B.3, oder y = 0,25, Beispiel B.4, oder 0,75, Beispiel B.5).**

| Gefriergetrocknetes Material | w(Niob) in Gew.-% | w(Tantal) in Gew.-% |
|---|---|---|
| NbOx | 60,4 | - |
| TaOx | - | 73,3 |
| Nb_{0,5}Ta_{0,5}Ox | 19,8 | 44,7 |
| Nb_{0,75}Ta_{0,25}Ox | 35,7 | 26,9 |
| Nb_{0,25}Ta_{0,75}Ox | 9,4 | 60,2 |

Für Proben von thermisch behandeltem NbOx wurden mittels ICP-OES-Analyse die Massenanteile weiterer Elemente, nämlich von Natrium und Silicium, bestimmt. Zudem wurde Proben von thermisch behandeltem NbOx einer Elementaranalyse unterzogen. Die Ergebnisse sind in der folgenden Tabelle 1.2 aufgeführt.

**Tabelle 1.2: Massenanteil w(Niob) von thermisch behandeltem NbOx (Beispiel B.1), Massenanteil w(Natrium) von thermisch behandeltem NbOx, Massenanteil w(Silicium) von thermisch behandeltem NbOx, Massenanteil w(Kohlenstoff) von thermisch behandeltem NbOx, Massenanteil w(Wasserstoff) von thermisch behandeltem NbOx, Massenanteil w(Stickstoff) von thermisch behandeltem NbOx. Die Nachweisgrenze des für die Elementaranalyse eingesetzten Gerätes betrug 0,1 Gew.-%.**

| Thermische Behandlung | Massenanteil in % | | | | | |
|---|---|---|---|---|---|---|
| | Nb | Na | Si | C | H | N |
| GT | 60,4 | 0,0025 | 0,21 | < 0,1^{[A]} | 1,3 | 1,2 |
| GT; 200 °C, 1 h | 59,3 | 0,003 | 0,22 | < 0,1 | 1,4 | 1,1 |
| GT; 400 °C, 1 h | 62,1 | 0,0025 | 0,25 | < 0,1 | 1 | < 0,1 |
| GT; 600 °C, 1 h | 63,8 | 0,003 | 0,22 | < 0,1 | 0,7 | < 0,1 |
| GT; 800 °C; 1 h | 67,9 | 0,0025 | 0,25 | < 0,1 | 0,1 | < 0,1 |

[A] Vereinzelt wurden für w(Kohlenstoff) Werte > 0,1 bis ≤ 4 % bestimmt, z. B. 3,2 %.

Es sei darauf hingewiesen, dass der für Kohlenstoff bestimmte Wert in allen Fällen unterhalb der Nachweisgrenze (NWG) des für die Elementaranalyse eingesetzten Gerätes (NWG: 0,1 Gew.-%) liegt. Der für Wasserstoff bestimmte Wert liegt für die bei 800 °C kalzinierte NbOx-Probe unterhalb der Nachweisgrenze des für die Elementaranalyse eingesetzten Gerätes. Der für Stickstoff bestimmte Wert liegt für die NbOx-Proben, welche bei 400 °C oder bei 600 °C oder bei 800 °C kalziniert wurden, unterhalb der Nachweisgrenze des für die Elementaranalyse eingesetzten Gerätes.

Überraschenderweise liegt der Massenanteil w(Niob) von NbOx sogar nach Kalzination unter Luftatmosphäre für einen Zeitraum von 1 Stunde bei einer Temperatur von 800 °C unterhalb desjenigen von Nb₂O₅ (69,9 %). Mithin kann ausgeschlossen werden, dass es sich bei dem nach Beendigung der Kalzination vorliegenden Material um Nb₂O₅ handelt, nicht aber, dass in dem nach Beendigung der Kalzination vorliegenden porösen oxidischen Material Nb₂O₅ enthalten ist.

Zur thermischen Behandlung des gewaschenen NbOx, des gewaschenen TaOx und des gewaschenen Nb_{1-y}Ta_{y}Ox (y = 0,25 oder y = 0,5 oder y = 0,75) wurde in einem ersten Schritt eine Gefriertrocknung durchgeführt. In einem zweiten Schritt wurden Proben des gefriergetrockneten NbOx, des gefriergetrockneten TaOx sowie des gefriergetrockneten Nb_{1-y}Ta_{y}Ox (y = 0,25 oder y = 0,5 oder y = 0,75) in einem Muffelofen bei einer Temperatur T_{Kalzination} (T_{K}) von 200 °C oder 400 °C oder 600 °C oder 800 °C kalziniert. Die Kalzinationszeit t_{Kalzination} (t_{K}) betrug jeweils eine Stunde. Nach der thermischen Behandlung durch a) Gefriertrocknung oder b) Gefriertrocknung und anschließender Kalzination bei einer der vorgenannten Temperaturen T_{K} erfolgte die Bestimmung der spezifischen Oberfläche des jeweiligen porösen oxidischen Materials nach der *Brunauer-Emmett-Teller-*Methode, kurz BET-Methode. Die für die thermisch behandelten porösen oxidischen Materialien bestimmten spezifischen Oberflächen, im Folgenden auch BET-Oberflächen genannt, können der nachfolgend abgebildeten **Tabelle 2** entnommen werden.

**Tabelle 2: BET-Oberflächen von thermisch behandeltem NbOx (Beispiel B.1), thermisch behandeltem TaOx (Beispiel B.2) und thermisch behandeltem Nb_{1-y}Ta_{y}Ox (y = 0,5, Beispiel B.3, oder y = 0,25, Beispiel B.4, oder y = 0,75, Beispiel B.5), wobei GT = Gefriertrocknung, T_{K} = T_{Kalzination} = 200 °C, 400 °C, 600 °C oder 800 °C und t_{K} = t_{Kalzination} = 1 h oder 4 h.**

| Thermische Behandlung | BET-Oberfläche in m²/g | | | | |
|---|---|---|---|---|---|
| | NbOx | TaOx | Nb_{0,5}Ta_{0,5}Ox | Nb_{0,75}Ta_{0,25}Ox | Nb_{0,25} Ta_{0,75}Ox |
| GT | 319 | 247 | 291 | 322 | 259 |
| GT; 200 °C, 1 h | 319 | 233 | 275 | 303 | 236 |
| GT; 400 °C, 1 h | 296 | 196 | 233 | 228 | 201 |
| GT; 400 °C, 4 h | 264 | - | - | - | - |
| GT; 600 °C, 1 h | 175 | 136 | 132 | 119 | 134 |
| GT; 800 °C; 1 h | 18 | 26 | 17 | 12 | 20 |

Die gefriergetrockneten oxidischen Materialien NbOx, TaOx und Nb_{1-y}Ta_{y}Ox (y = 0,25 oder y = 0,5 oder y = 0,75) wiesen überraschend große spezifische Oberflächen auf, nämlich im Bereich von ca. 250 m²/g bis ca. 320 m²/g. Im Einzelnen wurden BET-Oberflächen von 319 m²/g, 247 m²/g, 291 m²/g, 322 m²/g und 259 m²/g bestimmt. Weiterhin überraschend ist, dass die BET-Oberflächen der im Muffelofen bei T_{K} = 200 °C kalzinierten Proben im Falle von NbOx unverändert war und im Falle der übrigen oxidischen Materialien nur geringfügig geringer waren als die nach ausschließlicher Gefriertrocknung bestimmten Werte: TaOx minus ca. 6 %, Nb_{0,5}Ta_{0,5}Ox minus ca. 9 %, Nb_{0,75}Ta_{0,25}Ox minus ca. 6 %, Nb_{0,25}Ta_{0,75}Ox minus ca. 9 %.

Wurde die Kalzination nach der Gefriertrocknung für 1 h bei T_{K} = 400 °C durchgeführt, d. h. der Wert von T_{K} verdoppelt, nahm die spezifische Oberfläche im Falle von NbOx nur geringfügig ab, nämlich um ca. 7 %. Demgegenüber wurde für die anderen oxidischen Materialien jeweils eine stärkere Abnahme der BET-Oberfläche beobachtet als nach Gefriertrocknung und Kalzination bei T_{K} = 200 °C: TaOx minus ca. 20 %, Nb_{0,5}Ta_{0,5}Ox minus ca. 20 %, Nb_{0,75}Ta_{0,25}Ox minus ca. 29 %, Nb_{0,25}Ta_{0,75}Ox minus ca. 22 %. Im Falle von NbOx wurde zudem nach Gefriertrocknung eine Kalzination für 4 h bei T_{K} = 400 °C durchgeführt. Dabei nahm die spezifische Oberfläche - verglichen mit dem ausschließlich gefriergetrockneten Material - um ca. 17 % ab.

Erfolgte eine Kalzination von gefriergetrocknetem NbOx, gefriergetrocknetem TaOx und gefriergetrocknetem Nb_{1-y}Ta_{y}Ox (y = 0,25 oder y = 0,5 oder y = 0,75) im Muffelofen bei T_{K} = 600 °C, so wurden BET-Oberflächen im Bereich von ca. 120 m²/g bis 175 m²/g bestimmt, im Einzelnen von 175 m²/g, 136 m²/g, 132 m²/g, 119 m²/g und 134 m²/g.

Im Anschluss an die Gefriertrocknung bei T_{K} = 800 °C kalzinierte Proben von NbOx, TaOx und Nb_{1-y}Ta_{y}Ox (y = 0,25 oder y = 0,5 oder y = 0,75) wiesen BET-Oberflächen von 18 m²/g, 26 m²/g, 17 m²/g, 12 m²/g und 20 m²/g auf.

Dass die für die hier beschriebenen porösen oxidischen Materialien nach Kalzination bestimmten BET-Oberflächen überraschend groß sind, zeigt ein Vergleich der für NbOx bestimmten BET-Werte mit im Stand der Technik für die oxidische Niob(V)-Verbindung H_{19,9}(NH₄)_{4,1}Nb₄₀O₁₁₂·3,6 H₂O, abgekürzt als NbO-ANO, angegebenen Werten. Letztere wurde ebenfalls mittels Hydrothermalsynthese dargestellt, und zwar ausgehend von einem Niob(V)-Ammoniumoxalat (unter anderem von CBMM), über Nacht bei 80 °C getrocknet und danach für 4 h bei einer Temperatur im Bereich von 400 °C bis 700 °C kalziniert. (vgl. T. Murayama, J. Chen, J. Hirata, K. Matsumotoa, W. Ueda, Catal. Sci. Technol. 2014, 4, 4250 - 4257: Table 1, Seite 4252; *Experimental, Preparation of niobium oxides,* Seite 4251; *ESI, Table* S1). Betrug die Kalzinationstemperatur 400 °C, so wurde eine BET-Oberfläche von weniger als 200 m²/g bestimmt, nämlich von höchstens 193 m²/g (Edukt von CBMM). Für das hier beschriebene oxidische Material NbOx wurde nach Kalzination für 4 h bei 400 °C überraschenderweise eine spezifische Oberfläche von mehr als 250 m²/g bestimmt, nämlich von 264 m²/g. Der Vergleich zweier weiterer BET-Werte lässt zudem vermuten, dass das hier vorgestellte oxidische Material NbOx eine höhere Temperaturstabilität bezüglich der BET-Oberfläche zeigt als die von Murayama *et al.* beschriebene Verbindung: Im ersten Fall beträgt die BET-Oberfläche nach Kalzination für 1 h bei 600 °C noch 175 m²/g. Im zweiten Fall beträgt die BET-Oberfläche nach Kalzination für 4 h bei 550 °C noch 66 m²/g.

Erwähnenswert ist zudem, dass das untersuchte Niob(V) enthaltende oxidische Material bis zu einer Temperatur T_{K} von 400 °C temperaturstabil ist, was die BET-Oberfläche betrifft, während das untersuchte Tantal(V) enthaltende Material im Wesentlichen temperaturstabil ist. Die untersuchten Niob(V) und Tantal(V) enthaltenden Materialien gemäß den Formeln Nb_{0,5}Ta_{0,5}Ox und Nb_{0,5}Ta_{0,75}Ox erwiesen sich ebenfalls als im Wesentlichen temperaturstabil. Bezüglich der Definitionen für die Ausdrücke "temperaturstabil" und "im Wesentlichen temperaturstabil" wird auf die allgemeine Beschreibung betreffend das erste oxidische Niob(V) enthaltende Material verwiesen.

Zusammenfassend lässt sich feststellen, dass die hier vorgestellten Niob(V) enthaltenden, Tantal(V) enthaltenden sowie Niob(V) und Tantal(V) enthaltenden porösen oxidischen Materialien
a) nach Gefriertrocknung überraschend große BET-Oberflächen im Bereich von ca. 250 m²/g bis ca. 320 m²/g aufweisen.
b) nach Gefriertrocknung und Kalzination bei einer Temperatur T_{K} von 400 °C noch spezifische Oberfläche im Bereich von ca. 200 m²/g bis ca. 320 m²/g aufweisen und, insbesondere bis zu einer Temperatur T_{K} von 400 °C, eine hohe bis sehr hohe (NbOx) Temperaturstabilität oder eine hohe Temperaturstabilität (TaOx, Nb_{0,5}Ta_{0,5}Ox und Nb_{0,5}Ta_{0,75}Ox) bezüglich ihrer BET-Oberflächen zeigen.
c) insbesondere bezüglich ihrer BET-Oberfläche maßgeschneidert werden können, zumal die spezifische Oberfläche des jeweiligen oxidischen Materials über einen weiten Bereich einstellbar ist, insbesondere durch Variation von T_{Kalzination} und gegebenenfalls t_{Kalzination}.
d) als nicht leitende poröse oxidische Komponenten, insbesondere als Trägerkomponenten, für eine Vielzahl von Katalysatoren eingesetzt werden können, wobei die Katalysatoren beispielsweise einen Schichtaufbau oder einen Kern-Schale-Aufbau aufweisen.

Alle hier beschriebenen gewaschenen und thermisch behandelten porösen oxidischen Materialien NbOx (Beispiel **B.1** und Beispiel **B.6**), TaOx (Beispiel **B.2**) und Nb_{1-y}Ta_{y}Ox (y = 0,5, Beispiel **B.3,** oder y = 0,25, Beispiel **B.4,** oder y = 0,75, Beispiel **B.5**) können unmittelbar für die Herstellung von Katalysatoren eingesetzt werden, beispielsweise suspendiert in vollentsalztem Wasser. Alternativ können die gewaschenen porösen oxidischen Materialien ohne weitere Reinigungsschritte und/oder thermische Behandlung zur Herstellung einer Suspension, insbesondere in vollentsalztem Wasser, eingesetzt werden.

### ■ Katalysatoren, umfassend NbOx, TaOx, oder Nb_{1-y}Ta_{y}Ox (y = 0,25 oder y = 0,5 oder y = 0,75) und Iridium(IV)-oxid (IrO₂)

Die getrockneten, insbesondere gefriergetrockneten, porösen oxidischen Materialien NbOx (Beispiel **B.1**), TaOx (Beispiel **B.2**), und Nb_{1-y}Ta_{y}Ox (y = 0,5, Beispiel **B.3,** oder y = 0,25, Beispiel **B.4,** oder y = 0,75, Beispiel **B.5**) wurden als nicht leitende Trägerkomponenten zur Herstellung von Katalysatoren verwendet, deren Aktivkomponente Iridium(IV)-oxid (IrO₂) umfasste.

Alle hier vorgestellten Katalysatoren sind einer der nachfolgend genannten Katalysatorgruppen zugeordnet, wobei jede Katalysatorgruppe verschiedenen Katalysatortypen enthält: Ir75-Katalysatoren (**Gruppe A**), Ir60-Katalysatoren (**Gruppe B**), Ir50-Katalysatoren (**Gruppe C**).

**Gruppe A** werden Katalysatormaterialien, d. h. Katalysatoren, der Typen Ir75NbOx, Ir75TaOx, Ir75Nb_{0,5}Ta_{0,5}Ox, Ir75Nb_{0,75}Ta_{0,25}Ox, Ir75Nb_{0,25}Ta_{0,75}Ox zugeordnet. **Gruppe B** umfasst Katalysatormaterialien, d. h. Katalysatoren, der Typen Ir60NbOx, Ir60TaOx, Ir60Nb_{0,5}Ta_{0,5}Ox. Und **Gruppe C** enthält Katalysatormaterialien, d. h. Katalysatoren, der Typen Ir50NbOx, Ir50TaOx, Ir50Nb_{0,5}Ta_{0,5}Ox, Ir50Nb_{0,75}Ta_{0,25}Ox, Ir50Nb_{0,25}Ta_{0,75}Ox.

Die vorgenannten verkürzten Bezeichnungen der Katalysatortypen sind jeweils zusammengesetzt aus:
i. dem Elementsymbol für Iridium (Ir), welches anzeigt, dass eine iridiumhaltige Aktivkomponente enthalten ist, jedoch keine Angabe bezüglich der Oxidationsstufe(n) oder der Zusammensetzung der Aktivkomponente macht,
ii. dem Sollwert des Massenanteils w(lridium) (in Prozent) bezogen auf die Gesamtmasse des jeweiligen Katalysators, wobei der jeweilige wahre, mittels ICP-OES-Analyse bestimmte Wert **Tabelle 8,** Spalte "w(Iridium)", zu entnehmen ist,
   und
iii. der nicht leitenden Trägerkomponente, welche ausgewählt ist aus der Gruppe bestehend aus den porösen oxidischen Materialien NbOx (Beispiel **B.1**), TaOx (Beispiel **B.2**) und Nb_{1-y}Ta_{y}Ox (y = 0,5, Beispiel **B.3,** oder y = 0,25, Beispiel **B.4,** oder y = 0,75, Beispiel **B.5**), deren spezifische Oberfläche von der für die Kalzination vorgesehenen Temperatur T_{K} und der Kalzinationsdauer t_{K} abhängig ist.

Ist vorliegend von einem Ir75-Katalysator die Rede, so kann es sich um einen Gruppe A-Katalysator mit einem Massenanteil w(lridium) von 75 % handeln. Es ist jedoch beispielsweise auch möglich, dass es sich um einen Gruppe A-Katalysator mit einem Massenanteil w(lridium) von 73 % oder 77 % handelt. Dies ist auf zufällige Fehler und gegebenenfalls auf systematische Fehler während der Synthese der Katalysatoren zurückzuführen. Analoges gilt für Gruppe B-Katalysatoren und für Gruppe C-Katalysatoren.

Wie **Tabelle 3** bis **Tabelle 7** zu entnehmen ist, unterscheiden sich die im Folgenden einem der oben genannten Katalysatortypen, wie zum Beispiel Ir75NbOx, zugeordneten Katalysatormaterialien zudem insbesondere dadurch, dass sie unterschiedliche mittlere IrO₂-Kristallitgröße aufweisen. Erwartungsgemäß wurde gefunden, dass Letztere insbesondere von der Kalzinationstemperatur T_{K} abhängig ist, welcher das Ausgangsmaterial des jeweiligen Katalysatortyps ausgesetzt wird. Bei dem Ausgangsmaterial handelt es sich um das Material, welches gemäß einem der weiter unten beschriebenen Syntheseprotokolle C., D. oder E. hergestellt, isoliert, gewaschen und in einem Vakuumtrockenschrank bei ca. 100 °C getrocknet wurde. Das Katalysatorausgangsmaterial selbst könnte auch als Katalysator eingesetzt werden. Das Katalysatorausgangsmaterial wird nachfolgend verkürzt als Ausgangsmaterial bezeichnet.

Die für die mittlere IrO₂-Kristallitgröße gefundene Temperaturabhängigkeit entsprach den Erwartungen: Je höher die Temperatur T_{K}, desto größer war die für das nach der Kalzination vorliegende Katalysatormaterial bestimmte mittlere IrO₂-Kristallitgröße. Dagegen wurde überraschenderweise gefunden, dass die BET-Oberfläche katalysatorspezifisch und temperaturstabil ist, wie beispielsweise im Falle der Ir75-Katalysatoren, oder im Wesentlichen temperaturstabil ist, wie beispielsweise im Falle der Ir60-Katalysatoren. Bezüglich der Definitionen für den Begriff "temperaturstabil" und den Ausdruck "im Wesentlichen temperaturstabil" wird auf die allgemeine Beschreibung betreffend den Katalysator verwiesen.

In **Tabelle 3** bis **Tabelle 7** sind die nach der Kalzination bestimmten BET-Oberflächen und mittleren IrO₂-Kristallitgrößen angegeben. Letztere wurden mittels Rietveld-Analyse bestimmt. Die Bildung von IrO₂-Kristalliten in der Rutilstruktur wurde ab einer Temperatur T_{K} von ca. 300 °C beobachtet.

**Tabelle 3: BET-Oberflächen und mittlere IrO₂-Kristallitgrößen von Gruppe A-Katalysatoren (Beispiel C.1, Beispiel C.2, Beispiel C.3) nach Kalzination in einem Muffelofen bei verschiedenen Temperaturen T_{K}, wobei t_{K} = 1 h.**

| T_{K} in °C | BET-Oberfläche in m²/g | | | Mittlere IrO₂-Kristallitgröße in nm | | |
|---|---|---|---|---|---|---|
| | Ir75NbOx | Ir75TaOx | Ir75Nb_{1-y}Ta_{y}Ox | Ir75NbOx | Ir75TaOx | Ir75Nb_{1-y}Ta_{y}Ox |
| | | | y = 0,5 | | | y = 0,5 |
| 400 | 25 | 30 | 49 | 2,7 | 3,2 | 3,7 |
| 450 | 24 | 32 | 47 | 3,4 | 3,8 | 4,2 |
| 500 | 24 | 30 | 46 | 3,8 | 4,2 | 5,1 |
| 550 | 25 | 31 | 46 | 4,5 | 5,0 | 5,8 |
| 600 | 27 | 31 | 49 | 6,0 | 6,2 | 6,5 |

**Tabelle 4: BET-Oberflächen und mittlere IrO₂-Kristallitgrößen von Gruppe A-Katalysatoren (Beispiel C.4, Beispiel C.5) nach Kalzination in einem Muffelofen bei T_{K} = 600 °C, wobei t_{K} = 1 h.**

| T_{K} in °C | BET-Oberfläche in m²/g | | Mittlere IrO₂-Kristallitgröße in nm | |
|---|---|---|---|---|
| | Ir75Nb_{1-y}Ta_{y}Ox | Ir75Nb_{1-y}Ta_{y}Ox | Ir75Nb_{1-y}Ta_{y}Ox | Ir75Nb_{1-y}Ta_{y}Ox |
| | y = 0,25 | y = 0,75 | y = 0,25 | y = 0,75 |
| 600 | 46 | 41 | 6,2 | 6,2 |

**Tabelle 5: BET-Oberflächen und mittlere IrO₂-Kristallitgrößen von Gruppe B-Katalysatoren (Beispiel D.1, Beispiel D.2, Beispiel D.3) nach Kalzination in einem Muffelofen bei verschiedenen Temperaturen T_{K}, wobei t_{K} = 1 h.**

| T_{K} in °C | BET-Oberfläche in m²/g | | | Mittlere IrO₂-Kristallitgröße in nm | | |
|---|---|---|---|---|---|---|
| | Ir60NbOx | Ir60TaOx | Ir60Nb_{1-y}Ta_{y}Ox | Ir60NbOx | Ir60TaOx | Ir60Nb_{1-y}Ta_{y}Ox |
| | | | y = 0,5 | | | y = 0,5 |
| 350 | 72 | 70 | 89 | 1,6 | 2,1 | 2,1 |
| 500 | 64 | 62 | 73 | 7,9 | 5,1 | 6,4 |

**Tabelle 6: BET-Oberflächen und mittlere IrO₂-Kristallitgrößen von Gruppe C-Katalysatoren (Beispiel E.1, Beispiel E.2, Beispiel E.3) nach Kalzination in einem Muffelofen bei T_{K} = 500 °C, wobei t_{K} = 1 h.**

| T_{K} in °C | BET-Oberfläche in m²/g | | | Mittlere IrO₂-Kristallitgröße in nm | | |
|---|---|---|---|---|---|---|
| | Ir50NbOx | Ir50TaOx | Ir50Nb_{1-y}Ta_{y}Ox | Ir50NbOx | Ir50TaOx | Ir50Nb_{1-y}Ta_{y}Ox |
| | | | y = 0,5 | | | y = 0,5 |
| 500 | 87 | 80 | 113 | 8,7 | 5,6 | 6,9 |

**Tabelle 7: BET-Oberflächen von Gruppe C-Katalysatoren oder (Beispiel E.4, Beispiel E.5) nach Kalzination in einem Muffelofen bei T_{K} = 500 °C, wobei t_{K} = 1 h.**

| T_{K} in °C | BET-Oberfläche in m²/g | | Mittlere IrO₂-Kristallitgröße in nm | |
|---|---|---|---|---|
| | Ir50Nb_{1-y}Ta_{y}Ox | Ir50Nb_{1-y}Ta_{y}Ox | Ir50Nb_{1-y}Ta_{y}Ox | Ir50Nb_{1-y}Ta_{y}Ox |
| | y = 0,25 | y = 0,75 | y = 0,25 | y = 0,75 |
| 500 | 111 | 107 | 7,8 | 6,4 |

### Bestimmung der elektrokatalytischen Aktivität und der elektrochemischen Stabilität von Katalysatormaterialien der Typen Ir75NbOx, Ir75TaOx, Ir75Nb_{0,5}Ta_{0,5}Ox, der Typen Ir60NbOx, Ir60TaOx, Ir60Nb_{0,5}Ta_{0,5}Ox, und des vorbekannten Typs Ir75TiO₂

Katalysatoren der Gruppe A, nämlich der Typen Ir75NbOx, Ir75TaOx, Ir75Nb_{0,5}Ta_{0,5}Ox, der Gruppe B, nämlich der Typen Ir60NbOx, Ir60TaOx, Ir60Nb_{0,5}Ta_{0,5}Ox, und des vorbekannten Typs Ir75TiO₂ wurden jeweils bezüglich ihrer elektrokatalytischen Aktivität (in mA pro mg Iridium) untersucht. Als Testreaktion wurde die Sauerstoffentwicklungsreaktion (engl. *oxygen evolution reaction,* OER) im Rahmen der Wasserelektrolyse gewählt.

Die Kurzbezeichnung der Vergleichskatalysatoren vom Typ Ir75TiO₂ ist analog zu den Kurzbezeichnungen der hier vorgestellten Typen von Gruppe A-Katalysatoren, von Gruppe B-Katalysatoren und von Gruppe C-Katalysatoren gebildet. Einzige Ausnahme ist, dass die Vergleichskatalysatoren als Trägermaterial ein stöchiometrisch zusammengesetztes Oxid enthalten, nämlich Titan(IV)-oxid (TiO₂). Die Haupt-Aktivkomponente ist IrO₂.

In den für die Aktivitätsmessungen verwendeten Ir75-Katalysatoren und Ir60-Katalysatoren sowie in den vorbekannten Vergleichskatalysatoren vom Typ Ir75TiO₂ lag IrO₂ kristallin vor. Die Bildung von IrO₂-Kristalliten in der Rutilstruktur wurde ab einer Temperatur T_{K} von ca. 300 °C beobachtet.

Für die Aktivitätsmessungen wurden von jedem der oben genannten Katalysatortypen eine Auswahl von Katalysatoren bereitgestellt, welche sich hinsichtlich ihrer mittleren IrO₂-Kristallitgröße unterschieden.

Die für die Aktivitätsmessungen eingesetzten Katalysatoren wurden wie folgt erhalten (1.) und ausgewählt (2.):
1. Kalzination einer Probe des jeweiligen Ausgangsmaterials bei einer vorgegebenen Temperatur T_{K} zwischen 300 °C und 600 °C für 1 h.
2. Bestimmung der mittleren IrO₂-Kristallitgröße mittels Rietveld-Analyse auf Basis von durch XRD-Analyse erhaltenen Röntgenbeugungsdiagrammen.

Die XRD-Analyse ergab außerdem, dass in allen für die Aktivitätsmessungen hergestellten Gruppe A-Katalysatoren und Gruppe B-Katalysatoren Iridium in Form von Iridium(IV)-oxid (IrO₂) vorlag. Andere Iridium(IV)-Verbindungen oder Iridium(III)-Verbindungen konnten mittels XRD-Analyse nicht nachgewiesen werden. Allerdings wurde in allen Gruppe A-Katalysatoren und in allen Gruppe B-Katalysatoren als Nebenprodukt angefallenes Iridiummetall (Ir⁰) nachgewiesen. Das Massenverhältnis IrO₂ : Ir⁰ betrug mehr als 94 : 6 und weniger als 95 : 5. Mithin enthielt die Aktivkomponente der getesteten Gruppe A-Katalysatoren und der getesteten Gruppe B-Katalysatoren neben der Haupt-Aktivkomponente IrO₂ als Nebenprodukt angefallenes Ir⁰. Dabei betrug der Ir⁰-Gehalt der Aktivkomponente der Gruppe A-Katalysatoren und der Gruppe B-Katalysatoren jeweils mehr als 5 Gew.-% und weniger als 6 Gew.-%.

Es sei darauf hingewiesen, dass eventuell amorph vorliegendes Ir⁰ mittels XRD nicht nachweisbar ist. Zudem ist nicht auszuschließen, dass die Aktivkomponenten der untersuchten Katalysatoren - zusätzlich zu IrO₂ und nachgewiesenem Ir⁰ - eine oder mehrere weitere Iridium-Verbindung enthielten. Dies kann insbesondere dann nicht ausgeschlossen werden, wenn teilkristallines, d. h. zum Teil röntgenamorphes, Iridium enthaltendes Material vorliegt. Dabei könnte es sich - in Abhängigkeit von den für die Synthese der vorgenannten Gruppe A-Katalysatoren und Gruppe B-Katalysatoren gewählten Reaktionsbedingungen - um eine oder mehrere weitere Iridium(IV)-Verbindungen handeln, beispielsweise Iridium(IV)-hydroxid (Ir(OH)₄). Das vorgenannte Hydroxid kann auch als Hydrat von IrO₂ betrachtet werden. Zu den Reaktionsbedingungen zählen insbesondere die Wahl des Iridiumsalzes, die Reaktionszeit, die Reaktionstemperatur, die gewählte Iridiumionen-Konzentration, die gewählte Trägerkomponenten-Konzentration.

Die elektrokatalytische Aktivität von Katalysatoren der vorgenannten Katalysatorsysteme wurde in Abhängigkeit von der IrO₂-Kristallitgröße bestimmt, wobei die IrO₂-Kristallitgrößen im Bereich zwischen 1,5 nm und 7 nm lagen. Für jeden der 20 getesteten Katalysatoren wurde die elektrokatalytische Aktivität mindestens dreier Proben bestimmt.

Die für die Ir75-Katalysatoren, für die Ir60-Katalysatoren sowie für die Vergleichskatalysatoren vom Typ Ir75TiO₂ mittels cyclovoltammetrischer Messungen bestimmten elektrokatalytischen Aktivitäten sind in der nachfolgenden **Tabelle 8** aufgeführt. Zudem ist jeweils der Aktivitätsverlust angegeben, welcher ein Indikator für die elektrochemische Stabilität des getesteten Katalysatorsystems ist.

**Tabelle 8: Elektrokatalytische Aktivitäten von Gruppe A-Katalysatoren der Typen Ir75NbOx, Ir75TaOx, Ir75Nb_{0,5}Ta_{0,5}Ox, von Gruppe B-Katalysatoren der Typen Ir60NbOx, Ir60TaOx, Ir60Nb_{0,5}Ta_{0,5}Ox und von vorbekannten Katalysatoren des Typs Ir75TiO₂ in der OER im Rahmen der Wasserelektrolyse - in Abhängigkeit von der IrO₂-Kristallitgröße.**

| Katalysator | w(Iridium)^{[a]} in % | Mittlere IrO₂-Kristallitgröße^{[b]} in nm | I_{m 1,55 V} (BoT)^{[c]} in mA/mg(Ir) | I_{m 1,55 V} (EoT)^{[d]} in mA/mg(Ir) | Aktivitätsverlust^{[e]} in % |
|---|---|---|---|---|---|
| Ir75NbOx | 76,2 | 2,5 | 23, 978 | 6,672 | 72,31 |
| | 77,0 | 3,9 | 7,854 | 3,152 | 65,15 |
| | 77,0 | 5,3 | 5,579 | 2,590 | 53,58 |
| | 76,3 | 6,0 | 3,795 | 1,299 | 65,77 |
| Ir75TaOx | 73,2 | 3,8 | 5,062 | 1,630 | 63,88 |
| | 73,2 | 5,0 | 3, 322 | 1,221 | 62,87 |
| | 73,2 | 6,2 | 4,571 | 1,535 | 64,38 |
| Ir75Nb_{0,5}Ta_{0,5}Ox | 73,6 | 3,7 | 11,677 | 12,079 | -4,30 |
| | 73,6 | 5,1 | 7,638 | 4,832 | 36,83 |
| | 73,6 | 6,5 | 3,770 | 2,535 | 31,55 |
| | 75,6 | 5,3 | 4,690 | 1,487 | 68,33 |
| Ir60NbOx | 60,2 | 1,6 | 44,199 | 42,803 | 3,16 |
| | 60,2 | 7,9 | 11,358 | 11,661 | -2,67 |
| Ir60TaOx | 61,6 | 2,1 | 33,682 | 18,531 | 44,98 |
| | 61,6 | 5,1 | 3,434 | 2,322 | 32,36 |
| Ir60Nb_{0,5}Ta_{0,5}Ox | 61,0 | 2,1 | 13,384 | 16,075 | 7,53 |
| | 61,0 | 6,4 | 3,912 | 3,851 | 1,54 |
| Ir75TiO₂ | 75,6 | 3,2^{[f]} | 7,605 | 2,636 | 65,14 |
| | 75,6 | 3,6 | 4,316 | 1,395 | 74,84 |
| | 75,6 | 5,3 | 4,690 | 1,487 | 68,33 |

[a] Wahrer Wert des Massenanteils w(lridium) an der Gesamtmasse des jeweiligen Katalysators, bestimmt mittels ICP-OES-Analyse;
[b] die mittlere IrO₂-Kristallitgröße wurde vor dem Einsatz des jeweiligen Katalysators mittels XRD bestimmt;
[c] Gesamtstrom beziehungsweise elektrokatalytische Aktivität [*mA* pro mg Iridium], gemessen bei 1,55 V gegen RHE (Reversible Wasserstoffelektrode; engl. *Reversible Hydrogen Electrode*) zu Beginn der Testung (engl. *Begin of Test,* BoT), t = 0 min;
[d] Gesamtstrom beziehungsweise elektrokatalytische Aktivität [*mA* pro mg Iridium], gemessen bei 1,55 V gegen RHE (Reversible Wasserstoffelektrode; engl. *Reversible Hydrogen Electrode*) am Ende der Testung (engl. *End of Test,* EoT), t = 360 min;
[e] ein negativer Aktivitätsverlust bedeutet, dass die Aktivität am Ende der Testung zunimmt;
[f] Umicore^{®} Elyst Ir75 0480 (CAS-Nummer: 12030-49-8).

Für fünf der sechs vermessenen Typen der Gruppe A-Katalysatoren und der Gruppe B-Katalysatoren wurde eine Abhängigkeit der elektrokatalytischen Aktivität zu Beginn der Testung (vgl. **Tabelle 8,** Spalte 3: BoT-Werte) von der mittleren IrO₂-Kristallitgröße gefunden - im Falle ein und derselben Trägerkomponente -: Die elektrokatalytische Aktivität nahm in fast allen Fällen mit zunehmender mittlerer IrO₂-Kristallitgröße beziehungsweise zunehmender Kristallinität ab. Einzige Ausnahme bildete das Katalysatorsystem Ir75TaOx. Auch im Falle des Referenzsystems Ir75TiO₂ wurde der vorgenannte Trend nicht beobachtet.

Die elektrokatalytische Aktivität der hier vorgestellten Ir75-Katalysatoren war in fast allen Fällen zu Beginn der Testung - bei vergleichbarer mittlerer IrO₂-Kristallitgröße - mindestens auf dem Niveau des Referenzkatalysators Ir75TiO₂. Mit anderen Worten: In einigen Fällen wurden bei Verwendung der hier beschriebenen Ir75-Katalysatoren sogar höhere elektrokatalytische Aktivitäten gemessen als für den Referenzkatalysator - bei vergleichbarer mittlerer IrO₂-Kristallitgröße. Nur im Falle des Katalysators Ir75TaOx, welcher IrO₂-Kristallite mit einer mittleren Größe von 5 nm enthielt, wurde zu Beginn der Testung eine geringere elektrokatalytische Aktivität beobachtet als für den Referenzkatalysator Ir75TiO₂, welcher IrO₂-Kristallite im selben Größenbereich enthielt (vgl. **Tabelle 8,** letzte Zeile, Spalten 3 und 4).

Mit Blick auf die elektrokatalytische Aktivität zum Ende der Testung (vgl. **Tabelle 8,** Spalte 5: EoT-Werte) wurde für die getesteten Gruppe A-Katalysatoren und Gruppe B-Katalysatoren dieselbe Abhängigkeit von der IrO₂-Kristallitgröße gefunden wie weiter oben für die elektrokatalytische Aktivität zu Beginn der Testung. Die Ausnahmen waren ebenfalls identisch.

Bemerkenswert ist, dass sämtliche Katalysatoren vom Typ Ir75NbOx und vom Typ Ir75NbTaOx sowohl zu Beginn der Testung als auch am Ende der Testung jeweils eine höhere elektrokatalytische Aktivität zeigten als die Referenzkatalysatoren, welche jeweils IrO₂-Kristallite im selben Größenbereich enthielten. Die größte Differenz hinsichtlich der elektrokatalytischen Aktivität wiesen die Katalysatoren vom Typ Ir75NbTaOx und die Referenzkatalysatoren vom Typ Ir75TiO₂ auf - bei jeweils vergleichbarer mittlerer IrO₂-Kristallitgröße.

Für alle Ir75-Katalysatorsysteme war - bei vergleichbarer mittlerer IrO₂-Kristallitgröße - die Differenz zwischen BoT und EoT geringer als im Falle der Referenzkatalysatoren vom Typ Ir75TiO₂. Mit anderen Worten: Im Falle der getesteten Ir75-Katalysatoren war - bei vergleichbarer mittlerer IrO₂-Kristallitgröße - der prozentuale Aktivitätsverlust geringer als bei den Referenzkatalysatoren vom Typ Ir75TiO₂. Die Ir75-Katalysatoren weisen also gegenüber den Referenzkatalysatoren eine verbessere elektrochemische Stabilität auf. Dies gilt insbesondere für Katalysatoren vom Typ Ir75NbTaOx. Hier nimmt der Aktivitätsverlust im Falle einer mittleren IrO₂-Kristallitgröße von 3,7 nm sogar einen negativen Wert an (- 4,3). Dieser Wert bedeutet formal, dass sich die elektrokatalytische Aktivität im Laufe der Testung verbessert. Weil es sich hier auch um eine Messungenauigkeit handeln kann, wird jedoch davon ausgegangen werden, dass die elektrokatalytische Aktivität während der Testung im Wesentlichen konstant bleibt oder nur geringfügig abnimmt.

### Zusammenfassend lässt sich feststellen:

Alle getesteten Ir75-Katalysatoren zeigen eine zufriedenstellende elektrokatalytische Aktivität bei der OER unter sauren Bedingungen. Besonders vorteilhaft ist, dass alle hier beschriebenen Ir75-Katalysatoren - bei vergleichbarer mittlerer IrO₂-Kristallitgröße - eine verbesserte elektrochemische Stabilität gegenüber den Referenzkatalysatoren vom Typ Ir75TiO₂ aufweisen (vgl. **Tabelle 8,** Spalte 6). Mithin eignen sie sich hervorragend als Anodenkatalysatoren in Brennstoffzellen, zum Beispiel in PEM-Brennstoffzellen, oder in Wasserelektrolyseuren, beispielsweise in PEM-Wasserelektrolysezellen.

Gleiches gilt auch für die Katalysatoren mit einem Massenanteil w(lridium) von 60 %: Unabhängig von der eingesetzten Trägerkomponente (NbOx, TaOx, Nb_{0,5}Ta_{0,5}Ox) wird eine - gegenüber dem Vergleichskatalysatorsystem Ir75TiO₂ - deutlich erhöhte elektrochemische Stabilität beobachtet. Zudem zeigen die Katalysatoren Ir60NbOx, Ir60TaOx und Ir60Nb_{0,5}Ta_{0,5}Ox insgesamt höhere elektrochemische Stabilitäten als die getesteten Ir75-Katalysatoren. Schließlich gilt auch für die Ir60-Katalysatoren - im Falle ein und derselben Trägerkomponente -: Je kleiner die mittlere IrO₂-Kristallitgröße, desto höher ist die elektrokatalytische Aktivität und desto geringer ist die elektrochemische Stabilität.

### A. Materialien und Methoden

### A.1 Materialien

■ Niobammoniumoxalat (NAmOx; TANIOBIS GmbH)
   Chemische Kenndaten: Nb min. 19 %; C₂O₄ typ. 50 - 65 %, NH₃ min. 2 %
   Löslichkeit: 60 - 230 g/L Nb₂O₅ (= 40 - 160 g/L Nb bei 20 - 70 °C)
■ wässrige Tantaloxalat-Lösung (TOx-Lösung; TANIOBIS GmbH)
   Chemische Kenndaten: Nb₂O₅ typ. 90 - 270 g/L; C₂O₄ typ. 150 - 400 g/L; CI max. 50 mg/L; F max. 100 mg/L
   Typischer Gehalt: 190 g/L Nb₂O₅
   Dichte: 1,15 - 1,40 g/cm³
■ wässrige Nioboxalat-Lösung (NOx-Lösung; TANIOBIS GmbH)
   Chemische Kenndaten: Ta₂O₅ typ. 150 - 200 g/L; C₂O₄ typ. 110 - 160 g/L; CI max. 50 mg/L; F max. 100 mg/L
   Typischer Gehalt: 190 g/L Ta₂O₅
   Dichte: 1,00 - 1,30 g/cm³
■ H₂IrCl₆-Lösung (99,95 % Metallreinheit; Umicore AG & Co. KG)
■ NaOH (p.a.; Merck KGaA)
■ Salpetersäure (65 %; Merck KGaA)
■ Essigsäure (100 %; Merck KGaA)

### A.2 Geräte und Methoden

### ■ Gefriertrocknung

Verwendet wurde ein Gefriertrockner vom Typ "Sublimator 4x5x6" (ZIRBUS technology GmbH).

### ■ Kalzination

Sämtliche Kalzinationen wurden unter Verwendung eines Muffelofens vom Typ N 100/14 oder vom Typ LH 15/14 (Nabertherm GmbH), ausgestattet mit einem Nabertherm Program Controller C30, durchgeführt.

Sämtliche Kalzinationen wurden "unter Luftatmosphäre" durchgeführt. Das bedeutet, dass ein in den Muffelofen geleiteter Luftstrom 500 NL/h beträgt, also 500 Liter/Stunde bei Normalbedingungen (1013 mbar, +20°C).

### ■ Trocknung im Vakuumtrockenschrank

Die Trocknungen erfolgten unter Verwendung eines Vakuumtrockenschranks vom Typ Thermo Scientific Vacutherm VT 6060 M-BL (Fisher Scientific GmbH). Die Innentemperatur betrug ca. 100 °C.

### ■ Bestimmung der spezifischen Oberfläche nach der Brunauer-Emmett-Teller-Methode (BET-Methode)

Die Proben wurden an einem Smart VacPrep (Micromeritics Instrument Corporation) für die Messungen vorbereitet, wobei jede Probe für 1200 min unter Vakuum ausgeheizt wurde. Die Ausheiztemperatur wurde so gewählt, dass die zu untersuchenden, bereits kalzinierten Proben möglichst unverändert blieben: Die Ausheiztemperatur lag immer unterhalb der Kalzinationstemperatur der jeweiligen Probe und betrug maximal 350 °C. Zuvor ausschließlich (gefrier-)getrocknete, d. h. nicht kalzinierte Proben, wurden bei einer Temperatur von 150 °C ausgeheizt.

Die Bestimmung der spezifischen Oberflächen wurden an einem 3Flex Surface Characterization Analyzer (Micromeritics Instrument Corporation) durchgeführt.

Die BET Oberfläche wurde mittels N₂ Adsorptionsisotherme bei 77 K bestimmt (DIN ISO 9277:2010).

### ■ Röntgen-Pulverdiffraktometrie (engl. X-ray diffraction, XRD, bzw. powderX-ray diffraction, PXRD)

Alle Messungen wurden an einem Diffraktometer des Typs X'Pert MPD Pro (Malvern Panalytical GmbH) oder an einem Diffraktometer des Typs CubiX³ Pharma (Malvern Panalytical GmbH) durchgeführt.

Für die Rietveld-Analyse der erhaltenen Röntgenbeugungsdiagramme wurden als Referenzen IrO₂ (PDF-Nr.: 98-005-6009) und Ir⁰ (PDF-Nr.: 98-004-1524) verwendet.

Der Auswertefehler bei der Bestimmung der mittleren Kristallitgröße beträgt hier, insbesondere in Abhängigkeit von der Probenzusammensetzung, der gewählten Kalzinationstemperatur und der Kristallinität der Probenbestandteile, +/- 0,3 nm.

Der Auswertefehler bei der Bestimmung des Ir⁰-Anteils beträgt hier, insbesondere in Abhängigkeit von der Probenzusammensetzung, der gewählten Kalzinationstemperatur und der Kristallinität der Probenbestandteile, +/- 2 Gew.-%.

Auf eine Quantifizierung der Trägerkomponente im Katalysator wurde verzichtet, weil sie entweder im Katalysator zum Teil noch zu einem großen Teil amorph vorliegt. Daher ist sie mittels XRD-Analyse nicht quantifizierbar und/oder die zugehörigen Reflexe werden zu stark von den Reflexen der Haupt-Aktivkomponente IrO₂ überlagert.

### ■ Optische Emissionsspektrometrie mit induktiv gekoppeltem Plasma (ICP-OES)

Die ICP-OES-Analysen wurden an einem Gerät des Typs 5800 ICP-OES (Agilent Technologies, Inc.) durchgeführt.

Die Massenanteile w(Niob), w(Tantal) und w(lridium) wurden mittels ICP-OES bestimmt. Die Nachweisgrenze der hier genannten Geräte beträgt für die hier relevanten Elemente 0,5 µg/g bis 2 µg/g.

Die Messgenauigkeit der vorgenannten Geräte beträgt für Niob +/- 1,1 % und für Iridium +/- 0,7.

### ■ Elementaranalyse (CHN-Analyse)

Die CHN-Analyse wurde an einem Gerät des Typs Elementar Vario EL III (Elementar Analysensysteme GmbH) durchgeführt. Die Nachweisgrenze liegt bei 0,1 Gew.-%. Das bedeutet: Liegt ein Massenanteil unterhalb der angegebenen Nachweisgrenze, so wird dieser Massenanteil mit < 0,1 Gew.-% angegeben.

### A.4 Bestimmung der elektrokatalytischen Aktivitäten

Die elektrochemischen Eigenschaften der Katalysatormaterialien wurden mittels RDE (Rotierende Scheibenelektrode; engl. *Rotating Disc Electrode*) über die Stromdichte (in mA/cm²) bei 1,55 V *versus* RHE bestimmt (in mA/mg_{Ir}). Dazu wurden die zu testenden Katalysatoren, welche in Pulverform vorlagen, in einem Reinstwasser-Iso-propanol-Gemisch (1 : 3) suspendiert. Der Ir-Gehalt dieser Suspensionen, nachfolgend auch als Katalysator-Tinten bezeichnet, betrug jeweils 350 µg_{Ir}/mL. Den vorgenannten Katalysator-Tinten wurden pro Milliliter Reinstwasser-Iso-propanol-Gemisch 4 µL einer 5 %-igen Nation^{™}-Lösung (45 Gew.-% Wasser, 50 Gew.-% niedere aliphatische Alkohole; Sigma-Aldrich Pty Ltd) zugefügt. Die Katalysator-Tinten wurden auf eine Goldspitzenelektrode aufgebracht.

Alle cyclovoltammetrischen Messungen zur Bestimmung der elektrokatalytischen Aktivitäten wurden in 0,1 M Perchlorsäure bei Raumtemperatur und einer Rotationsgeschwindigkeit von 2500 U/min durchgeführt. Es wurden eine Au-Gegenelektrode und eine Hg/HgSO₄-Referenzelektrode verwendet. Die Scangeschwindigkeit während der cyclovoltammetrischen Messungen betrug 20 mV/s (je ein Zyklus zwischen 1,2 V und 1,8 V für BoT und EoT).

Vor Durchführung der BoT-Messung wurden das Setup einem Reinigungsschritt (100 Zyklen zwischen 0,05 V und 1,2 V, Scangeschwindigkeit = 500 mV/s) und einem Konditionierungsschritt (10 Zyklen zwischen 1,2 V und 1,8 V, Scangeschwindigkeit = 100 mV/s). Nach der BoT-Messung wurden alle Materialien einem Alterungsprozess unterzogen (6 h bei 1,6 V *versus* RHE). Vor der EoT-Messung wurde ein weiterer Konditionierungsschritt unter den oben genannten Bedingungen durchgeführt.

Als Indikator für die elektrokatalytische Aktivität der Katalysatoren zu Beginn der Testung (BoT) und am Ende der Testung (EoT) wurde jeweils der bei einer Spannung von 1,55 V *versus* RHE bestimmte Gesamtstrom genutzt.

### B. Herstellung der Niob(V) und/oder Tantal(V) enthaltenden porösen oxidischen Materialien mittels Hydrothermalsynthese

Die jeweilige Niob(V)- und/oder Tantal(V)-Präkursorverbindung wurde in vollentsalztem Wasser gelöst und in einen Autoklaven überführt. Die Autoklavenreaktion wurde bei 200 °C und 6 h durchgeführt. Das erhaltene Produkt wurde über eine Filternutsche abfiltriert, mit vollentsalztem Wasser gewaschen und im Gefriertrockner getrocknet und gegebenenfalls kalziniert.

**Tabelle 9: Hydrothermalsynthese von NbOx (Beispiel B.1 und Beispiel B.6), TaOx (Beispiel B.2) und Nb_{1-y}Ta_{y}Ox (y = 0,5, Beispiel B.3; y = 0,25, Beispiel B.4; y = 0,75, Beispiel B.5): Präkursorverbindung, M⁵⁺-Konzentration.**

| | Poröses oxidisches Material | Präkursor | c(M⁵⁺)^{[f]} in mol/L |
|---|---|---|---|
| **B.1** | NbOx | NAmOx | 0,35 |
| **B.2** | TaOx | TOx-Lösung | 0,15 |
| **B.3** | Nb_{0,5}Ta_{0,5}Ox^{[g]} | NAmOx | 0,075 |
| | | TOx-Lösung | 0,075 |
| **B.4** | Nb_{0,75}Ta_{0,25}Ox^{[h, m]} | NAmOx | 0,1125 |
| | | TOx-Lösung | 0,0375 |
| **B.5** | Nb_{0,25}Ta_{0,75}Ox^{[k, m]} | NAmOx | 0,0375 |
| | | TOx-Lösung | 0,1125 |
| **B.6** | NbOx^{[n]} | NbOx-Lösung | 0,15 |

[f] M⁵⁺: Nb⁵⁺ und/oder Ta⁵⁺.
[g] Nb⁵⁺ und Ta⁵⁺ liegen äquimolar vor, machen also jeweils 50 Mol-% der Kationen aus.
[h] Nb⁵⁺ macht 75 Mol-% der Kationen aus, Ta⁵⁺ macht 25 Mol-% der Kationen aus.
[k] Nb⁵⁺ macht 25 Mol-% der Kationen aus, Ta⁵⁺ macht 75 Mol-% der Kationen aus.
[m] Die Gesamtkonzentration c(Niob + Tantal) beträgt immer 0,15 mol/L.
[n] NbOx wurde auch ausgehend von einer NbOx-Lösung (anstelle von NAmOx, **B.1**) synthetisiert. Es wurde danach jedoch ausschließlich charakterisiert, d. h. nicht als Trägerkomponente eingesetzt.

### C. Synthese der Ausgangsmaterialien für Gruppe A-Katalysatoren der Typen Ir75NbOx, Ir75TaOx, Ir75Nb_{0,5}Ta_{0,5}Ox, Ir75Nb_{0,75}Ta_{0,25}Ox, Ir75Nb_{0,25}Ta_{0,75}Ox

In einem Reaktor wurden 2,6 L vollentsalztes H₂O vorgelegt und von Raumtemperatur auf die Reaktionstemperatur von 70 °C erhitzt. Während des Aufheizens wurden bei einer Innentemperatur von 55 °C zunächst eine Suspension der Trägerkomponente (7,50 g NbOx (Beispiel **C.1**) oder 7,50 g TaOx (Beispiel **C.2**) oder 7,50 g Nb_{0,5}Ta_{0,5}Ox (Beispiel **C.3**) oder 7,50 g Nb_{0,75}Ta_{0,25}Ox (Beispiel **C.4**) oder 7,50 g Nb_{0,25}Ta_{0,75}Ox (Beispiel **C.5**)) in 200 mL vollentsalztem H₂O und anschließend eine NaOH-Lösung (108 g in 200 mL vollentsalztem H₂O) zugegeben. Bei einer Innentemperatur des Reaktors von 65 °C wurde eine H₂IrCl₆-Lösung mit m(lr) = 47,25 g zu der basischen Suspension gegeben. Nach einer Reaktionszeit von 4 h bei 70 °C wurde unter Verwendung von 22 %-iger HNOs ein pH-Wert von 7,5 eingestellt und 1 h nachgerührt. Das jeweilige Rohprodukt wurde über eine Filternutsche abfiltriert und zunächst mit 0,5 %-iger Essigsäurelösung und anschließend mit vollentsalztem Wasser gewaschen. Das gewaschene Produkt wurde im Vakuumtrockenschrank für 16 h bei ca. 100 °C getrocknet.

Das nach dem Trocknen vorliegende Katalysatorausgangsmaterial wurde unter Verwendung eines Siebs mit der Maschenweite 200 µm (RETSCH GmbH) gesiebt und für 1 h in einem Muffelofen unter Luftatmosphäre kalziniert: T_{Kalzination} = 400 °C oder 450 °C oder 500 °C oder 550 °C oder 600 °C. Die nach Kalzination bestimmten BET-Oberflächen und mittleren IrO₂-Kristallitgrößen sind **Tabelle 3** und **Tabelle 4** zu entnehmen.

### D. Synthese der Ausgangsmaterialien für Gruppe B-Katalysatoren der Typen Ir60NbOx, Ir60TaOx, Ir60Nb_{0,5}Ta_{0,5}Ox

In einem Reaktor wurden 1,17 L vollentsalztes H₂O vorgelegt und von Raumtemperatur auf die Reaktionstemperatur von 70 °C erhitzt. Während des Aufheizens wurden bei einer Innentemperatur von 55 °C zunächst eine Suspension der Trägerkomponente (11,10 g NbOx (Beispiel **D.1**) oder 11,10 g TaOx (Beispiel **D.2**) oder 11,10 g Nb_{0,5}Ta_{0,5}Ox (Beispiel **D.3**)) in 100 mL vollentsalztem H₂O und anschließend eine NaOH-Lösung (100 g in 100 mL vollentsalztem H₂O) zugegeben. Bei einer Innentemperatur des Reaktors von 65 °C wurde eine H₂IrCl₆-Lösung mit m(lr) = 22,20 g zu der basischen Suspension gegeben. Nach einer Reaktionszeit von 4 h bei 70 °C wurde unter Verwendung von 22 %-iger HNOs ein pH-Wert von 7,5 eingestellt und 1 h nachgerührt. Das jeweilige Rohprodukt wurde über eine Filternutsche abfiltriert und zunächst mit 0,5 %-iger Essigsäurelösung und anschließend mit vollentsalztem Wasser gewaschen. Das gewaschene Produkt wurde im Vakuumtrockenschrank für 16 h bei ca. 100 °C getrocknet.

Das nach dem Trocknen vorliegende Katalysatorausgangsmaterial wurde unter Verwendung eines Siebs mit der Maschenweite 200 µm (RETSCH GmbH) gesiebt und für 1 h in einem Muffelofen unter Luftatmosphäre kalziniert: T_{Kalzination} = 350 °C oder 500 °C. Die nach Kalzination bestimmten BET-Oberflächen und mittleren IrO₂-Kristallitgrößen sind **Tabelle 5** zu entnehmen.

### E. Synthese der Ausgangsmaterialien für Gruppe C-Katalysatoren der Typen Ir50NbOx, Ir50TaOx, Ir50Nb_{0,5}Ta_{0,5}Ox, Ir50Nb_{0,75}Ta_{0,25}Ox, Ir50Nb_{0,25}Ta_{0,75}Ox

In einem Reaktor wurden 0,98 L vollentsalztes H₂O vorgelegt und von Raumtemperatur auf die Reaktionstemperatur von 70 °C erhitzt. Während des Aufheizens wurden bei einer Innentemperatur von 55 °C zunächst eine Suspension der Trägerkomponente (6,25 g NbOx (Beispiel **E.1**) oder 6,25 g TaOx (Beispiel **E.2**) oder 6,25 g Nb_{0,5}Ta_{0,5}Ox (Beispiel **E.3**) oder 6,25 g Nb_{0,75}Ta_{0,25}Ox (Beispiel **E.4**) oder 6,25 g Nb_{0,25}Ta_{0,75}Ox (Beispiel **E.5**)) in 100 mL vollentsalztem H₂O und anschließend eine NaOH-Lösung (16,95 g in 16,95 mL vollentsalztem H₂O) zugegeben. Bei einer Innentemperatur des Reaktors von 65 °C wurde eine H₂IrCl₆-Lösung mit m(lr) = 7,50 g zu der basischen Suspension gegeben. Nach einer Reaktionszeit von 4 h bei 70 °C wurde unter Verwendung von 22 %-iger HNOs ein pH-Wert von 7,5 eingestellt und 1 h nachgerührt. Das jeweilige Rohprodukt wurde über eine Filternutsche abfiltriert und zunächst mit 0,5 %-iger Essigsäurelösung und anschließend mit vollentsalztem Wasser gewaschen. Das gewaschene Produkt wurde im Vakuumtrockenschrank für 16 h bei ca. 100 °C getrocknet.

Das nach dem Trocknen vorliegende Katalysatorausgangsmaterial wurde unter Verwendung eines Siebs mit der Maschenweite 200 µm (RETSCH GmbH) gesiebt und für 1 h in einem Muffelofen unter Luftatmosphäre kalziniert: T_{Kalzination} = 500 °C. Die nach Kalzination bestimmten BET-Oberflächen und mittleren IrO₂-Kristallitgrößen sind **Tabelle 6** und **Tabelle 7** zu entnehmen.

### Anmerkung zu C., D. und E.:

Die Suspension der Trägerkomponente kann hergestellt werden durch:
a) Suspendieren der getrockneten, insbesondere gefriergetrockneten, und gegebenenfalls gemahlenen Trägerkomponente, in vollentsalztem Wasser, oder
b) Resuspendieren der ausschließlich mit vollentsalztem Wasser gewaschenen, nicht thermisch behandelten Trägerkomponente in vollentsalztem Wasser.

Beim Siebvorgang handelt es sich um einen optional vorsehbaren Schritt, welcher ausschließlich eine geringfügig einfachere Handhabbarkeit der Katalysatormaterialien zur Folge hat. Ist der Siebvorgang vorgesehen, so kann dieser auch erst nach der Kalzination durchgeführt werden.

Die Erfindung ist nicht auf eine der vorbeschriebenen Ausführungsformen beschränkt, sondern in vielfältiger Weise abwandelbar.

Man erkennt, dass die Erfindung poröse oxidische Materialien betrifft, welche Niob und/oder das schwere Homologe Tantal in der Oxidationsstufe +5 enthalten, sowie die Verwendung dieser Materialien. Gegenstand der vorliegenden Erfindung sind zudem Iridium enthaltende (Elektro-)Katalysatoren, welche ein poröses oxidisches Gruppe 5-Element-Material aufweisen, insbesondere ein poröses oxidisches Niob(V) und/oder Tantal(V) enthaltendes Material. Des Weiteren betrifft die Erfindung die Verwendung solcher (Elektro-)Katalysatoren.

Für die hier beschriebenen porösen oxidischen Niob(V) und/oder Tantal(V) enthaltenden Materialien wurden nach (Gefrier-)Trocknung überraschenderweise sehr hohe BET-Werte bestimmt, nämlich von mehr als 100 m²/g, insbesondere von mehr als 200 m²/g, zum Teil sogar von mehr als 300 m²/g, beispielsweise im Bereich von ca. 250 m²/g bis ca. 320 m²/g. Insbesondere im Vergleich zu kommerziell erhältlichen Oxiden wie beispielsweise Nb₂O₅ weisen die hier vorgestellten Materialien sehr hohe spezifische Oberflächen auf. Sogar nach einer thermischen Behandlung für einen Zeitraum von 1 Stunde bei einer Temperatur im Bereich von ca. 300 °C bis ca. 600 °C weisen dies oxidischen Materialien üblicherweise noch eine sehr hohe spezifische Oberfläche auf. Nach einer thermischen Behandlung für einen Zeitraum von 1 Stunde bei einer Temperatur von ca. 800 °C weisen sie in der Regel immer noch eine hohe spezifische Oberfläche auf, nämlich von ca. 10 m²/g oder mehr.

Insbesondere aufgrund ihrer hohen bis sehr hohen Temperaturstabilität sowie aufgrund ihrer chemischen Inertheit eignen sich die hier vorgestellten porösen oxidischen Niob(V) und/oder Tantal(V) enthaltenden Materialien beispielsweise als Trägermaterialien für Katalysatoren, welche im sauren oder basischen Milieu Anwendung finden und/oder bei erhöhten Temperaturen, insbesondere oberhalb von 100 °C, eingesetzt werden.

Durch Verwendung einiger ausgewählter hier vorgestellter Iridium enthaltenden Katalysatoren als OER-Katalysatoren konnte gezeigt werden, dass die hier beschriebenen Katalysatoren überraschenderweise ein ausgeglichenes Verhältnis zwischen elektrochemischer Stabilität und elektrokatalytischer Aktivität aufweisen: Alle hier beschriebenen Katalysatoren, welche als OER-Katalysatoren getestet wurden, zeigten unter den sauren Bedingungen der OER eine zufriedenstellende elektrokatalytische Aktivität. Besonders vorteilhaft ist, dass alle getesteten Katalysatoren - bei vergleichbarer mittlerer IrO₂-Kristallitgröße - eine verbesserte elektrochemische Stabilität gegenüber den Referenzkatalysatoren vom Typ Ir75TiO₂, einschließlich dem kommerziell erhältlichen Katalysator Umicore^{®} Elyst Ir75 0480 (CAS-Nummer: 12030-49-8) aufwiesen.

Mithin eignen sich die hier beschriebenen Katalysatoren sowohl als Anodenkatalysatoren, beispielsweise in einem Protonenaustauschmembran-Wasserelektrolyseur (OER-Katalysator) oder in einer Protonenaustauschmembran-Brennstoffzelle (als Co-Katalysator). In letzterem Fall kann ein hier beschriebener Katalysator auch kathodenseitig als Co-Katalysator fungieren.

Sowohl die hier beschriebenen porösen oxidischen Niob(V) und/oder Tantal(V) enthaltenden Materialien als auch die Katalysatoren, umfassend wenigstens eines dieser Materialien, können vorteilhafterweise einfach, reproduzierbar, umwelt- und ressourcenschonend sowie vergleichsweise kostengünstig in quantitativer oder nahezu quantitativer Ausbeute und in hoher Reinheit zur Verfügung gestellt werden. Dies gilt vorteilhafterweise jeweils auch für ihre Herstellung im industriellen Maßstab.

Sämtliche aus den Ansprüchen und der Beschreibung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Ein erstes poröses oxidisches Niob(V) enthaltendes Material, welches ein Nichtleiter ist und temperaturstabil oder im Wesentlichen temperaturstabil ist, wobei das oxidische Niob(V) enthaltende Material
i. gemäß Elementaranalyse Wasserstoff (H) enthält, wobei ein Massenanteil w(Wasserstoff) an der Gesamtmasse des oxidischen Niob(V) enthaltenden Materials wenigstens 0,5 % und höchstens 2 % beträgt;
ii. gemäß Elementaranalyse Stickstoff (N) enthält, wobei ein Massenanteil w(Stickstoff) an der Gesamtmasse des oxidischen Niob(V) enthaltenden Materials wenigstens 0,5 % und höchstens 3 % beträgt; und
iii. nach einer thermischen Behandlung für einen Zeitraum von 1 Stunde bei einer Temperatur von 400 °C eine mittels der BET-Methode bestimmte spezifische Oberfläche von wenigstens 200 m²/g und von höchstens 350 m²/g aufweist.

2. Das erste poröse oxidische Niob(V) enthaltende Material nach Anspruch 1, wobei das oxidische Niob(V) enthaltende Material eine oder mehrere der folgenden Eigenschaften aufweist:
a. der Massenanteil w(Wasserstoff) an der Gesamtmasse des oxidischen Niob(V) enthaltenden Materials beträgt gemäß Elementaranalyse wenigstens 1 % und höchstens 1,5 %;
b. der Massenanteil w(Stickstoff) an der Gesamtmasse des oxidischen Niob(V) enthaltenden Materials beträgt gemäß Elementaranalyse wenigstens 1 % und höchstens 1,5 %;
c. ein Massenanteil w(Niob) an der Gesamtmasse des oxidischen Niob(V) enthaltenden Materials beträgt gemäß ICP-OES-Analyse wenigstens 50 % und höchstens 65 %.

3. Das erste poröse oxidische Niob(V) enthaltende Material nach Anspruch 1 oder Anspruch 2, wobei das oxidische Niob(V) enthaltende Material
i. nach der thermischen Behandlung für einen Zeitraum von 1 Stunde bei einer Temperatur von 400 °C eine oder mehrere der folgenden Eigenschaften aufweist:
a. enthält gemäß Elementaranalyse Wasserstoff (H), wobei der Massenanteil w(Wasserstoff) an der Gesamtmasse des oxidischen Niob(V) enthaltenden Materials wenigstens 0,8 % und höchstens 1,2 % beträgt;
b. ist gemäß Elementaranalyse frei von Stickstoff (N);
c. der Massenanteil w(Niob) an der Gesamtmasse des oxidischen Niob(V) enthaltenden Materials beträgt gemäß ICP-OES-Analyse wenigstens 57 % und höchstens 67 %;
und/oder
ii. nach einer thermischen Behandlung für einen Zeitraum von 1 Stunde bei einer Temperatur von 600 °C eine oder mehrere der folgenden Eigenschaften aufweist:
a. enthält gemäß Elementaranalyse Wasserstoff (H), wobei der Massenanteil w(Wasserstoff) an der Gesamtmasse des oxidischen Niob(V) enthaltenden Materials wenigstens 0,5 % und höchstens 1 % beträgt;
b. ist gemäß Elementaranalyse frei von Stickstoff (N);
c. der Massenanteil w(Niob) an der Gesamtmasse des oxidischen Niob(V) enthaltenden Materials beträgt gemäß ICP-OES-Analyse wenigstens 58 % und höchstens 68 %;
d. die mittels der BET-Methode bestimmte spezifische Oberfläche beträgt wenigstens 100 m²/g und höchstens 200 m²/g.

4. Ein zweites poröses oxidisches Niob(V) enthaltendes Material, welches ein Nichtleiter ist und temperaturstabil oder im Wesentlichen temperaturstabil ist,
wobei das oxidische Niob(V) enthaltende Material
i. gemäß Elementaranalyse Wasserstoff (H) enthält, wobei ein Massenanteil w(Wasserstoff) an der Gesamtmasse des oxidischen Niob(V) enthaltenden Materials wenigstens 0,5 % und höchstens 2 % beträgt;
ii. gemäß Elementaranalyse Stickstoff (N) enthält,
wobei ein Massenanteil w(Stickstoff) an der Gesamtmasse des oxidischen Niob(V) enthaltenden Materials wenigstens 0,5 % und höchstens 3 % beträgt, oder frei von Stickstoff (N) ist;
und
iii. nach einer thermischen Behandlung für einen Zeitraum von 1 Stunde bei einer Temperatur von 400 °C eine mittels der BET-Methode bestimmte spezifische Oberfläche von wenigstens 200 m²/g und von höchstens 350 m²/g aufweist.

5. Das zweite poröse oxidische Niob(V) enthaltende Material nach Anspruch 4, wobei ein Massenanteil w(Niob) an einer Gesamtmasse des oxidischen Niob(V) enthaltenden Materials gemäß ICP-OES-Analyse wenigstens 50 % und höchstens 65 % beträgt.

6. Das zweite poröse oxidische Niob(V) enthaltende Material nach Anspruch 4 oder Anspruch 5, wobei das oxidische Niob(V) enthaltende Material
i. nach der thermischen Behandlung für einen Zeitraum von 1 Stunde bei einer Temperatur von 400 °C eine oder mehrere der folgenden Eigenschaften aufweist:
a. enthält gemäß Elementaranalyse Wasserstoff (H), wobei der Massenanteil w(Wasserstoff) an der Gesamtmasse des oxidischen Niob(V) enthaltenden Materials wenigstens 0,8 % und höchstens 1,2 % beträgt;
b. ist gemäß Elementaranalyse frei von Stickstoff (N);
c. der Massenanteil w(Niob) an der Gesamtmasse des oxidischen Niob(V) enthaltenden Materials beträgt gemäß ICP-OES-Analyse wenigstens 57 % und höchstens 67 %;
und/oder
ii. nach einer thermischen Behandlung für einen Zeitraum von 1 Stunde bei einer Temperatur von 600 °C eine oder mehrere der folgenden Eigenschaften aufweist:
a. enthält gemäß Elementaranalyse Wasserstoff (H), wobei der Massenanteil w(Wasserstoff) an der Gesamtmasse des oxidischen Niob(V) enthaltenden Materials wenigstens 0,5 % und höchstens 1 % beträgt;
b. ist gemäß Elementaranalyse frei von Stickstoff (N);
c. der Massenanteil w(Niob) an der Gesamtmasse des oxidischen Niob(V) enthaltenden Materials beträgt gemäß ICP-OES-Analyse wenigstens 58 % und höchstens 68 %;
d. die mittels der BET-Methode bestimmte spezifische Oberfläche beträgt wenigstens 100 m²/g und höchstens 200 m²/g.

7. Ein poröses oxidisches Tantal(V) enthaltendes Material, welches ein Nichtleiter ist und temperaturstabil oder im Wesentlichen temperaturstabil ist,
wobei das oxidische Tantal(V) enthaltende Material
i. gemäß Elementaranalyse Wasserstoff (H) enthält, wobei ein Massenanteil w(Wasserstoff) an der Gesamtmasse des oxidischen Tantal(V) enthaltenden Materials wenigstens 0,5 % und höchstens 2 % beträgt;
ii. gemäß Elementaranalyse Stickstoff (N) enthält,
wobei ein Massenanteil w(Stickstoff) an der Gesamtmasse des oxidischen Tantal(V) enthaltenden Materials wenigstens 0,5 % und höchstens 3 % beträgt, oder frei von Stickstoff (N) ist;
und
iii. nach einer thermischen Behandlung für einen Zeitraum von 1 Stunde bei einer Temperatur von 400 °C eine mittels der BET-Methode bestimmte spezifische Oberfläche von wenigstens 150 m²/g und von höchstens 250 m²/g aufweist.

8. Das poröse oxidische Tantal(V) enthaltende Material nach Anspruch 7, wobei ein Massenanteil w(Tantal) an der Gesamtmasse des oxidischen Tantal(V) enthaltenden Materials gemäß ICP-OES-Analyse wenigstens 67 % und höchstens 77 % beträgt.

9. Das poröse oxidische Tantal(V) enthaltende Material nach Anspruch 7 oder Anspruch 8, wobei das oxidische Tantal(V) enthaltende Material
i. nach der thermischen Behandlung für einen Zeitraum von 1 Stunde bei einer Temperatur von 400 °C wenigstens eine der folgenden Eigenschaften aufweist:
a. enthält gemäß Elementaranalyse Wasserstoff (H),
wobei der Massenanteil w(Wasserstoff) an der Gesamtmasse des oxidischen Tantal(V) enthaltenden Materials wenigstens 0,8 % und höchstens 1,2 % beträgt;
b. ist gemäß Elementaranalyse frei von Stickstoff (N);
und/oder
ii. nach einer thermischen Behandlung für einen Zeitraum von 1 Stunde bei einer Temperatur von 600 °C wenigstens eine der folgenden Eigenschaften aufweist:
a. enthält gemäß Elementaranalyse Wasserstoff (H),
wobei der Massenanteil w(Wasserstoff) an der Gesamtmasse des oxidischen Tantal(V) enthaltenden Materials wenigstens 0,5 % und höchstens 1 % beträgt;
b. ist gemäß Elementaranalyse frei von Stickstoff (N);
c. die mittels der BET-Methode bestimmte spezifische Oberfläche beträgt wenigstens 100 m²/g und höchstens 200 m²/g.

10. Ein poröses oxidisches Niob(V) und Tantal(V) enthaltendes Material gemäß der allgemeinen Formel Nb_{1-y}Ta_{y}Ox, wobei 0 < y < 1 ist, welches ein Nichtleiter ist und temperaturstabil oder im Wesentlichen temperaturstabil ist,
wobei das oxidische Niob(V) und Tantal(V) enthaltende Material
i. gemäß Elementaranalyse Wasserstoff (H) enthält, wobei ein Massenanteil w(Wasserstoff) an der Gesamtmasse des oxidischen Niob(V) und Tantal(V) enthaltenden Materials wenigstens 0,5 % und höchstens 2 % beträgt;
ii. gemäß Elementaranalyse Stickstoff (N) enthält,
wobei ein Massenanteil w(Stickstoff) an der Gesamtmasse des oxidischen Niob(V) und Tantal(V) enthaltenden Materials wenigstens 0,5 % und höchstens 3 % beträgt,
oder frei von Stickstoff (N) ist;
und
iii. nach einer thermischen Behandlung für einen Zeitraum von 1 Stunde bei einer Temperatur von 400 °C eine mittels der BET-Methode bestimmte spezifische Oberfläche von wenigstens 150 m²/g und von höchstens 350 m²/g aufweist.

11. Das poröse oxidische Niob(V) und Tantal(V) enthaltende Material nach Anspruch 10, wobei das oxidische Niob(V) und Tantal(V) enthaltende Material
i. nach einer thermischen Behandlung für einen Zeitraum von 1 Stunde bei einer Temperatur von 400 °C eine oder mehrere der folgenden Eigenschaften aufweist:
a. enthält gemäß Elementaranalyse Wasserstoff (H)
wobei ein Massenanteil w(Wasserstoff) an der Gesamtmasse des oxidischen Niob(V) und Tantal(V) enthaltenden Materials wenigstens 0,8 % und höchstens 1,2 % beträgt;
b. ist gemäß Elementaranalyse frei von Stickstoff (N);
c. die spezifische Oberfläche beträgt wenigstens 150 m²/g und höchstens 280 m²/g;
und/oder
ii. nach einer thermischen Behandlung für einen Zeitraum von 1 Stunde bei einer Temperatur von 600 °C eine oder mehrere der folgenden Eigenschaften aufweist:
a. enthält gemäß Elementaranalyse Wasserstoff (H),
wobei ein Massenanteil w(Wasserstoff) an der Gesamtmasse des oxidischen Niob(V) und Tantal(V) enthaltenden Materials wenigstens 0,5 % und höchstens 1 % beträgt;
b. ist gemäß Elementaranalyse frei von Stickstoff (N);
c. die spezifische Oberfläche beträgt wenigstens 70 m²/g und höchstens 180 m²/g.

12. Das poröse oxidische Niob(V) und Tantal(V) enthaltende Material nach Anspruch 10 oder Anspruch 11, wobei y = 0,25 ist oder y = 0,5 ist oder y = 0,75 ist.

13. Das poröse oxidische Niob(V) und Tantal(V) enthaltende Material nach Anspruch 12, wobei
a. y = 0,25 ist und wobei gemäß ICP-OES-Analyse
i. der Massenanteil w(Niob) an der Gesamtmasse des oxidischen Niob(V) und Tantal(V) enthaltenden Materials gemäß der Formel Nb_{0,75}Ta_{0,25}Ox wenigstens 30 % und höchstens 40 % beträgt, und
ii. der Massenanteil w(Tantal) an der Gesamtmasse des oxidischen Niob(V) und Tantal(V) enthaltenden Materials gemäß der Formel Nb_{0,75}Ta_{0,25}Ox wenigstens 20 % und höchstens 30 % beträgt.
oder
b. y = 0,5 ist und wobei gemäß ICP-OES-Analyse
i. ein Massenanteil w(Niob) an der Gesamtmasse des oxidischen Niob(V) und Tantal(V) enthaltenden Materials gemäß der Formel Nb_{0,5}Ta_{0,5}Ox wenigstens 15 % und höchstens 25 % beträgt, und
ii. ein Massenanteil w(Tantal) an der Gesamtmasse des oxidischen Niob(V) und Tantal(V) enthaltenden Materials gemäß der Formel Nb_{0,5}Ta_{0,5}Ox wenigstens 40 % und höchstens 50 % beträgt;
oder
c. y = 0,75 ist und wobei gemäß ICP-OES-Analyse
i. der Massenanteil w(Niob) an der Gesamtmasse des oxidischen Niob(V) und Tantal(V) enthaltenden Materials gemäß der Formel Nb_{0,25}Ta_{0,75}Ox wenigstens 5 % und höchstens 15 % beträgt, und
ii. der Massenanteil w(Tantal) an der Gesamtmasse des oxidischen Niob(V) und Tantal(V) enthaltenden Materials gemäß der Formel Nb_{0,25}Ta_{0,75}Ox wenigstens 55 % und höchstens 65 % beträgt.

14. Ein Katalysator, umfassend
A. eine Trägerkomponente, welche ein Nichtleiter ist, und
B. eine iridiumhaltige Aktivkomponente,
wobei
■ die Trägerkomponente wenigstens ein poröses oxidisches Material umfasst oder aus wenigstens einem porösen oxidischen Material besteht, welches ausgewählt ist aus der Gruppe bestehend aus
i. einem ersten porösen oxidischen Niob(V) enthaltenden Material nach einem oder mehreren der Ansprüche 1 bis 3;
ii. einem zweiten porösen oxidischen Niob(V) enthaltenden Material nach einem oder mehreren der Ansprüche 4 bis 6;
iii. einem porösen oxidischen Tantal(V) enthaltenden Material nach einem oder mehreren der Ansprüche 7 bis 9;
iv. einem porösen oxidischen Niob(V) und Tantal(V) enthaltenden Material nach einem oder mehreren der Ansprüche 10 bis 13,
und Mischungen davon;
■ die iridiumhaltige Aktivkomponente Iridium(IV)-oxid (IrO₂) umfasst, wobei
i. IrO₂ wenigstens teilkristallin vorliegt, wobei kristallines IrO₂ Rutilstruktur aufweist,
ii. ein Massenanteil w(lridium) an einer Gesamtmasse des Katalysators wenigstens 50 % und höchstens 80 % beträgt;
wobei der Katalysator
i. für einen Zeitraum von 1 Stunde bei einer Temperatur im Bereich von 300 °C bis 800 °C thermisch behandelt ist und
ii. eine mittels der BET-Methode bestimmte spezifische Oberfläche von mehr als 10 m²/g und von höchstens 150 m²/g aufweist.

15. Der Katalysator nach Anspruch 14, wobei
i. die Aktivkomponente zusätzlich zu IrO₂ Iridium(IV)-hydroxid (Ir(OH)₄) und/oder Iridiumhydroxidoxid IrO(OH)ₓ, wobei 1 ≤ x < 2 ist, umfasst;
und/oder
ii. IrO₂ vollständig kristallin vorliegt und Rutilstruktur aufweist;
und/oder
iii. eine mittlere IrO₂-Kristallitgröße wenigstens 1 nm und höchstens 20 nm beträgt.

16. Der Katalysator nach Anspruch 14 oder Anspruch 15, wobei der Katalysator für einen Zeitraum von 1 Stunde bei einer Temperatur im Bereich von 300 °C bis weniger als 800 °C, thermisch behandelt ist und wenigstens eine der folgenden Eigenschaften aufweist:
i. die mittels der BET-Methode bestimmte spezifische Oberfläche des Katalysators beträgt wenigstens 12 m²/g und höchstens 150 m²/g;
ii. die mittlere IrO₂-Kristallitgröße beträgt wenigstens 1 nm und höchstens 12 nm.

17. Der Katalysator nach einem der Ansprüche 14 bis 16, wobei der Massenanteil w(lridium) an der Gesamtmasse des Katalysators wenigstens 70 % und höchstens 80 % beträgt.

18. Der Katalysator nach Anspruch 17, wobei
a. die Trägerkomponente besteht aus
- wenigstens einem ersten porösen oxidischen Niob(V) enthaltenden Material nach einem oder mehreren der Ansprüche 1 bis 3,
oder
- wenigstens einem zweiten porösen oxidischen Niob(V) enthaltenden Material nach einem oder mehreren der Ansprüche 4 bis 6,
oder
- wenigstens einem porösen oxidischen Tantal(V) enthaltenden Material nach einem oder mehreren der Ansprüche 7 bis 9,
oder
- wenigstens einem porösen oxidischen Niob(V) und Tantal(V) enthaltenden Material gemäß der allgemeinen Formel Nb_{1-y}Ta_{y}Ox, wobei 0 < y < 1 ist, nach einem oder mehreren der Ansprüche 10 bis 13,
und
b. die mittels der BET-Methode bestimmte spezifische Oberfläche des Katalysators wenigstens 12 m²/g und höchstens 70 m²/g beträgt.

19. Der Katalysator nach Anspruch 17 oder Anspruch 18, wobei der Katalysator
i. für einen Zeitraum von 1 Stunde bei einer Temperatur von 600 °C thermisch behandelt ist und wenigstens eine der folgenden Eigenschaften aufweist:
a. die mittels der BET-Methode bestimmte spezifische Oberfläche des Katalysators beträgt mehr als 12 m²/g und höchstens 70 m²/g;
b. die mittlere IrO₂-Kristallitgröße beträgt wenigstens 4 nm und höchstens 8 nm; oder
ii. für einen Zeitraum von 1 Stunde bei einer Temperatur von 400 °C thermisch behandelt ist und wenigstens eine der folgenden Eigenschaften aufweist:
a. die mittels der BET-Methode bestimmte spezifische Oberfläche des Katalysators beträgt mehr als 12 m²/g und höchstens 70 m²/g;
b. die mittlere IrO₂-Kristallitgröße beträgt wenigstens 2 nm und höchstens 5 nm.

20. Der Katalysator nach einem der Ansprüche 14 bis 16, wobei der Massenanteil w(lridium) an der Gesamtmasse des Katalysators wenigstens 59 % und weniger als 70 % beträgt.

21. Der Katalysator nach Anspruch 20, wobei
a. die Trägerkomponente besteht aus
- wenigstens einem ersten porösen oxidischen Niob(V) enthaltenden Material nach einem oder mehreren der Ansprüche 1 bis 3,
oder
- wenigstens einem zweiten porösen oxidischen Niob(V) enthaltenden Material nach einem oder mehreren der Ansprüche 4 bis 6,
oder
- wenigstens einem porösen oxidischen Tantal(V) enthaltenden Material nach einem oder mehreren der Ansprüche 7 bis 9,
oder
- wenigstens einem porösen oxidischen Niob(V) und Tantal(V) enthaltenden Material gemäß der allgemeinen Formel Nb_{1-y}Ta_{y}Ox, wobei 0 < y < 1 ist, nach einem oder mehreren der Ansprüche 10 bis 13,
und
b. die mittels der BET-Methode bestimmte spezifische Oberfläche des Katalysators wenigstens 12 m²/g und höchstens 120 m²/g beträgt.

22. Der Katalysator nach Anspruch 20 oder Anspruch 21, wobei der Katalysator
i. für einen Zeitraum von 1 Stunde bei einer Temperatur von 500 °C thermisch behandelt ist und wenigstens eine der folgenden Eigenschaften aufweist:
a. die mittels der BET-Methode bestimmte spezifische Oberfläche des Katalysators beträgt wenigstens 30 m²/g und höchstens 120 m²/g;
b. die mittlere IrO₂-Kristallitgröße beträgt wenigstens 3 nm und höchstens 12 nm;
oder
ii. für einen Zeitraum von 1 Stunde bei einer Temperatur von 350 °C thermisch behandelt ist und wenigstens eine der folgenden Eigenschaften aufweist:
a. die mittels der BET-Methode bestimmte spezifische Oberfläche des Katalysators beträgt mehr als 30 m²/g und höchstens 120 m²/g;
b. die mittlere IrO₂-Kristallitgröße beträgt wenigstens 1 nm und höchstens 5 nm.

23. Der Katalysator nach einem der Ansprüche 14 bis 16, wobei der Massenanteil w(lridium) an der Gesamtmasse des Katalysators wenigstens 50 % und weniger als 59 % beträgt.

24. Der Katalysator nach Anspruch 23, wobei
a. die Trägerkomponente besteht aus
- wenigstens einem ersten porösen oxidischen Niob(V) enthaltenden Material nach einem oder mehreren der Ansprüche 1 bis 3,
oder
- wenigstens einem zweiten porösen oxidischen Niob(V) enthaltenden Material nach einem oder mehreren der Ansprüche 4 bis 6,
oder
- wenigstens einem porösen oxidischen Tantal(V) enthaltenden Material nach einem oder mehreren der Ansprüche 7 bis 9,
oder
- wenigstens einem porösen oxidischen Niob(V) und Tantal(V) enthaltenden Material gemäß der allgemeinen Formel Nb_{1-y}Ta_{y}Ox, wobei 0 < y < 1 ist, nach einem oder mehreren der Ansprüche 10 bis 13,
b. die mittels der BET-Methode bestimmte spezifische Oberfläche des Katalysators wenigstens 12 m²/g und höchstens 150 m²/g beträgt.

25. Der Katalysator nach Anspruch 23 oder Anspruch 24, wobei der Katalysator für einen Zeitraum von 1 Stunde bei einer Temperatur von 500 °C thermisch behandelt ist und wenigstens eine der folgenden Eigenschaften aufweist:
a. die mittels der BET-Methode bestimmte spezifische Oberfläche des Katalysators beträgt wenigstens 40 m²/g und höchstens 150 m²/g;
b. die mittlere IrO₂-Kristallitgröße wenigstens 3 nm und höchstens 12 nm beträgt.

26. Katalysator oder Elektrode, wobei der Katalysator oder die Elektrode wenigstens ein poröses oxidisches Niob(V) und/oder Tantal(V) enthaltendes Material gemäß wenigstens einem der Ansprüche 1 bis 13 umfasst.

27. Verwendung eines Katalysators nach wenigstens einem der Ansprüche 14 bis 25 oder nach Anspruch 26
i. in einer regenerativen Brennstoffzelle, in einer elektrolytischen Zelle oder in einer sonstigen elektrochemischen Vorrichtung,
oder
ii. in einer Elektrode, in einer katalysatorbeschichteten Membran oder in einer Membran-Elektroden-Einheit.
